# EUROPEAN PATENT APPLICATION

(11) **EP 4 597 407 A1**
(43) Date of publication of application: **06.08.2025**
(21) Application number: 23871015.6
(22) Date of filing: 28.09.2023
(51) Int. Cl.: G06Q 50/06

(54) **ENERGY STATION SYSTEM, ENERGY STATION CONTROL METHOD, AND ENERGY STATION**

(30) Priority: 30.09.2022 CN 202211219700; 30.09.2022 CN 202211217585; 30.09.2022 CN 202222623545 U; 30.09.2022 CN 202211219874; 30.09.2022 CN 202211219418; 30.09.2022 CN 202222626803 U; 30.09.2022 CN 202211215670; 30.09.2022 CN 202222640047 U; 30.09.2022 CN 202222624067 U; 30.09.2022 CN 202211217536; 30.09.2022 CN 202222642186 U; 30.09.2022 CN 202222622738 U
(71) Applicant: Greenworks (Jiangsu) Co., Ltd., Changzhou, Jiangsu 213023 (CN)
(72) Inventor: ZHU, Hua, hangzhou, Jiangsu 213023 (CN); ZHUANG, Xian, hangzhou, Jiangsu 213023 (CN); YANG, Min, hangzhou, Jiangsu 213023 (CN); CHEN, Jianxun, hangzhou, Jiangsu 213023 (CN); WANG, Kai, hangzhou, Jiangsu 213023 (CN); LI, Qiang, hangzhou, Jiangsu 213023 (CN); ZHOU, Zehuan, hangzhou, Jiangsu 213023 (CN); MA, Yuan, hangzhou, Jiangsu 213023 (CN); ZHUO, Cuicui, hangzhou, Jiangsu 213023 (CN); SHI, Yitao, hangzhou, Jiangsu 213023 (CN); XIE, Lingxuan, hangzhou, Jiangsu 213023 (CN); SUN, Yuan, hangzhou, Jiangsu 213023 (CN); LI, Zhiyuan, hangzhou, Jiangsu 213023 (CN); HUO, Xiaohui, hangzhou, Jiangsu 213023 (CN)
(74) Representative: Bergenstråhle & Partners AB
(86) International application number: PCT/CN2023/122504
(87) International publication number: WO 2024/067790

(57) **Abstract**

The disclosure provides an energy station system, a control method of the energy station and an energy station. The energy station system includes at least one input energy source, at least one load, at least one central control module, and a switchable energy module. The switchable energy module switches its own working state based on a supply-demand relationship between the input energy source and the load, and the central control module controls the input energy source to supply power to the load. Through arranging the switchable energy module, it may be used to switch its working state according to the supply-demand relationship between the input energy source and the load, so as to supplement the supply and demand imbalance between the input energy source and the load as characteristics of the input energy source or a DC load.

## Description

### CROSS REFERENCE TO RELATED APPLICATION

The present application is a continuation Application of PCT application No. PCT/CN2023/122504 filed on September 28, 2023, which claims the benefit of CN202211219700.0 filed on September 30, 2022, CN202211217585.3 filed on September 30, 2022, CN202222623545.0 filed on September 30, 2022, CN202211219874.7 filed on September 30, 2022, CN202211219418.2 filed on September 30, 2022, CN202222626803.0 filed on September 30, 2022, CN202211215670.6 filed on September 30, 2022, CN202222640047.7 filed on September 30, 2022, CN202222624067.5 filed on September 30, 2022, CN202211217536.X filed on September 30, 2022, CN202222642186.3 filed on September 30, 2022, and CN202222622738.4 filed on September 30, 2022. All the above are hereby incorporated by reference for all purposes.

### TECHNICAL FIELD

The disclosure relates to a technical field of energy stations, especially relates to an energy station system, a control method of an energy station and an energy station.

### BACKGROUND

Garden tools are the maintenance devices of human greening landscape. They are mechanized tools that are used to maintain lawns, hedges, protect flowers and trees, and replace most manual labor. Garden power tools are provided with and powered by a battery pack.

As an energy hub, the energy station can provide long-term battery life for other power tools or vehicles during outdoor operations, and can provide reliable energy guarantee for work and construction in a process of large-scale outdoor operations. However, when the conventional energy station uses the input energy source to supply power to the load, the power supply to the load will be affected due to an imbalance between supply and demand.

### SUMMARY

One or more embodiments of the disclosure provide an energy station system, a control method of an energy station and an energy station with charging demands for DC loads and different power requirements that can solve a problem of supply and demand imbalance when the energy station uses input energy source to supply power to the load.

One or more embodiments of the disclosure provide the energy station system. The energy station system includes at least one input energy source, at least one load, at least one central control module, and a switchable energy module.

A working state of the switchable energy module is switchable based on a supply-demand relationship between the input energy source and the load.

The central control module is configured to control the at least one input energy source to supply power to the at least one load.

In an embodiment of the disclosure, the switchable energy module includes a backup power supply, the backup power supply adjusts its charging and discharging mode based on a voltage difference between itself and a DC bus or on a signal of the central control module, so as to be configured as the input energy source or a DC load.

In an embodiment of the disclosure, the central control module is configured to carry out an energy distribution management based on an available output power of the input energy source and a power demand of the load, and control the input energy source to supply power to the load according to an energy distribution result.

In an embodiment of the disclosure, the central control module is configured to carry out the energy distribution management based on the available output power of the input energy source, the power demand of the load and a charging priority of the load, and controls the input energy source to supply power to the load according to the energy distribution result and the charging priority of the load.

In an embodiment of the disclosure, the charging priority of the load is adjustable.

In an embodiment of the disclosure, the input energy source includes a photovoltaic assembly and/or a charging pile, the central control module is configured to carry out an energy distribution management based on an available output power of each input energy source, a power of the load and a power supply priority demand of each input energy source, and controls the input energy source to supply power to the load according to the energy distribution result.

In an embodiment of the disclosure, the input energy includes a photovoltaic assembly and/or a charging pile, the central control module carries out the energy distribution management based on an available output power of each input energy source, a power supply priority for each input energy source, a power of the load and a charging priority of the load, and controls the input energy source to supply power to the load according to the energy distribution result.

In an embodiment of the disclosure, the power supply priority of each input energy source is adjustable.

In an embodiment of the disclosure, the energy station system further includes an output module, the load is connected with the output module, the central control module is configured to control the at least one input energy source to supply power to the at least one load through the output module, and the output module includes a plurality of DC output modules and a plurality of AC output modules.

In an embodiment of the disclosure, each DC output module includes at least one DC/DC charging module and at least one PDU module, and the at least one PDU module controls at least one of the DC/DC charging modules to supply power to the at least one load.

In an embodiment of the disclosure, the load includes a DC load and an AC load, and the DC load includes a backup power supply, a garden tool, an external battery pack or an electric vehicle.

In an embodiment of the disclosure, at least part of device parameter information of an external working device and/or a device within the energy station system is uploaded to a server through wired and/or wireless manner.

In an embodiment of the disclosure, the energy station system further includes a background management system, and the energy station system is configured to push parameter information of a device associated with the energy station system to the background management system in real time, for the background management system to monitor a state of the device associated with the energy station system.

In an embodiment of the disclosure, the energy station system further includes a heat dissipation system, and the heat dissipation system includes an air conditioning device, a plurality of air passages and a plurality of temperature sensors.

The plurality of air passages are configured to be communicated with the air conditioning device.

The central controller module is configured to control an opening or closing of the air passagesaccording to a working temperature collected by each temperature sensor.

In an embodiment of the disclosure, the energy station system further includes a heat dissipation system, and the heat dissipation system includes the air conditioning device, the air passage and the plurality of temperature sensors.

The air passage is communicated with the air conditioning device.

The plurality of temperature sensors is installed at a plurality of different positions.

The central control module is configured to change a heat dissipation direction of the air conditioning device according to a working temperature collected by the temperature sensor.

In an embodiment of the disclosure, the energy station system further includes a display module. The display module is connected with the central control module, and the display module is used to display a working state of the energy station system.

In an embodiment of the disclosure, the energy station system further includes a carriage, a battery pack storage part and a transfer unit.

The carriage is provided with a battery changing port arranged on at least one side wall of the carriage.

The battery pack storage part includes at least two storage bins to store battery packs of a garden non-road electric vehicle.

The transfer unit is configured to be capable of guiding an alternate movement of each storage bin to the battery changing port.

**In** an embodiment of the disclosure, the energy station system further includes the carriage, a fixed tool wall and a movable tool wall.

The fixed tool wall is located on at least one inner side wall of the carriage.

The movable tool wall is located in the carriage and is movable relative to the fixed tool wall.

The movable tool wall has at least one state parallel to the fixed tool wall, and at least part of the fixed tool wall is shaded by the movable tool wall when the movable tool wall is parallel to the fixed tool wall.

The movable tool wall is configured to be capable of changing a position or size of a shaded area of the fixed tool wall in a movement process.

The fixed tool wall and the movable tool wall are respectively provided with a mounting part to mount a hanger.

**In** an embodiment of the disclosure, the energy station system further includes the carriage, the fixed tool wall and the movable tool wall.

The fixed tool wall is located on at least one inner side wall of the carriage.

The movable tool wall is located in the carriage and is movable relative to the fixed tool wall.

The movable tool wall has at least one state parallel to the fixed tool wall, and at least part of the fixed tool wall is shaded by the movable tool wall when the movable tool wall is parallel to the fixed tool wall.

The movable tool wall is configured to be capable of exposing a shaded area of the fixed tool wall in a movement process.

The fixed tool wall and the movable tool wall are respectively provided with a mounting part to mount the hanger.

In an embodiment of the disclosure, when an output power of the input energy source is greater than the demand power of the load, the switchable energy module is used as the load, and when the output power of the input energy source is less than the demand power of the load, the switchable energy module is used as the input energy source.

One or more embodiments of the disclosure further provide a control method of the energy station. The control method of the energy station includes:

controlling at least one input energy source to supply power to at least one load;

during a process of supplying power to the load, switching the working state of the switchable energy module according to the available output power of the input energy source and a power demand of the load.

In an embodiment of the disclosure, the switchable energy module includes a backup power supply, and in an operation of switching a working state of a switchable energy module according to an available output power of the input energy source and a power demand of the load:

the backup power supply adjusts a charging and discharging mode based on a voltage difference between itself and a DC bus or a signal of a central control module to be used as the input energy source or a DC load.

In an embodiment of the disclosure, the load includes a plurality of battery packs.

Controlling at least one input energy source to supply power to at least one load includes:
carrying out an initial selection of the battery pack:
taking a lowest value of battery pack voltages of all battery packs as a first reference voltage;
selecting a battery pack with a battery pack voltage higher than the first reference voltage and a voltage difference between the battery pack voltage and the first reference voltage being less than the first preset threshold from all battery packs, and charging the selected battery pack; and
carrying out a selection of the battery pack during charging process:
   during a charging process, taking an average battery pack voltage of the battery pack being charged as a second reference voltage;
   selecting a battery pack with a voltage difference between the battery pack voltage and the second reference voltage being greater than a second preset threshold and less than the first preset threshold from all battery packs, and charging the selected battery pack;
   cyclically carrying out the selection of the battery pack during charging process until all battery packs complete a constant current charging, then charging at a constant voltage together, setting a fully charged mark, and cutting out fully charged battery packs.

In an embodiment of the disclosure, the load includes a plurality of battery packs.

Controlling at least one input energy source to supply power to at least one load includes:
carrying out an initial selection of the battery pack:
taking a second-highest value of battery pack voltages of all the battery packs as a third reference voltage,
selecting a battery pack with a battery pack voltage higher than the third reference voltage and a voltage difference between the battery pack voltage and the third reference voltage being less than a third preset threshold from all battery packs, and charging the selected battery pack;
carrying out a selection of the battery pack during charging process:
during a charging process, taking an average voltage of the battery pack being charged as a fourth reference voltage,
selecting a battery pack with a voltage difference between the battery pack voltage and the fourth reference voltage being greater than a third preset threshold and less than a fourth preset threshold from all battery packs, and charging the selected battery pack; and
cyclically carrying out the selection of the battery pack during charging process until all battery packs complete a constant current charging, setting a fully charged mark, and cutting out fully charged battery packs.

One or more embodiments of the disclosure further provide the energy station, which includes the energy station system. The energy station system includes at least one input energy source, at least one load, at least one central control module, and a switchable energy module.

The switchable energy module is configured as the load if an output power of the input energy source is greater than a demand power of the load, and configured as the input energy source if the output power of the input energy source is less than the demand power of the load.

The central control module is configured to control the at least one input energy source to supply power to the at least one load.

One or more embodiments of the disclosure further provide an energy distribution method of the energy station. The energy distribution method of the energy station includes:
receiving the power demand uploaded by the load connected to the output module;
obtaining a total power demand according to the power demand uploaded by the received load;
obtaining an available output power of the plurality of the input energy sources;
carrying out the energy distribution management based on the total power demand, the available output power of the plurality of input energy sources and the power supply priority of each input energy sources;
controlling the output module to supply power to each access load based on the energy distribution result.

In an embodiment of the disclosure, the load includes the DC load and the AC load, and the DC load includes one or a combination of the backup power supply, the garden tool, the external battery pack or the electric vehicle.

In an embodiment of the disclosure, obtaining the total power demand according to the power demand uploaded by the received load include:
summarizing the power demand uploaded by the received load, and adding a preset additional power demand on a basis of the summarized power demand as the total power demand. The preset additional power demand is used to replace the power demand of the load that cannot upload the power demand.

In an embodiment of the disclosure, obtaining the total power demand according to the power demand uploaded by the received load include:
summarizing the power demand uploaded by the received load, and a power demand obtained through a current sensor or an electric meter mounted in a load loop of the loads that cannot upload the power demands, to obtain the total power demand of the loads.

In an embodiment of the disclosure, in an operation of controlling the output module to supply power to each access load based on the energy distribution result, when an actual required power demand is greater than an output power of an external input energy source, it is supplemented by the backup power supply.

In an embodiment of the disclosure, in an operation of controlling the output module to supply power to each access load based on the energy distribution result, when a new load is detected to be connected to the output module, returning the operation of receiving the power demand uploaded by the received load.

In an embodiment of the disclosure, the input energy source includes the photovoltaic assembly, the backup power supply and the charging pile.

In an embodiment of the disclosure, the energy distribution method of the energy station further includes:
adjusting the power supply priority of each input energy source according to an input command.

In an embodiment of the disclosure, the energy distribution method of the energy station further includes:
automatically adjusting the power supply priority of the input energy source according to an access situation of the charging pile, and when the charging pile is accessed, adjusting a priority of the charging pile to the highest.

In an embodiment of the disclosure, the energy distribution method of the energy station further includes:
automatically adjusting the priority of the charging pile according to a peak and valley hours of electricity consumption.

In an embodiment of the disclosure, the energy distribution method of the energy station further includes:
adjusting the priority of each input energy source according to an output power of the photovoltaic assembly.

In an embodiment of the disclosure, carrying out the energy distribution management based on the total power demand, the available output power of the plurality of input energy sources and the power supply priority of each input energy sources include:
carrying out the energy distribution management based on the total power demand, the available output power of the plurality of input energy sources, the power supply priority of each input energy sources and the charging priority of the load; and
controlling the output module to supply power to each access load based on the energy distribution result, including:
controlling the output module to supply power to each access load according to the charging priority of the load based on the energy distribution result.

One or more embodiments of the disclosure further provide an energy distribution system of the energy station. The energy distribution system of the energy station includes a power demand receiving unit, a power demand summarizing unit, an output power obtaining unit, an energy distribution management unit and a power supply controlling unit.

The power demand receiving unit is configured to receive the power demand uploaded by the load connected to the output module.

The power demand summarizing unit is configured to obtain a total power demand according to the power demand uploaded by the received load.

The output power obtaining unit is configured to obtain an available output power of the plurality of the input energy sources;

The energy distribution management unit is configured to carry out the energy distribution management based on the total power demand, the available output power of the plurality of input energy sources and the power supply priority of each input energy sources to obtain an energy distribution result.

The power supply controlling unit is configured to control the output module to supply power to each access load based on the energy distribution result.

One or more embodiments of the disclosure further provide an electronic device. The electronic device includes a memory, a processor and a computer program stored on the memory and capable of running on the processor. The operations of the energy distribution method of the energy station may be realized when the processor executes the computer program.

One or more embodiments of the disclosure further provide a computerreadable storage medium on which the computer program is stored. When the computer program is executed by the processor, the operations of the energy distribution method of the energy station may be realized.

One or more embodiments of the disclosure further provide a DC charging method of the energy station. The DC charging method of the energy station includes:
obtaining a power demand of each DC load connected with the DC output module, the DC output module including a plurality of DC/DC charging modules;
controlling at least one DC/DC charging module to supply power to at least one DC load according to the power demand of each obtained DC load.

In an embodiment of the disclosure, controlling at least one DC/DC charging module to supply power to at least one DC load according to the power demand of each obtained DC load includes: controlling some or all of the plurality of the DC/DC charging modules to be connected in parallel according to the power demand of each obtained DC load, so as to supply power to each DC load.

In an embodiment of the disclosure, controlling some or all of the plurality of DC/DC charging modules to be connected in parallel according to the power demand of each obtained DC load so as to supply power to each DC load includes:
controlling some or all of the DC/DC charging modules to be connected in parallel according to the power demand of each obtained DC load and the charging priority of the DC load so as to supply power to each DC load.

In an embodiment of the disclosure, the DC charging method of the energy station further includes: adjusting the charging priority of the DC load according to the input command.

In an embodiment of the disclosure, the DC charging method of the energy station further includes: automatically adjusting the charging priority of the DC load according to preset rules according to the power demand of the access DC load.

In an embodiment of the disclosure, automatically adjusting the charging priority of the DC load according to preset rules according to the power demand of the access DC load includes:
adjusting the charging priority of the DC load from more to less or from less to more according to a number of accessed DC loads with different power demands.

In an embodiment of the disclosure, controlling some or all of the DC/DC charging modules to be connected in parallel according to the power demand of each obtained DC load so as to supply power to each DC load includes:
controlling some or all of the plurality of DC/DC charging modules to be connected in parallel according to the power demand of each obtained DC load so as to perform fast charge of the DC load.

In an embodiment of the disclosure, for garden tools and electric vehicles that share the same charging gun for charging, the energy distribution method of the energy station further includes:
obtaining a load type connected with the DC output module through a communication terminal of the charging gun;
when the load type is the garden tool, extracting the power demand corresponding to the garden tool, and when the load type is the electric vehicle, extracting the power demand corresponding to the electric vehicle;
adjusting a number of the parallel DC/DC charging modules according to the power demand of the extracted garden tool or the electric vehicle to match the power demand of the garden tool or the electric vehicle.

In an embodiment of the disclosure, controlling some or all of the plurality of DC/DC charging modules to be connected in parallel according to the power demand of each obtained DC load so as to supply power to each DC load includes:
controlling some or all of the plurality of the DC/DC charging modules to be connected in parallel through the PDU (Power Distribution Unit) module according to the power demand of each obtained DC load so as to supply power to each DC load.

One or more embodiments of the disclosure further provide a DC charging system of the energy station. The DC charging system of the energy station includes a DC input source, a plurality of DC output modules and a PCS module.

An input end of the DC output module is connected with the DC input source, an output end of the DC output module is connected with a DC load, and the DC output module includes the plurality of DC/DC charging modules.

The PCS module is connected with a control end of the DC output module.

The PCS module is configured to:
obtain a power demand of each DC load connected with the DC output module, the DC output module including a plurality of DC/DC charging modules and
control at least one DC/DC charging module to supply power to at least one DC load according to the obtained power demand of each DC load.

In an embodiment of the disclosure, each DC output module includes at least one DC/DC charging module and at least one PDU module;
the PCS (Power Conversion System) module controls different numbers of DC/DC charging modules to be connected in parallel through the PDU module to supply power to the DC load connected with the PDU module.

In an embodiment of the disclosure, the plurality of DC output modules includes a plurality of first DC output modules and a plurality of second DC output modules. The first DC output modules are used for supplying power to a charging cabinet, and the second DC output modules are used for supplying power to garden tools and/or electric vehicles.

In an embodiment of the disclosure, the DC/DC charging module of the plurality of the first DC output modules and/or the DC/DC charging module of the plurality of the second DC output modules are controlled by at least one PDU module.

In an embodiment of the disclosure, the second DC output module is provided with the charging gun that is compatible with a charging port of garden tools and/or electric vehicles.

In an embodiment of the disclosure, the DC charging system of the energy station further includes the backup power supply, and the backup power supply can adjust the charging and discharging mode based on the voltage difference between itself and the DC bus or an instruction of the PCS module, in order to be used as the DC input energy source or the DC load.

One or more embodiments of the disclosure further provide a charging cabinet system. The charging cabinet system includes a charging cabinet body, a plurality of heat dissipation fans, a plurality of battery packs, a controller and a main relay.

The charging cabinet body is provided with a plurality of battery compartments;
Each battery compartment is provided with one heat dissipation fan, and the heat dissipation fan is used for heat dissipation and cooling of the rechargeable battery pack.

The plurality of battery packs is arranged in parallel, and each battery pack is inserted in one battery compartment.

The controller is respectively connected with the DC output module of the energy station, the battery pack and the heat dissipation fan. The controller is used for obtaining relevant information of the battery pack, and utilizing a charging power supply provided by the DC output module to supply power to the heat dissipation fan to drive the heat dissipation fan to work.

**The** main relay is arranged on a charging circuit of the battery pack connected with the DC output module, and the controller controls an on-off of the charging circuit through the main relay to charge the battery pack in the battery compartment.

In an embodiment of the disclosure, the controller includes a main controller and a secondary controller.

The main controller is respectively connected with the DC output module and the battery pack, and the main controller is used for obtaining relevant information of the battery pack and converting a provided charging power supply.;
The secondary controller is connected with the main controller and the heat dissipation fan respectively, and utilizes the converted charging power supply to supply power to the heat dissipation fan to drive the heat dissipation fan to work.

The main controller controls the on-off of the charging circuit through the main relay to charge the battery pack in the battery compartment.

In an embodiment of the disclosure, the charging cabinet system further includes a current sensor, the current sensor is connected with the main controller, and the current sensor is used for detecting and uploading a charging current of the battery pack in each battery compartment to the main controller.

In an embodiment of the disclosure, there are a plurality of current sensors, and each battery compartment is provided with one current sensor.

In an embodiment of the disclosure, the charging cabinet system further includes a voltage sensor, the voltage sensor is connected with the main controller, and the voltage sensor is used for detecting and uploading a voltage of the battery pack in each battery compartment to the main controller.

In an embodiment of the disclosure, there are a plurality of voltage sensors, and each battery compartment is provided with one voltage sensor.

In an embodiment of the disclosure, the charging cabinet system further includes a cover switch, and the cover switch is connected with the main controller.

In an embodiment of the disclosure, the charging cabinet system further includes a temperature sensor, the temperature sensor is connected with the main controller, and the temperature sensor is used for detecting and uploading a temperature of the battery pack in each battery compartment to the main controller.

In an embodiment of the disclosure, there are a plurality of temperature sensors, and each battery compartment is provided with one temperature sensor.

In an embodiment of the disclosure, the charging cabinet system further includes a plurality of display units, and each battery compartment is provided with one display unit.

The secondary controller is connected with the display unit, utilizes the converted charging power supply to supply power to the display unit, and controls the display unit to indicate a current charging state of the charging battery pack.

In an embodiment of the disclosure, a number of described battery compartments is from 2 to 15.

One or more embodiments of the disclosure provide the energy station. The energy station includes an energy station body and the charging cabinet system.

The energy station body is provided with the DC output module.

The charging cabinet system includes the charging cabinet body, the plurality of heat dissipation fans, the plurality of battery packs, the controller and the main relay.

The charging cabinet body is provided with the plurality of battery compartments.

Each battery compartment is provided with one heat dissipation fan, and the heat dissipation fan is used for heat dissipation and cooling of the rechargeable battery pack.

The plurality of battery packs is arranged in parallel, and each battery pack is inserted in one battery compartment.

The controller is respectively connected with the DC output module, the battery pack and the heat dissipation fan. The controller is used for obtaining relevant information of the battery pack, and utilizing the charging power supply provided by the DC output module to supply power to the heat dissipation fan to drive the heat dissipation fan to work.

The main relay is arranged on the charging circuit of the battery pack connected with the DC output module, and the controller controls the on-off of the charging circuit through the main relay to charge the battery pack in the battery compartment.

One or more embodiments of the disclosure provide a heat dissipation system of the energy station. The heat dissipation system includes the air conditioning device, a main air passage, a plurality of sub-air passages, a plurality of valves, a plurality of temperature sensors and the controller.

The main air passage is communicated with an air outlet of the air conditioning device.

Each sub-air passage is respectively communicated with the main air passage, and air outlets of each sub-air passage are respectively arranged in a mounting zone of each heating element on the energy station.

Each of the valves is respectively arranged on each sub-air passage.

Each of the temperature sensors is respectively arranged in the mounting zone of each of the heating elements.

The controller is electrically connected with each valve and each temperature sensor, and the controller is configured to be capable of controlling an opening or closing of each valve according to a working temperature of each heating element collected by each temperature sensor.

In an embodiment of the disclosure, each heating element is correspondingly provided with one or more sub-air passages.

In an embodiment of the disclosure, a plurality of heating elements located in a same communicated space share the same sub-air passage.

In an embodiment of the disclosure, each heating element is correspondingly provided with one or more temperature sensors.

In an embodiment of the disclosure, a plurality of heating elements located in a same communicated space share the same temperature sensor.

In an embodiment of the disclosure, the heating element includes one or more of EVCC module, PCS module, battery group, DC/DC, PDU, external battery pack, ZTR charger, ZTR and photovoltaic assembly.

In an embodiment of the disclosure, the controller includes the PCS module and a collecting module, each temperature sensor is electrically connected with the collecting module, and the collecting module is electrically connected with the PCS module.

In an embodiment of the disclosure, the controller is in a communication connection with the air conditioning device.

In an embodiment of the disclosure, at least one sub-air passage is communicated with a carriage space of the energy station.

One or more embodiments of the disclosure provide a heat dissipation system of the energy station system. The heat dissipation system includes the air conditioning device, the main air passage, an air direction adjusting device, the plurality of temperature sensors and the controller.

The main air passage is communicated with the air outlet of the air conditioning device.

The air direction adjusting device is mounted at the air outlet of the main air passage, and the air direction adjusting device is configured to be capable of adjusting an air outlet direction of the main air passage.

Each of the temperature sensors is respectively arranged in the mounting zone of each of the heating elements.

The controller is electrically connected with each air direction adjusting device and each temperature sensor, and the controller is configured to be capable of controlling an action of the air direction adjusting device according to the working temperature of each heating element collected by each temperature sensor to enable cold air to blow to an area where a heat dissipation is needed.

One or more embodiments of the disclosure further provide a control method of a heat dissipation of the energy station. The control method of the heat dissipation of the energy station includes:
obtaining the working temperature of each heating element;
comparing the working temperature of each heating element with a preset safety temperature of each heating element;
controlling an opening of the heat dissipation air passage corresponding to the heating element whose working temperature exceeds the safe temperature in each of the heating elements;
controlling a closing of the heat dissipation air passage corresponding to the heating element whose working temperature does not exceed the safe temperature in each of the heating elements;

In an embodiment of the disclosure, the control method of the heat dissipation of the energy station further includes:
calculating a total heat dissipation demand of all the heating elements according to the working temperature of each heating element and the preset safety temperature of each heating element;
determining whether the heat dissipation demand is greater than a cooling capacity of the air conditioning device;
when the heat dissipation demand is greater than the cooling capacity, dissipating each heating element according to a preset priority order from high to low.

One or more embodiments of the disclosure provide an energy station. The energy station includes the carriage, the air conditioning device, the main air passage, the plurality of sub-air passages, the plurality of valves, the plurality of temperature sensors and the controller.

The air conditioning device is mounted on the carriage.

The main air passage is communicated with the air outlet of the air conditioning device.

Each sub-air passage is respectively communicated with the main air passage, and air outlets of each sub-air passage are respectively arranged in the mounting zone of each heating element in the carriage.

Each of the valves is respectively arranged on each sub-air passage.

Each of the temperature sensors is respectively arranged in the mounting area of each of the heating elements.

The controller is electrically connected with each valve and each temperature sensor, and the controller is configured to be capable of controlling the opening or closing of each valve according to the working temperature of each heating element collected by each temperature sensor.

One or more embodiments of the disclosure provide an energy station. The energy station includes the carriage.

The carriage is provided with an energy storage unit, a load unit, a control module and a display module.

The energy storage unit is used to store electrical energy.

The load unit is used to charge an external device.

The control module is electrically connected with the energy storage unit and the load unit.

The display module is electrically connected with the control module and is used to display a working state of the energy storage unit and/or the load unit.

In an embodiment of the disclosure, the display module includes a plurality of display units, and each display unit is respectively used for displaying different working states of the energy storage unit and the load unit.

In an embodiment of the disclosure, the display module includes a display screen.

In an embodiment of the disclosure, the display screen includes a plurality of display areas, and each display area respectively displays different working states of the energy storage unit and the load unit.

In an embodiment of the disclosure, the display module includes an in-vehicle display module and an out-vehicle display module, the in-vehicle display module is arranged inside the carriage, and the out-vehicle display module is arranged outside of the carriage.

In an embodiment of the disclosure, the display module is arranged on an outer wall of the carriage.

In an embodiment of the disclosure, the outer wall of the carriage is provided with a lifting bracket, a driving element for driving the lifting bracket to be lifted up and down, and the display module is mounted on the lifting bracket.

In an embodiment of the disclosure, the lifting bracket is slidably connected with the outer wall of the carriage in a vertical direction.

In an embodiment of the disclosure, the lifting bracket is rotatably connected with the outer wall of the carriage along a horizontal axis.

In an embodiment of the disclosure, the lifting bracket is configured to be capable of flipping between the following two stations:
station 1, the lifting bracket hanging downward on the outer wall of the carriage in the vertical direction; and
station 2, the lifting bracket protruding upward along the vertical direction from an upper end of the carriage.

The display module is configured that when the lifting bracket is at the station 1, the display module is located between the outer wall of the carriage and the lifting bracket.

One or more embodiments of the disclosure provide an energy station. The energy station includes a carriage, a fixed tool wall and a movable tool wall.

The fixed tool wall is located on at least one inner side wall of the carriage.

The movable tool wall is located in the carriage and is movable relative to the fixed tool wall.

The movable tool wall has at least one state parallel to the fixed tool wall, and when the movable tool wall is parallel to the fixed tool wall, at least part of the fixed tool wall is shaded by the movable tool wall.

The movable tool wall is configured to be capable of changing a position or size of the shaded area of the fixed tool wall in the movement process.

The fixed tool wall and the movable tool wall are respectively provided with the mounting part to mount the hanger.

In an embodiment of the disclosure, the movable tool wall is slidably arranged along a direction parallel to the fixed tool wall.

In an embodiment of the disclosure, the movable tool wall is slidably arranged along the horizontal direction.

In an embodiment of the disclosure, a width of the movable tool wall is less than or equal to 1/2 of a width of the fixed tool wall.

In an embodiment of the disclosure, the movable tool wall is slidably arranged along the vertical direction.

In an embodiment of the disclosure, a height of the movable tool wall is less than or equal to 1/2 of a height of the fixed tool wall.

In an embodiment of the disclosure, a first locking mechanism is arranged between the movable tool wall and the carriage, and the first locking mechanism is configured to that when the movable tool wall moves to a first preset position relative to the fixed tool wall, the first locking mechanism can keep the movable tool wall at the first preset position and can release the movable tool wall from the first preset position.

In an embodiment of the disclosure, the mounting part includes a plurality of holes or grooves arranged on the fixed tool wall and the movable tool wall.

One or more embodiments of the disclosure provide an energy station. The energy station includes the carriage, the fixed tool wall and the movable tool wall.

The fixed tool wall is located on at least one inner side wall of the carriage.

The movable tool wall is located in the carriage and is movable relative to the fixed tool wall.

The movable tool wall has at least one state parallel to the fixed tool wall, and when the movable tool wall is parallel to the fixed tool wall, at least part of the fixed tool wall is shaded by the movable tool wall.

The movable tool wall is configured to be capable of exposing a shaded area of the fixed tool wall in the movement process.

The fixed tool wall and the movable tool wall are respectively provided with the mounting part to mount the hanger.

In an embodiment of the disclosure, the movable tool wall is flipped and arranged along a fixed axis relative to the fixed tool wall, and the fixed axis is parallel to the fixed tool wall.

In an embodiment of the disclosure, the flipping axis of the movable tool wall is vertically arranged.

In an embodiment of the disclosure, there are two movable tool walls, and flipping axes of the two movable tool walls are respectively located at two ends of the fixed tool wall, so that the two movable tool walls form a double-door structure.

In an embodiment of the disclosure, the flipping axis of the movable tool wall is horizontally arranged.

In an embodiment of the disclosure, the carriage is provided with a sliding base, the sliding base is slidably arranged along a direction parallel to the fixed tool wall, the movable tool wall is rotatably connected with the sliding base, and a rotating shaft is parallel to the fixed tool wall.

In an embodiment of the disclosure, a second locking mechanism is arranged between the movable tool wall and the sliding base, and the second locking mechanism is configured to that when the movable tool wall moves to a second preset position, the second locking mechanism can keep the movable tool wall at the second preset position and can release the movable tool wall from the second preset position.

One or more embodiments of the disclosure provide an energy station for battery swapping for the garden non-road electric vehicle. The energy station includes the carriage, the battery pack storage part and the transfer unit.

The carriage is provided with the battery changing port arranged on at least one side wall of the carriage.

The battery pack storage part includes at least two storage bins to store battery packs of the garden non-road electric vehicle.

The transfer unit is configured to be capable of guiding an alternate movement of each storage bin to the battery changing port.

In an embodiment of the disclosure, the transfer unit includes a first guiding device, and the battery pack storage part is mounted on the first guiding device. The first guiding device is configured to be capable of guiding the battery pack storage part to move in a direction parallel to a side wall of the carriage where battery changing port is located, and each storage bin is sequentially arranged along a direction parallel to a movement of the battery pack storage part.

In an embodiment of the disclosure, the first guiding device includes a first roller conveyor, and a first guiding wheel is arranged on both sides above a roller surface of the first roller conveyor.

In an embodiment of the disclosure, a first positioning device is arranged between the battery pack storage part and the transfer unit, and the first positioning device is configured to that when any of the storage bins move to the battery changing port, the first positioning device can keep the battery pack storage part at the station and can release the battery pack storage part from the station.

In an embodiment of the disclosure, the first positioning device includes a first positioning hole arranged in the battery pack storage part and a second positioning hole arranged in the transfer unit. When any of the storage bins move to the battery changing port, at least one first positioning hole and at least one second positioning hole are aligned, and the first positioning device further includes a first positioning pin inserted in the first positioning hole and the second positioning hole.

In an embodiment of the disclosure, the battery pack storage part includes a tray, and a second guiding device is arranged on the tray. The second guiding device is configured to guide the battery pack to move in a direction perpendicular to the side wall of the carriage where the battery changing port is located.

In an embodiment of the disclosure, the second guiding device includes a second roller conveyor arranged on the tray, and a second guiding wheel is arranged on both sides above a roller surface of the second roller conveyor.

In an embodiment of the disclosure, a second positioning device is arranged between the tray and the battery pack, and the second positioning device is configured to that when the battery pack is located at the storage bin, the second positioning device can keep the battery pack at the storage bin and can release the battery pack from the storage bin.

In an embodiment of the disclosure, the second positioning device includes a third positioning hole arranged in the battery pack and a fourth positioning hole arranged in the tray. When the battery pack is located at a designated position on the tray, the third positioning hole and the fourth positioning hole are aligned, and the second positioning device further includes a second positioning pin inserted in the third positioning hole and the fourth positioning hole.

One or more embodiments of the disclosure provide the garden non-road electric vehicle. The garden non-road electric vehicle includes a vehicle body, a battery pack compartment and the battery pack.

The battery pack compartment is mounted on the vehicle body.

The battery pack is detachably connected with the battery pack compartment.

The battery pack compartment is configured such that the battery pack can move into or out of the battery pack in the horizontal direction.

In an embodiment of the disclosure, a bottom of the battery pack compartment is provided with a guiding unit for guiding the battery pack to move along the horizontal direction.

In an embodiment of the disclosure, the guiding unit includes a roller rotatably arranged at the bottom of the battery pack compartment, and a top surface of the roller protrudes from the bottom wall of the battery pack compartment.

In an embodiment of the disclosure, a positioning unit is arranged between the battery pack and the battery pack compartment, and the positioning unit is configured such that when the battery pack is located in the battery pack compartment, the positioning unit can keep the battery pack in the battery pack compartment and can release the battery pack from the battery pack compartment.

In an embodiment of the disclosure, the positioning unit includes a protruding bar arranged on a side wall of the battery pack, and an edge bar abutting against a top surface of the positioning bar in the battery pack compartment, and the edge bar is fixedly connected or detachably connected with the battery pack compartment.

In an embodiment of the disclosure, a top surface edge of the protruding bar and a bottom edge of the edge bar are respectively provided with an inclined wedge surface.

One or more embodiments of the disclosure provide a battery swapping system. The battery swapping system includes the garden non-road electric vehicle and the energy station.

The garden non-road electric vehicle includes the vehicle body, the battery pack compartment and the battery pack.

The battery pack compartment is mounted on the vehicle body.

The battery pack compartment is detachably connected with the battery pack compartment, and configured to that the battery pack can move into or out of the battery pack in the horizontal direction.

The energy station includes the carriage, the battery pack storage part and the transfer unit.

The carriage is provided with the battery changing port arranged on at least one side wall of the carriage.

The battery pack storage part includes at least two storage bins to store battery packs of the garden non-road electric vehicle.

The transfer unit is configured to be capable of guiding an alternate movement of each storage bin to the battery changing port.

One or more embodiments of the disclosure provide a management method of the energy station. The management method of the energy station includes:
according to an energy station positioning command of a user terminal, pushing peripheral energy station information to the user terminal, and the peripheral energy station information including parameter information of a device that a peripheral energy station is provided with;
receiving a reservation order command from the user terminal for a device equipped at the peripheral energy station;
parsing the reservation order command to obtain a demand list;
sending locking information to a corresponding device based on the demand list.

In an embodiment of the disclosure, the management method of the energy station further includes receiving and storing parameter information of the device that the peripheral energy station is provided with, the parameter information of the device that the peripheral energy station is provided with includes device parameter information uploaded by an external working device of the energy station and/or the device in the energy station.

In an embodiment of the disclosure, the device parameter information of the device that the peripheral energy station is provided with is uploaded through wired and/or wireless means.

In an embodiment of the disclosure, the management method of the energy station further includes pushing the parameter information of the device that the peripheral energy station is provided with to the background management system in real time, so that the background management system may monitor a device state of the energy station.

In an embodiment of the disclosure, if the locking information is not released within a preset time, a releasing command is issued to the energy station to release a locking state of the device.

In an embodiment of the disclosure, the energy station includes a fixed energy station and/or a mobile energy station.

In an embodiment of the disclosure, when the energy station is the fixed energy station and/or the mobile energy station, the reservation order command is parsed to obtain a pick-up mode, and the pick-up mode is a self-service arrival at the station or a door-to-door delivery.

In an embodiment of the disclosure, when the energy station is the fixed energy station and/or the mobile energy station, the mobile energy station maintains and replaces the device in the fixed energy station.

In an embodiment of the disclosure, the management method of the energy station further includes pushing a position and usage stage of the surrounding charging pile to the user terminal according to positioning instruction of the charging pile of the user terminal.

In an embodiment of the disclosure, the device that the peripheral energy station is provided with includes the battery pack, the garden tool and the charging port.

One or more embodiments of the disclosure provide a management device of the energy station. The management device of the energy station includes an information push module, an order command receiving module, an order command parsing module and a locking command sending module.

The information push module is used to push the peripheral energy station information to the user terminal, and the peripheral energy station information including parameter information of a device that the peripheral energy station is provided with according to an energy station positioning command of a user terminal.

The order command receiving module is used to receive the reservation order command from the user terminal for the device equipped at the peripheral energy station.

The order command parsing module is used to parse the reservation order command to obtain the demand list.

The locking command sending module is used to send locking information to a corresponding device based on the demand list.

One or more embodiments of the disclosure further provide a management system of the energy station, which includes the energy station, the user terminal and a server terminal.

The energy station includes the central control device, a communication unit and a plurality of in-station device.

The server terminal is respectively in a communication connection with the user terminal and the energy station;

The server terminal is configured to:
according to the energy station positioning command of the user terminal, pushing peripheral energy station information to the user terminal, and the peripheral energy station information including parameter information of the device that the peripheral energy station is provided with;
receiving the reservation order command from the user terminal for the device equipped at the peripheral energy station;
parsing the reservation order command to obtain the demand list;
sending locking information to the corresponding device based on the demand list.

In an embodiment of the disclosure, the server terminal includes a cloud server.

The energy station system of one or more embodiments of the disclosure includes at least one input energy source, at least one load, at least one central control module, and a switchable energy module. The switchable energy module switches its own working state based on at least one supply and at least one demand relationship between the input energy source and the load, and the central control module controls the input energy source to supply power to the load. Through arranging the switchable energy module, it may be used to switch its working state according to the supply-demand relationship between the input energy source and the load, so as to supplement the supply and demand imbalance between the input energy source and the load as characteristics of the input energy source or a DC load.

### BRIEF DESCRIPTION OF THE DRAWINGS

FIG. 1 is a structural block view of an energy station system of the disclosure.
FIG. 2 is a modified structural block view of the energy station system of the disclosure.
FIG. 3 is a second modified structural block view of the energy station system of the disclosure.
FIG. 4 is a third modified structural block view of the energy station system of the disclosure.
FIG. 5 is a fourth modified structural block view of the energy station system of the disclosure.
FIG. 6 is a schematic connection view of a functional module of a PCS module of the disclosure with an external EVCC module and a photovoltaic assembly.
FIG. 7 is an internal block view of an EVCC module of the disclosure.
FIG. 8 is a schematic flowchart of a control method of the energy station of the disclosure.
FIG. 9 is a schematic flowchart of an energy distribution method of the energy station of the disclosure.
FIG. 10 is a control logic view of an energy distribution of the energy station of the disclosure.
FIG. 11 is a control logic view of an energy distribution method of the energy station of the disclosure when considering a charging priority.
FIG. 12 is a structural block view of an energy distribution system of the energy station of the disclosure.
FIG. 13 is a structural block view of an electronic device of the disclosure.
FIG. 14 is a schematic flowchart of a DC charging method of the energy station of the disclosure.
FIG. 15 is a control logic view of a DC charging of the energy station of the disclosure.
FIG. 16 is a functional block view of a charging cabinet system of the disclosure.
FIG. 17 is a schematic view of a charging cabinet body of the disclosure.
FIG. 18 is a schematic structural view of a heat dissipation system of the energy station according to an embodiment of the disclosure.
FIG. 19 is a structural block view of the heat dissipation system of the energy station according to an embodiment of the disclosure.
FIG. 20 is a structural block view of the heat dissipation system of the energy station according to another embodiment of the disclosure.
FIG. 21 is a schematic structural view of the heat dissipation system of the energy station according to another embodiment of the disclosure.
FIG. 22 is a flowchart of a heat dissipation control method of the energy station according to an embodiment of the disclosure.
FIG. 23 is a perspective view of a fixed tool wall and a movable tool wall according to an embodiment of the disclosure.
FIG. 24 is a schematic view of a horizontal sliding of a single-movable tool wall according to an embodiment of the disclosure.
FIG. 25 is a schematic view of a horizontal sliding of a double-movable tool wall according to an embodiment of the disclosure.
FIG. 26 is a schematic view of a horizontal pull-out movable tool wall according to an embodiment of the disclosure.
FIG. 27 is a schematic view of a vertical sliding of the single-movable tool wall according to an embodiment of the disclosure.
FIG. 28 is a schematic view of a vertical sliding of the double-movable tool wall according to an embodiment of the disclosure.
FIG. 29 is a schematic view of the double-movable tool wall with a split type according to an embodiment of the disclosure.
FIG. 30 is a schematic view of a vertical flipping of the single-movable tool wall according to an embodiment of the disclosure.
FIG. 31 is a schematic view of a horizontal sliding of the single-movable tool wall according to an embodiment of the disclosure.
FIG. 32 is a schematic view of a sliding and flipping of the single-movable tool wall according to an embodiment of the disclosure.
FIG. 33 is a schematic structural view of the sliding and flipping of the single-movable tool wall according to an embodiment of the disclosure.
FIG. 34 is a schematic view of a locking mechanism according to an embodiment of the disclosure.
FIG. 35 is a perspective schematic structural view of the energy station according to an embodiment of the disclosure.
FIG. 36 is a functional module block view of the energy station according to an embodiment of the disclosure.
FIG. 37 is a schematic view of a lifting mechanism of a display screen according to an embodiment of the disclosure.
FIG. 38 is a schematic view of the lifting mechanism of the display screen according to another embodiment of the disclosure.
FIG. 39 is a perspective schematic view of a battery swapping system according to an embodiment of the disclosure.
FIG. 40 is a perspective schematic view of the battery swapping system without a carriage according to an embodiment of the disclosure.
FIG. 41 is a perspective view of a battery pack storage part and a transfer unit according to an embodiment of the disclosure.
FIG. 42 is a perspective view of the battery pack storage part and the transfer unit from another angle according to an embodiment of the disclosure.
FIG. 43 is a partial schematic exploded view of a garden non-road electric vehicle according to an embodiment of the disclosure.
FIG. 44 is a cross-sectional view of the garden non-road electric vehicle according to an embodiment of the disclosure.
FIG. 45 is a partial enlarged view of area I in FIG. 44.
FIG. 46 is an application scenario view of a management system of the energy station of the disclosure.
FIG. 47 is a structural block view of the management system of the energy station according to an embodiment of the disclosure.
FIG. 48 is a structural block view of the management system of the energy station according to a second embodiment of the disclosure.
FIG. 49 is a structural block view of the management system of the energy station according to a third embodiment of the disclosure.
FIG. 50 is a schematic flowchart of the management system of the energy station according to an embodiment of the disclosure.
FIG. 51 is a schematic flowchart of the management system of the energy station according to a second embodiment of the disclosure.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure.

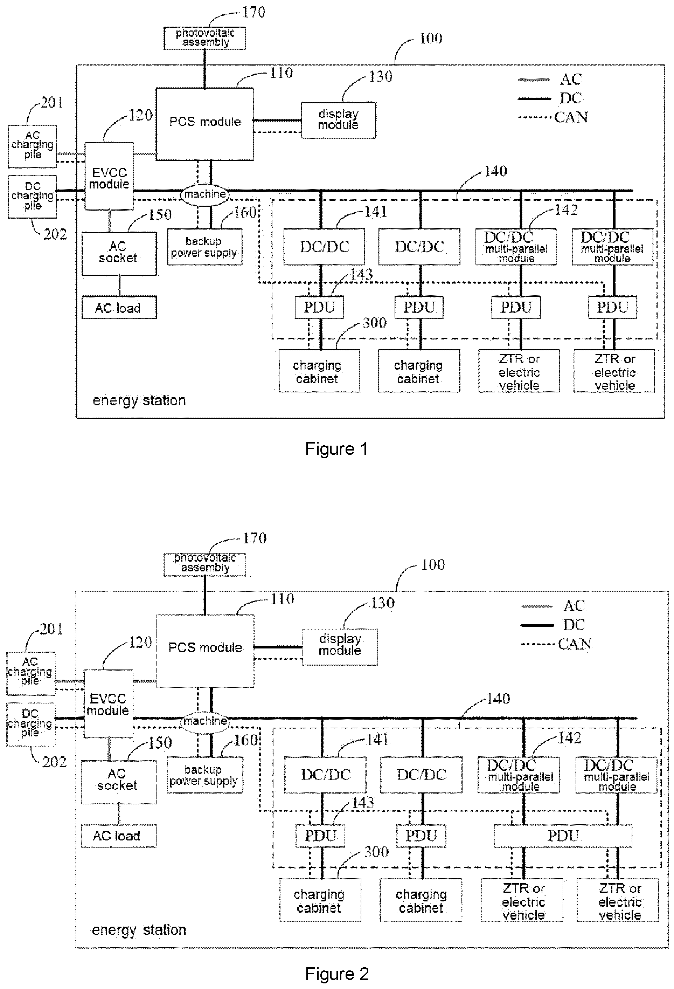

Please refer to FIG. 1 through FIG. 51. It should be noted that drawings provided in the embodiments are only illustrative of a basic idea of the disclosure. The drawings only show assemblies related to the disclosure instead of drawing according to the number, shape and size of the assemblies in actual implementation. In actual implementation, the type, quantity and ratio of each assembly may be changed at will, and a layout of the assemblies may also be more complicated.

Garden power tools are all provided with battery packs and driven by battery packs, and conventional garden power tools have following problems in a process of use: a problem of garden power tool storage that the conventional garden power tools are often directly placed at home, and when going out to a slightly farther operation area for operation, it is inconvenient to carry; and a problem of charging garden power tools that the conventional garden power tools run out of power during operation and need to go home to charge, which is extremely inconvenient especially when multiple power tools are working at the same time and need to replenish power. As an energy hub, the energy station can provide long-term battery life for other battery packs, other power tools or electric vehicles during outdoor operations, and can provide reliable energy guarantee for work and construction in a process of large-scale outdoor operations.

Please refer to FIG. 1 through FIG. 5. An embodiment of the disclosure provides an energy station system applied in an energy station as show in FIG.1.

Please refer to FIG. 1 through FIG. 5. The energy station system includes an input energy source, a PCS module 110 (as a central control module), an EVCC module 120, an AC output module 150, a DC output module 140, a display module 130 and a load (a battery pack in a charging cabinet 300, a garden tool ZTR or an electric vehicle in FIG. 1 through FIG. 5). In an embodiment, the DC output module 140 and the AC output module 150 are used as output modules of the energy station system.

Please refer to FIG. 1 through FIG. 5. The input energy source may include an external charging pile, a photovoltaic assembly 170 and a backup power supply 160 (as a switchable energy module), and each input energy source may be used as a DC input source or as an AC input source. In an embodiment, the external charging pile may include a DC charging pile 202 and/or an AC charging pile 201. As a new energy module, the photovoltaic assembly 170 is a power generation device that generates direct current when exposed to sunlight, and includes thin-body solid photovoltaic batteries made almost entirely of semiconductor materials (such as silicon).

The backup power supply 160 is used as the switchable energy module, for example, it may be a storage battery, and a voltage of the backup power supply 160 is from 12V to 1KV, and the power is from 1KW to 100KW. The backup power supply 160 is used as a supplementary energy when other input energy source is insufficient to meet a load power demand. The backup power supply 160 can switch its own working state based on a supply-demand relationship between the input energy source and the load other than itself. When an output power of the input energy source is greater than the power demand of the load, the backup power supply 160 is used as the load, and when the output power of the input energy source is less than the power demand of the load, the backup power supply 160 is used as the input energy source. For example, a charging and discharging mode of the backup power supply is adjusted based on a voltage difference between itself and a DC bus or an instruction of the PCS module, so that the backup power supply is configured to be used as the input energy source or a DC load of the energy station system to be charged.

Please refer to FIG. 1 through FIG. 5. As a brain of the whole energy station system, the PCS module 110 mentioned above is the central control module of the whole energy station system, which is responsible for data processing and a control of the whole energy station system. It obtains a power demand of an electric load through communication, and distributes the obtained energy to the electric load. The electric load includes DC loads include such as the external battery pack in the charging cabinet 300, the ZTR or the electric vehicle, a backup power supply 160, and may also include AC loads such as an air conditioner and a kettle.

The PCS module 110 may be used to supply power to the load based on a variety of control strategies. For example, the PCS module 110 may carry out an energy distribution management based on an available output power of the input energy source and the power demand of the load, and controls the input energy source to supply power to the load according to an energy distribution result.

For example, the PCS module 110 may carry out the energy distribution management based on the available output power of the input energy source, the power demand of the load and a charging priority of the load, and controls the input energy source to supply power to the load according to the energy distribution result and the charging priority of the load.

For example, for a case of multiple input energy sources, the PCS module 110 may carry out the energy distribution management based on available output power of the plurality of the input energy sources, a power of the load and a power supply priority demand of each input energy source, and controls the input energy source to supply power to the load according to the energy distribution result.

Please refer to FIG. 1 through FIG. 5. The EVCC module 120 mentioned above is responsible for a state detection of the external charging pile, a control of an internal relay (also known as an EVCC relay), and a transmission of power information. A main performance of the EVCC module is that an access situation of the charging pile may be detected, and a corresponding internal AC or DC relay is controlled according to the voltage difference between a charging pile output and the DC bus or an AC bus. In an embodiment, the voltage difference may be calculated by a communication between the charging pile and the PCS module 110, and of course may also be calculated by AD sampling. Transmission of the power information means that the EVCC module 120 obtains the power demand of the load from the PCS module 110 and sends it to the charging pile, and the EVCC module 120 may obtain an available power from the charging pile simultaneously, which means an available output power of the charging pile, and sends it to the PCS module 110 for further energy management.

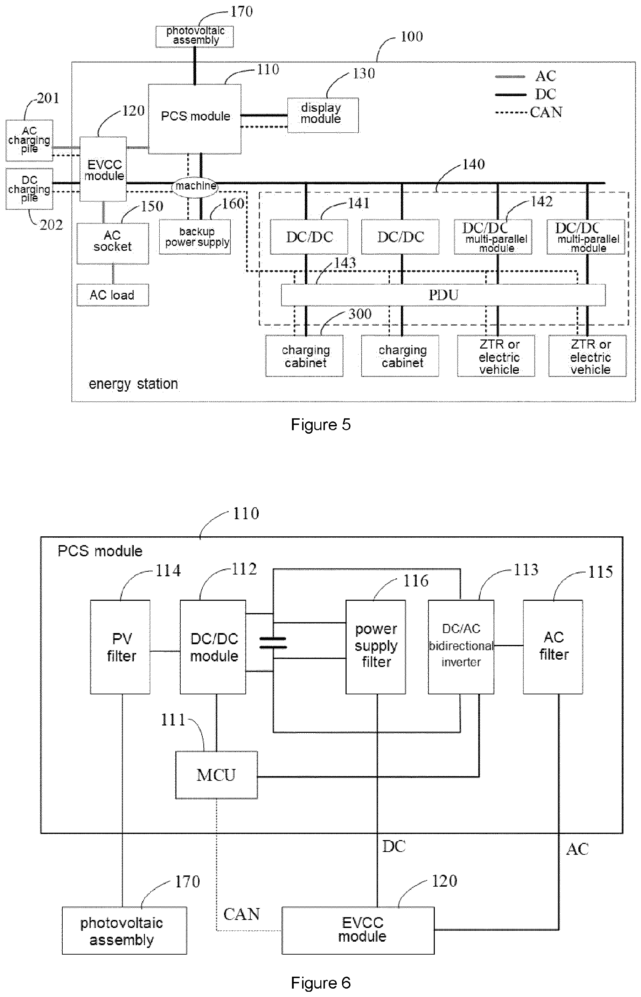

FIG. 6 is a schematic connection view of a functional module of a PCS module with an external EVCC module and a photovoltaic assembly. Please refer to FIG. 6. The PCS module 110 includes a PCS control unit 111, a DC/DC module 112, a DC/AC bidirectional inverter 113 (also known as a DC/AC module), a photovoltaic filter 114, an AC filter 115 and a power supply filter 116.

The PCS control unit 111 mentioned above is connected with the DC/DC module 112 and the DC/AC bidirectional inverter 113 respectively. An input end of the DC/DC module 112 is connected with the photovoltaic assembly 170 through the photovoltaic filter 114, and an output end of the DC/DC module 112 is connected with an input/output end of the DC bus and the DC/AC bidirectional inverter 113 respectively. An output/input end of the DC/AC bidirectional inverter 113 is connected with the AC bus through the AC filter. In an embodiment, the power supply filter 116 is arranged between the output end of the DC/DC module 112, the input/output end of the DC/AC bidirectional inverter 113 and the DC bus.

The following will be combined with FIG. 1 through FIG. 6 to illustrate a working principle of the PCS module 110 by taking a single input energy source as an example.

For example, when the AC charging pile 201 is connected, the AC will be divided into two parts. Part of it is directly connected with an AC socket of the AC output module 150 through a port on the EVCC module 120, and the AC load may be directly inserted into the AC socket to draw electricity. The other part is converted into DC through the DC/AC bidirectional inverter 113 in the PCS module 110, and then outputs from the DC output terminal, thereby supplying power to the DC load on the DC output end.

For example, when the DC charging pile 202 is connected, the DC will be divided into two parts. Part of it is converted into AC through the DC/AC bidirectional inverter 113 in the PCS module 110, then is directly connected with the AC socket of the AC output module 150 through the port on the EVCC module 120, and the AC load may be directly inserted into the AC socket to draw electricity. The other part is output from the DC output terminal through the DC bus, thereby supplying power to the DC load on the DC output end.

For example, when the photovoltaic assembly 170 is connected, since an output voltage of the photovoltaic assembly 170 is not very stable, an unstable voltage is converted into a stable DC output through the DC/DC module 112 in the PCS module 110, and the DC will be divided into two parts of output. Part of it is converted into AC through the DC/AC bidirectional inverter 113 in the PCS module 110, then is directly connected with the AC socket of the AC output module 150 through the port on the EVCC module 120, and the AC load may be directly inserted into the AC socket to draw electricity. The other part is output from the DC output terminal through the DC bus, thereby supplying power to the DC load on the DC output end.

For example, when the AC charging pile 201, the DC charging pile 201, the photovoltaic assembly170 are unavailable, the backup power supply 160 is converted into input energy source for use, and when the backup power supply 160 works, the DC will be divided into two parts. Part of it is converted into AC through the DC/AC bidirectional inverter 113 in the PCS module 110, then is directly connected with the AC socket of the AC output module 150 through the port on the EVCC module 120, and the AC load may be directly inserted into the AC socket to draw electricity. The other part is output from the DC output terminal through the DC bus, thereby supplying power to the DC load on the DC output end.

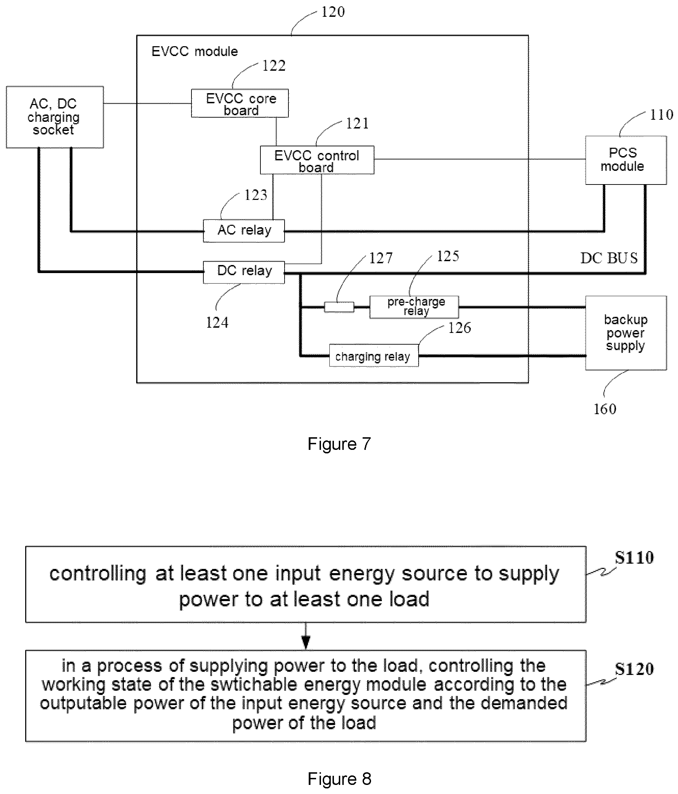

FIG. 7 is an internal block view of an EVCC module. Please refer to FIG. 7. The EVCC module 120 includes an EVCC core board 122, an EVCC control board 121 and an EVCC relay. The EVCC core board 122 is in a communication connection with the charging pile to obtain a state of the charging pile, and the EVCC control board 121 may control an on-off of the EVCC relay according to the state of the charging pile obtained by the EVCC core board 122, so as to utilize the charging pile to supply power.

In an embodiment, EVCC relay mentioned above may include a DC relay 124, an AC relay 123 and a pre-charge relay 125. The DC relay 124 is used for controlling a communication state of the DC charging pile 202 and the DC bus, and the AC relay 123 is used for controlling a communication state of the AC charging pile 201 and the AC bus. A first end of the pre-charge relay 125 is connected with the DC relay 124 through a pre-charge resistor 127, and a second end of the pre-charge relay 125 is connected with the backup power supply 160. The pre-charge relay 125, the pre-charge resistor 127 and the backup power supply 160 may form a pre-charge loop.

Please refer to FIG. 1 through FIG. 7. The DC charging pile 202 and the AC charging pile 201 may be connected with the DC relay 124 and the AC relay 123 in EVCC module 120 respectively through a charging socket. In an embodiment, the charging socket is arranged on a body of the energy station 100, and there may be one or two charging sockets on body of energy station 100 that are connected with AC charging pile 201 or DC charging pile 202. If the user only connects with one charging pile at a time, a single charging socket may be selected, which means that only one charging socket is arranged on the body of the energy station 100, and the AC charging pile and the DC charging pile may share this charging socket. The body of the energy station 100 may be respectively configured with one AC charging socket and one DC charging socket for being used for connecting with the AC charging pile 201 and the DC charging pile 202 respectively.

In addition, please refer to FIG. 7. In order to charge or discharge the backup power supply 160, the EVCC relay may further be provided with a charging/discharging relay 126, and the charging relay 126 is arranged between the DC bus and the backup power supply 160.

Please refer to FIG. 1 through FIG. 7. The AC output module 150 mentioned above includes the AC socket that may output a charging current of at least one specification. The specification of the charging current may be from 1A to 63A for example, and the AC socket may supply power to the AC load connected thereto. In an embodiment, electric energy of the DC charging pile 202, the photovoltaic assembly 170 or the backup power supply 160 may convert the DC into AC through the DC/AC module in the PCS module 110, and supply power to the AC load through the AC socket connected with the EVCC module 120. While electric energy of the AC charging pile 201 may directly supply power to the AC load through the AC socket connected with the EVCC module 120.

A control logic of the EVCC module 120 is as follows:
when the DC charging pile 202 is connected, the DC charging pile 202 will not have an output at this time. After communication is established, when the EVCC core board 122 detects that the DC charging pile 202 is connected, it notifies the EVCC control board 121 to start the pre-charge loop. When pre-charged, the pre-charge relay 125 is first closed, the pre-charge loop is connected, and the backup power supply 160 begins to charge the DC bus. After a precharging is completed, the pre-charge relay 125 will be disconnected and exited, and the precharging is completed here. A function of precharging is to avoid a current impact caused by a DC coming in directly.

After the precharging is completed, the charging/discharging relay 126 is closed, then the DC relay 124 is closed, and the DC begins to enter the DC bus.

Regardless of whether it is the DC relay 124 or the AC relay 123, an essence is that the PCS module 110 obtains a voltage difference between an AC circuit and the corresponding charging pile, and a voltage difference between a DC circuit and the corresponding charging pile through the communication or AD sampling, and gives voltage difference information to the EVCC module 120. The EVCC module 120 controls the corresponding relay to close within a preset voltage difference range to minimize the current impact.

Please refer to FIG. 1 through FIG. 6. The energy station system may include a plurality of DC output modules 140, for example a first DC output module for supplying power to at least one charging cabinet 300 (for charging a detachable battery pack, which may be a battery pack with different specifications) and a second DC output module for supplying power to at least one garden tool ZTR or at least one electric vehicle. The DC output module 140 includes at least one DC/DC charging module (for drawing power from the DC bus) and at least one PDU module 143 (equivalent to a power distribution socket).

When utilizing the second DC output module 140 to charge the electric vehicle, if a charging port of electric vehicle is different from a charging port of the garden tool ZTR, then two types of the charging gun need to be provided. If the charging port of the electric vehicle is the same as the charging port of the ZTR, only one charging gun may be configured, and an output voltage of this charging gun may be between 50V and 600V for example. In an embodiment, the electric energy of the AC charging pile 201 may be converted into DC from AC by the DC/AC module (also known as the DC/AC bidirectional inverter) in the PCS module 110, and supply power for the DC load through the DC output module 140.

Please refer to FIG. 1. Each charging cabinet 300, garden tool ZTR or electric vehicle is controlled by a separate PDU module 143. Usually, the power demand of the battery pack in the charging cabinet 300 is small, so the DC/DC charging module in the first DC output module 140 may be a single DC/DC module 141, and of course the DC/DC multi-parallel module of a plurality of DC/DC modules with smaller power may also be adopted. While the power demand of garden tool ZTR or electric vehicle is larger, so the DC/DC charging module in the second DC output module 140 may be a DC/DC multi-parallel module 142 of a plurality of DC/DC modules. In addition, the DC/DC charging module in the second DC output module 140 may select a single highpower DC/DC module.

Please refer to FIG. 2 through FIG. 4. In order to be able to control the number of the DC/DC charging modules connected in parallel in the DC output module 140 according to the power demand of the DC load to meet charging demands of different DC loads, the DC/DC charging modules of the plurality of the first DC output module and/or the plurality of the DC/DC charging modules of the second DC output module is controlled by at least one PDU module 143.

For example, please refer to FIG. 2 through FIG. 4. The DC output modules 140 with the same load may be controlled by the same PDU module 143. For example, the DC/DC charging modules of the first DC output module of the plurality of charging cabinets 300 may be controlled by the same PDU module 143. Please refer to FIG. 2 through FIG. 4. The DC/DC charging modules of the second DC output module of the plurality of garden tools ZTR or the electric vehicle may be controlled by the same PDU module 143.

For example, the PDU module 143 responsible for the charging cabinet 300 may select at least one DC/DC charging module to supply power to the charging cabinet 300, and when the plurality of DC/DC charging modules are selected to supply power to one charging cabinet 300 in parallel, a fast charging may be realized.

The PDU module 143 responsible for the garden tool ZTR or the electric vehicle may select at least one DC/DC charging module to supply power to the garden tool ZTR or the electric vehicle, and when the plurality of DC/DC charging modules are selected to be connected in parallel supply power to one garden tool ZTR or the electric vehicle, the fast charging may be realized.

For example, please refer to FIG. 5. The DC charging module 140 of the DC load may be controlled by the same PDU module 143, which means that the DC/DC charging modules of the first DC output module of the plurality of charging cabinets and the DC/DC modules of the second DC output module of the plurality of the garden tools ZTR or electric vehicles are controlled by the same PDU module 143. For example, when any one of the charging cabinets 300, the garden tool ZTR or the electric vehicle is connected, the PDU module 143 may control the plurality of DC/DC charging modules to be connected in parallel, thereby concentrating power for output the fast charging. That is, in addition to a full load state, redundant DC/DC charging modules may be selectively connected in parallel to charge a specified load according to a demand, so as to improve charging efficiency.

When the electric vehicle and garden tool ZTR share one charging gun for charging, it needs to obtain an access load type through a communication terminal on the charging gun. When it is detected that the electric vehicle is connected, the power demand corresponding to the electric vehicle is sent upward, so as to realize a power that finally matches with the demand of electric vehicle. When it is detected that the garden tool ZTR is connected, the power demand corresponding to the garden tool ZTR is sent upward, so as to realize a power that finally matches with the demand of the garden tool ZTR.

The display module 130 mentioned above is used for monitoring and displaying a situation of an electric load inside and outside the energy station 100, the load in the energy station 100 may upload data by a wired or a wireless mode, and the load outside the energy station 100 may upload data by the wireless mode. The uploaded data is processed by the PCS module 110, and displayed through the PCS module 110 controlling the display device inside or outside the vehicle, which is convenient for a manager or an operator to obtain a situation of relevant electric load.

In this embodiment, the energy station system may further include a data transmission module, at least part of parameter information in a work of the energy station system is uploaded to the server through the data transmission module, and the server may be a cloud for example. The data transmission module includes a wired transmission module and/or a wireless transmission module, which means that at least part of the parameter information in the work of the energy station system is uploaded to the server through the wired and/or wireless means. In an embodiment, the parameter information refers to parameter information generated in a working process (including position information, through which a loss of the load or the power tool is detected), and the parameter information may come from DC loads such as battery packs, garden tools, electric vehicles, and backup power supplies, or AC loads such as air conditioners and kettles.

It should be noted that, in the energy station system mentioned above, the photovoltaic assembly 170, the backup power supply 160, the PCS module 110, the EVCC module 120, the DC output module 140, the display module 130, the charging cabinet 300, the load, the wired transmission module and/or the wireless transmission module etc. are used as hardware parts of the energy station 100.

It should be noted that, in the energy station system mentioned above, the input energy source, the PCS module 110, the EVCC module 120, the DC output module 140, and the display module 130 together form a DC charging system of the energy station. In the DC charging system of the energy station, the PCS module 110 is mainly used to obtain the power demand of each DC load connected with the DC output module 140. According to the obtained power demand of each DC load, at least one DC/DC charging module is controlled to supply power to at least one DC load.

Please refer to FIG. 8. The embodiment further provides a control method of the energy station. The control method of an energy station includes:
S110: controlling at least one input energy source to supply power to at least one load.

When the load is connected in the output module, the PCS module 110 may be used to control one or more of the photovoltaic assemblies, the charging piles, and the backup power supply 160 in the input energy source to supply power to each access load. In an embodiment, the load includes the DC loads such as external battery packs in the charging cabinet 300, the ZTR or the electric vehicles, the backup power supply 160, etc., and may also include the AC loads such as air conditioners and kettles.

It should be noted that, the PCS module 110 may be used to supply power to the load based on the variety of control strategies. For example, the PCS module 110 may carry out the energy distribution management based on the available output power of the input energy source and the power demand of the load, and controls the input energy source to supply power to the load according to the energy distribution result.

For example, the PCS module 110 may carry out the energy distribution management based on the available output power of the input energy source, the power demand of the load and the charging priority of the load, and controls the input energy source to supply power to the load according to the energy distribution result and the charging priority of the load.

For example, for a case of multiple input energy sources, the PCS module 110 may carry out the energy distribution management based on available output power of the plurality of the input energy sources, a power of the load and a power supply priority demand of each input energy source, and controls the input energy source to supply power to the load according to the energy distribution result.

S120: during a process of supplying power to the load, controlling a working state of the backup power supply according to an available output power of the input energy source and a power demand of the load.

During a process of supplying power to the load, since the available output power of other input energy sources and the demand power of the load will be unbalanced, the backup power supply 160 can switch its own working state to balance the available output power of the input energy source and the demand power of the load based on the supply-demand relationship between the input energy source and the load other than itself.

In an embodiment, when the available output power of other input energy sources are greater than the demand power of the load, the backup power supply 160 may be adjusted to the charging mode and used as the DC load, and other input energy sources are utilized to charge the backup power supply 160. When the available output power of other input energy sources are less than the demand power of load, the backup power supply 160 may be adjusted to the discharging mode, as the input energy source.

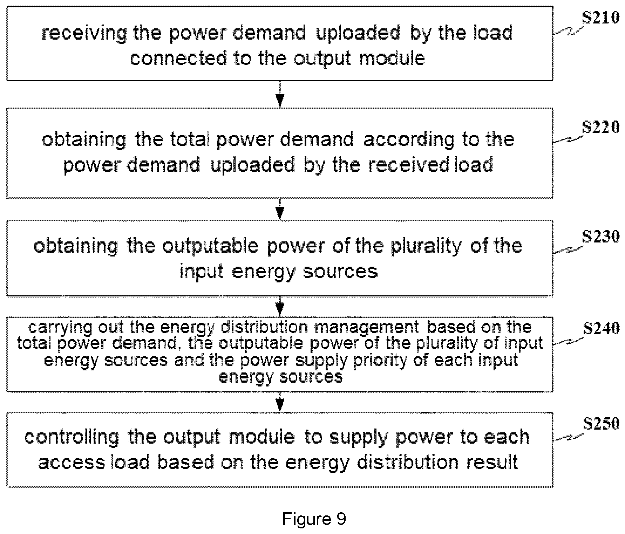

Please refer to FIG. 9. The embodiment further provides an energy distribution method, system, device and medium of the energy station with multiple energies for power supply. The energy distribution method of the energy station includes:
S210: receiving the power demand uploaded by the load connected to the output module;
S220: obtaining a total power demand according to the power demand uploaded by the received load;
S230: obtaining the available output power of the plurality of the input energy sources;
S240: carrying out the energy distribution management based on the total power demand, the available output power of the plurality of input energy sources and the power supply priority of each input energy sources;
S250: controlling the output module to supply power to each access load based on the energy distribution result.

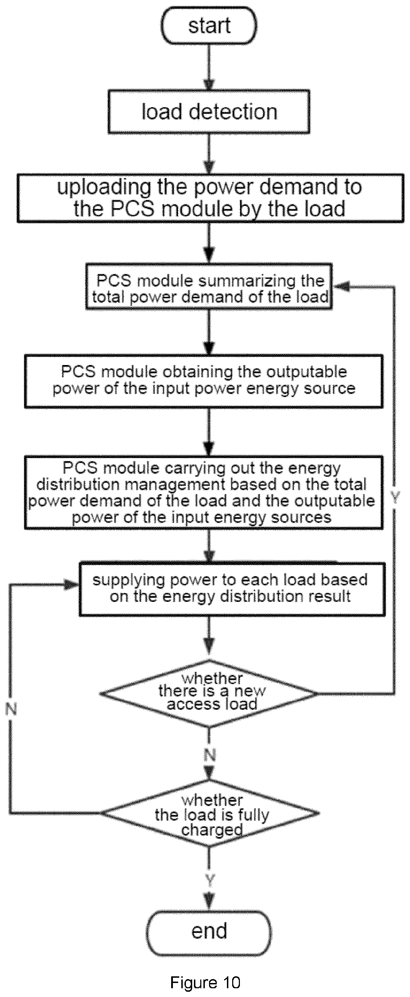

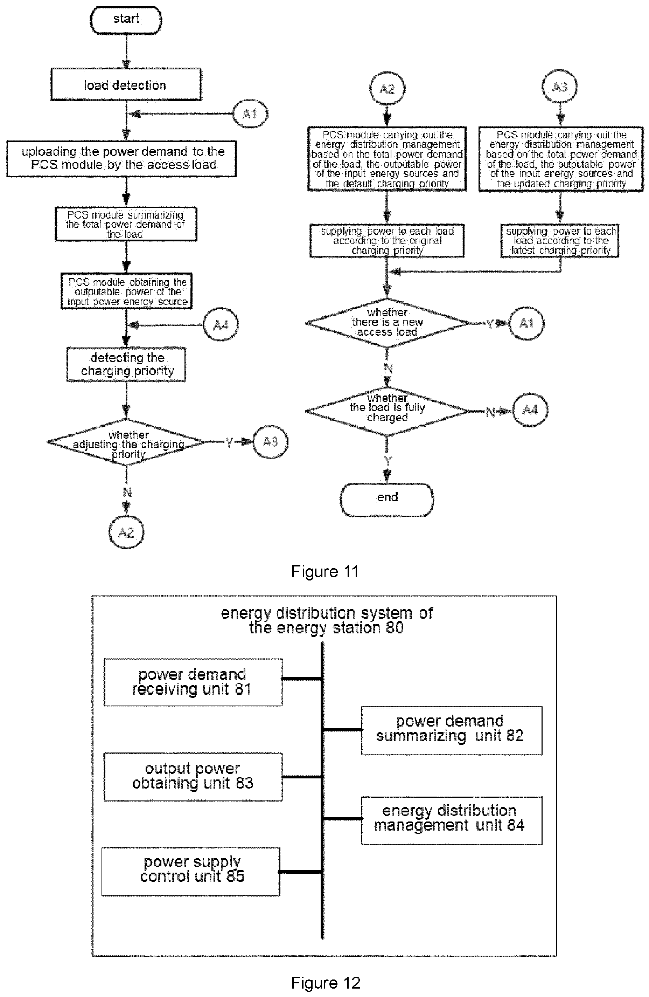

FIG. 10 is a control logic view of an energy distribution of the energy station of the disclosure. FIG. 11 is a control logic view of an energy distribution method of the energy station of the disclosure when considering a charging priority. An energy distribution scheme of the energy station in this disclosure will be described in detail in conjunction with FIG. 1 through FIG. 5 and FIG. 9 through FIG. 11 below.

First, S210 is executed: receiving the power demand uploaded by the load connected to the output module.

Please refer to FIG. 10 through FIG. 11. At a beginning of the energy distribution, a load state detection needs to be carried out first to detect whether there is a load connected to the output module. When the load is connected with the output module (the AC output module 150 and/or the DC output module 140), its power demand will be uploaded to the PCS module 110. The load includes the DC load and the AC load, and the DC load includes one or a combination of the backup power supply 160, the garden tool, the external battery pack in the charging cabinet 300 or the electric vehicle.

Depending on the type of load, a way the load uploads power demands is also different, which will be explained in detail below:
When the battery pack is inserted into the charging cabinet 300, the power demand of the battery pack in the charging cabinet 300 is sent to the PDU module 143, and uploaded to the PCS module 110 by the PDU module 143.

When the garden tool ZTR or electric vehicle is connected, its power demand will be uploaded to the PCS module 110 through a CAN bus passing through the charging gun.

There are two situations for the AC loads. When the AC load is not provided with a communication function, then only the power demand of the DC load is uploaded by the CAN bus or the wireless communication mode. When the AC load is provided with the communication function (the wireless communication), it may establish a connection with the PCS module 110 and upload the power demand through the wireless communication mode, and a final power demand is a sum of the power demand of the AC load and the DC load.

Then, S220 is executed: obtaining the total power demand according to the power demand uploaded by the received load.

After the PCS module 110 receives the power demand uploaded by the load, it needs to summarize the power demand to obtain the total power demand for subsequent energy distribution management.

Since some or all of the AC load is not provided with the communication function, its power demand cannot be uploaded, so that the total power demand may be smaller than an actual required power demand when the PCS module 110 carrying out a power summarization. But when supplying power, it usually needs to be distributed to the AC load first, which may cause other loads being insufficient.

Therefore, in an embodiment, when obtaining the total power demand according to the received power demand uploaded by the loads, the power demand uploaded by the received load may be summarized, and an additional preset additional power demand is added on a basis of the summarized power demand as the total power demand. In an embodiment, the preset power demand is used to replace the power demand of the load that cannot upload the power demand, thereby reducing an imbalance between the external input energy source and the actual required power demand to a certain proportion. In this embodiment, the external input energy source includes the photovoltaic assembly 170, and/or the charging pile. By fully considering the power demands of the loads that cannot upload power demands when summarizing the total power demands, the energy distribution can be realized more efficiently and accurately.

In another embodiment, the power demand of the AC load that cannot upload the power demand may be obtained by setting a current sensor or an electric meter in the AC load loop. Then the power demand of the received load is uploaded, and through the current sensor or the electric meter mounted in the load loop, the power demands of the loads that cannot upload the power demands are obtained and summarized to obtain the total power demand. By fully considering the power demands of the loads that cannot upload power demands when summarizing the total power demands, the energy distribution can be realized more efficiently and accurately.

In another embodiment, when obtaining the total power demand according to the received power demand uploaded by the loads, the power demand of the AC load that cannot upload the power demand is not considered, but the output module is controlled to supply power to each access load based on the energy distribution result (which means S250). When the actual required power demand is greater than an output power of an external input energy source, it is supplemented by the backup power supply 160, thereby reducing an imbalance between the external input energy source and the actual required power demand to a certain proportion. Since the backup power supply 160 is directly connected with the DC bus, the backup power supply 160 will adjust the charging and discharging mode according to the voltage difference between itself and the DC bus. When a voltage of the backup power supply 160 is greater than a voltage of the DC bus, the backup power supply 160 is discharged. When the voltage of the backup power supply 160 is less than the voltage of the DC bus, the backup power supply 160 is in a state of being charged. That is, a switching of the charging and discharging mode of the backup power supply 160 is automatically realized according to the voltage difference.

Then, S230 is executed: obtaining the available output power of the plurality of the input energy sources. The PCS module 110 obtains the available output power of the input energy source connected with the energy station system by means of communication. The input energy here includes the photovoltaic assembly 170, the backup power supply 160, and the charging pile (the AC charging pile 201 and/or the DC charging pile 202).

Then, S240 is executed: carrying out the energy distribution management based on the total power demand, the available output power of the plurality of input energy sources and the power supply priority of each input energy sources. Since the energy station system may access multiple input energy sources at the same time, when carrying out the energy distribution management, in order to reasonably use the input energy source to efficiently charge the access load and meet charging needs of users, a power supply priority of the input energy source needs to be considered.

When multiple input energy sources are connected, the load in the energy station may be powered according to the default power supply priority of the input energy source. The input energy source with a highest priority is given priority for the power supply. When the output power of the input energy source with the highest priority cannot meet the power demand of the current connected load, one or more other input energy sources are selected for the power supply according to a power supply priority order.

For example, a default power supply priority of the system may be the photovoltaic assembly > the DC charging pile > the AC charging pile > the backup power supply. If an output power of the photovoltaic assembly 170 can meet the power demand of the current access load, then the photovoltaic assembly 170 (the photovoltaic assembly 170 is always connected, and it is only affected by sunlight and a subsequent priority switching) may provide power. If the photovoltaic assembly 170 cannot meet the demand, it will be supplemented by other input energy source such as the DC charging piles 202 and/or the AC charging piles 201 and/or the backup power supply 160.

When multiple input energy sources are connected, the power supply priority of each input energy source may also be adjusted according to user's input instructions on a mobile terminal or a cloud, and of course, the power supply priority of the input energy source may also be automatically adjusted according to preset rules in the system.

In an embodiment, the power supply priority of the input energy source may be automatically adjusted according to an access situation of the charging pile, and when the charging pile is accessed, a priority of the charging pile is automatically adjusted to the highest. For example, when the DC charging pile 202 and/or AC charging pile 201 are connected, the default power supply priority is switched to the DC charging pile and/or the AC charging pile > the photovoltaic assembly > the backup power supply.

In another embodiment, the power supply priority of the charging pile is automatically adjusted according to a peak and valley hours of electricity consumption. For example, during peak hours, the default power supply priority is maintained, and during off-peak hours, the default power supply priority is switched to the DC charging pile and/or the AC charging pile > the photovoltaic assembly > the backup power supply.

In another embodiment, the power supply priority of each input energy source is automatically adjusted according to the output power of the photovoltaic assembly 170, and factors affecting the output power of the photovoltaic assembly 170 may be time period and weather conditions. In an actual application, the output power of the photovoltaic assembly 170 may be compared with the preset power threshold. When the output power of the photovoltaic assembly 170 is less than the preset power threshold, the power supply priority is adjusted, and when the output power of the photovoltaic assembly 170 is less than the preset power threshold, the default power supply priority may be maintained.

For example, on one hand, the output power of the photovoltaic assembly 170 will be affected by the time period. For example, in morning and evening, a light intensity is weak, and the output power of the photovoltaic assembly 170 may be less than the preset power threshold, so that the priority needs to be switched. In addition, the output power of the photovoltaic assembly 170 is zero in a night without light, and the priority also needs to be switched. It means that when there is the DC charging pile 202 and / or the AC charging pile 201 is connected, the default power supply priority is switched to the DC charging pile and/or the AC charging pile > the photovoltaic assembly > the backup power supply during periods of weak or no sunlight when the output power of the photovoltaic assembly 170 is less than the preset power threshold.

For example, on the other hand, the output power of the photovoltaic assembly 170 will be affected by the weather conditions. For example, in a time period except in the morning, evening and night, it will also be affected by the weather conditions in an outdoor operation area, which means that a generation of cloudy or rainy days will cause the output power of the photovoltaic assembly 170 to be less than the preset power threshold, so that priority needs to be switched. When the DC charging pile 202 and/or AC charging pile 201 are connected, on cloudy or rainy days when the output power of the photovoltaic assembly 170 is less than the preset power threshold, the default power supply priority is switched to the DC charging pile and/or the AC charging pile > the photovoltaic assembly > the backup power supply. On a sunny day and the output power of the photovoltaic assembly 170 is greater than the preset power threshold, the default power supply priority is adopted.

The power supply priority of each input energy source may be adjusted in a variety of ways, so that different input energy sources can be reasonably used to supply power to the connected load and improve the charging efficiency.

In the above embodiment, a time threshold may also be set in a process of switching priority, and the switching will be carried out only when the set time threshold is satisfied, so as to avoid a frequent switching problem caused by an immediate response when detecting the output power of the photovoltaic assembly 170 is less than the preset power threshold, thereby improving a stability of the system.

In the above embodiment, it may also be compared with the preset power threshold by calculating an average value of the output power within a preset time period. When the average value of the output power of the photovoltaic assembly 170 in the preset time period is less than the preset power threshold, the switching will be carried out, so that the system stability may be further enhanced.

Finally, S250 is executed: controlling the output module to supply power to each access load based on the energy distribution result.

After the PCS module 110 carries out energy distribution management based on the total power demand, the available output power of the plurality of input energy sources and the power supply priority of each input energy source, the AC output module 150 may be controlled to supply power to the connected AC load based on the energy distribution result according to the input energy supply priority order, and/or the DC output module 140 may be controlled to supply power to the connected DC load until the input load is fully charged. Then the charging process is over.

When the actual required power demand is greater than an available output power of an external input energy source, it may be supplemented by the backup power supply 160, thereby reducing an imbalance between the external input energy source and the actual required power demand to a certain proportion.

During a process of supplying power to the load, a new load may be accessed at any time, so in the process of supplying power to the load, it is necessary to detect whether a new load is connected with the output module, and when a new load is detected to be connected with the output module, it needs to return an operation of receiving the power demand of the load upload, which means the S210, and then reexecute S210 to S250.

Please refer to FIG. 10 and FIG. 11. When the access load has the charging priority, then during the energy distribution management, the energy distribution management needs to be carried out based on a total power demand, the available output power of the multiple input energy sources and the charging priority of the load. Then the output module is controlled based on the energy distribution result to supply power to each access load according to the charging priority of the load, so that the input energy source can be reasonably utilized, and diversified charging services are provided to meet different power demands.

Of course, in order to rational utilize multiple input energy sources to efficiently charge the access load, it is necessary to consider the power supply priority of each input energy source when carrying out the energy distribution management, which means carrying out the energy distribution management based on the total power demand, the available output power of the plurality of input energy sources, the power supply priority of each input energy sources and the charging priority of the load.

Please refer to FIG. 11. In order to achieve diversified charging demands, the charging priority of the access load may set to be adjustable. When the charging priority of the input load is adjustable, before carrying out the energy distribution management, it is necessary to check whether the charging priority is adjusted. When the charging priority is not adjusted, the PCS module 110 carries out the energy distribution management based on the total power demand required by the load, the available output power of the plurality of the input energy sources and the default charging priority, and then supplies power to each access load according to the default charging priority. While when the charging priority is adjusted, the PCS module 110 carries out the energy distribution management based on the total power demand required by the load, the available output power of the plurality of the input energy sources and an updated charging priority, and then supplies power to each access load according to the updated charging priority.

From the above, it may be seen that the energy distribution method of the energy station in this embodiment receives the power demand uploaded by the load connected with the output module. The total power demand is obtained according to the power demand uploaded by the received load. The available output power of the plurality of the input energy sources is obtained. The energy distribution management is carried out based on the total power demand, the plurality of the input energy sources and the power supply priority of each input energy source. The output module is controlled to supply power to each access load based on the energy distribution results. In the energy distribution, the total power demand of the access load, the output power of the plurality of the input energy sources and the power supply priority of each input energy source are considered, so that the input energy source can be reasonably used to charge the access load efficiently and meet charging needs of users.

FIG. 12 is a functional module view of the energy distribution system corresponding to the energy distribution method of the energy station described above. Please refer to FIG. 12. The energy distribution system 80 includes a power demand receiving unit 81, a power demand summarizing unit 82, an output power obtaining unit 83, an energy distribution management unit 84 and a power supply control unit 85.

In an embodiment, the power demand receiving unit 81 is used to receive the power demand uploaded by the load connected with the output module. The power demand summarizing unit 82 is used to obtain the total power demand according to the power demand uploaded by the received load. The output power obtaining unit 83 is used to obtain the available output power of the plurality of the input energy sources. The energy distribution management unit 84 is used to carry out the energy distribution management based on the total power demand, the plurality of the input energy sources and the power supply priority of each input energy source. The power supply control unit 85 is used to control the output module to supply power to each access load based on the energy distribution results.

It should be noted that the energy distribution system of the embodiment is a device corresponding to the energy distribution method mentioned above, and a functional module of the energy distribution system or the corresponding operations in the energy distribution method respectively. The energy distribution system of the embodiment may be implemented in conjunction with the energy distribution method. Correspondingly, relevant technical details mentioned in the energy distribution system of the embodiment may also be applied in the energy distribution method.

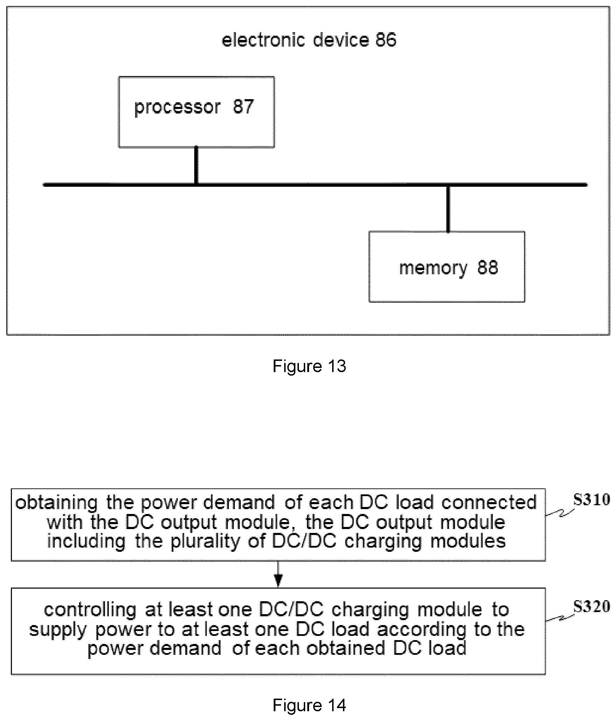

Please refer to FIG. 13. FIG. 13 is a schematic structural view of an electronic device which may realize the energy distribution method of the energy station of the disclosure.

The electronic device 86 may include a memory 88, a processor 87 and a bus, and may further include a computer program stored in memory 88 and that may run on the processor 87, such as an energy distribution program.

In an embodiment, the memory 88 includes at least one type of readable storage medium, and the readable storage medium includes a flash memory, a mobile hard drive, a multimedia card, a card-type memory (e.g., SD or DX memory, etc.), a magnetic memory, a magnetic disk, an optical disk, etc. The memory 88 may be an internal storage unit of the electronic device 86 in some embodiments, such as the mobile hard drive of the electronic device 86. The memory 88 may also be an external storage device of the electronic device 86 in other embodiments, such as a plug-in mobile hard drive, a smart media card (SMC), a secure digital (SD) card, a flash memory card, etc., which is equipped with the electronic device 86. Further, the memory 88 may further include both internal and external storage units of the electronic devices 86. The memory 88 may be used not only for storing application software and various data installed in the electronic device 86, such as a code for energy distribution, but also for temporarily storing data that has been output or will be output.

The processor 87 may include an integrated circuit in some embodiments. For example, it may include a single packaged integrated circuit, or it may include a plurality of integrated circuits packaged with a same function or different functions, which includes one or more central processing units (CPU), microprocessors, digital processing chips, graphics processors and a combination of various control chips. The processor 87 is a control unit of the electronic device 86, and uses various ports and circuits to connect various components of the entire electronic device 86, and performs various functions and processes data of the electronic device 86 by running or executing programs or modules (such as the energy distribution programs and the like) stored in the memory 88, and calling data stored in the memory 88.

The processor 87 executes an operation system of the electronic device 86 and installs the various application programs. The processor 87 executes the application program to implement the operations in the above energy distribution method, such as the operations shown in FIG. 9.

In an embodiment, the computer program may be divided into one or more modules, one or more modules are stored in the memory 88 and executed by the processor 87 to complete the disclosure. One or more modules may be a series of computer program command segments capable of performing a specific function, which is used to describe an executing process of the computer program in the electronic device 86. For example, the computer program may be divided into the power demand receiving unit 81, the power demand summarizing unit 82, the output power obtaining unit 83, the energy distribution management unit 84 and the power supply control unit 85.

In order to solve a problem that the charging port of the conventional energy station can usually only provide a fixed charging power and cannot meet a charging demand of the DC load with different power demands, the embodiment further discloses a DC charging method of the energy station as shown in FIG. 14. Please refer to FIG. 14. The DC charging method of the energy station includes:
S310: obtaining a power demand of each DC load connected with the DC output module, the DC output module including a plurality of DC/DC charging modules;
S320: controlling at least one DC/DC charging module to supply power to at least one DC load according to the power demand of each obtained DC load.

**A** DC charging scheme of the energy station in the disclosure will be described in detail in conjunction with FIG. 2 through FIG. 5 and FIG. 14 below.

Firstly, S310 is executed: obtaining the power demand of each DC load connected with the DC output module, the DC output module including the plurality of DC/DC charging modules.

In this embodiment, the DC load includes one or a combination of the backup power supply 160, the garden tool, the external battery pack in the charging cabinet 300 or the electric vehicle. When the DC load is connected with the DC output module 140, its power demand is uploaded to the PCS module 110.

Depending on the type of the DC load, a way the load uploads power demands is also different, which will be explained in detail below.

When the battery pack is inserted into the charging cabinet 300, the power demand of the battery pack in the charging cabinet 300 is sent to the PDU module 143, and uploaded to the PCS module 110 by the PDU module 143.

When the garden tool ZTR or electric vehicle is connected, its power demand will be uploaded to the PCS module 110 through a CAN bus passing through the charging gun.

Then, S320 is executed: controlling at least one DC/DC charging module to supply power to at least one DC load according to the power demand of each obtained DC load.

In an embodiment, the PCS module 110 controls some or all of the plurality of the DC/DC charging modules to be connected in parallel according to the power demand of each obtained DC load so as to supply power to each DC load. The PCS module 110 may output of different power by controlling the parallel number of DC/DC charging modules, and may not only concentrate power to fast charge the DC load, but also may match the DC loads with different power demands, so as to meet the charging demand of different DC loads.

Since each DC output module includes at least one DC/DC charging module and at least one PDU module 143. After the PCS module 110 receives the unloaded power demand of the DC load, different numbers of DC/DC charging modules may be controlled to be connected in parallel through the PDU module 143 to supply power to the DC load connected with the PDU module 143.

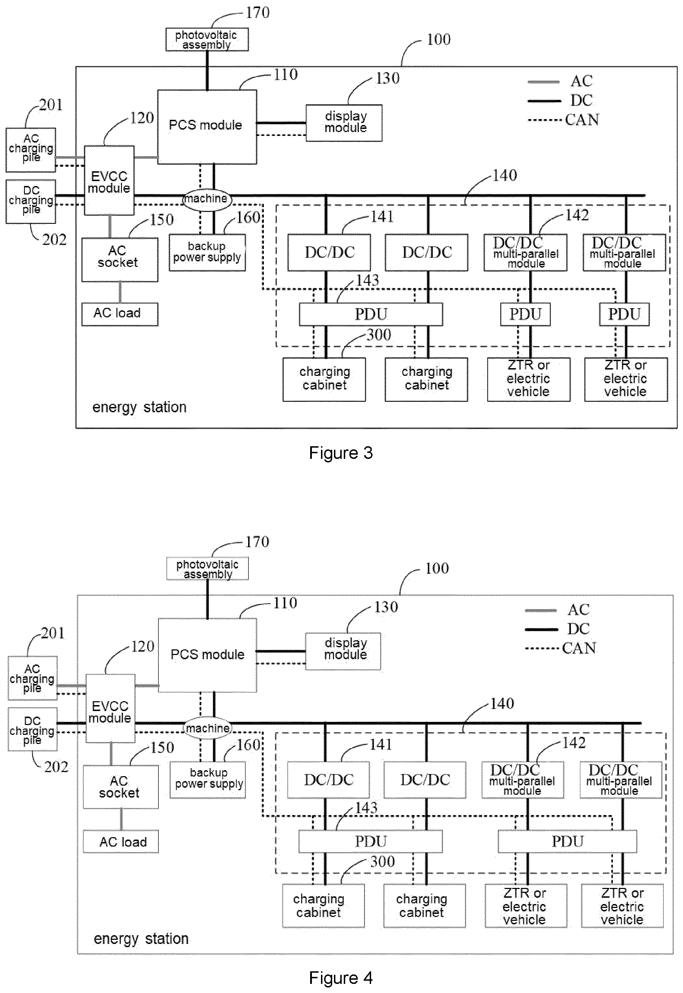

For example, please refer to FIG. 2 and FIG. 4. The PCS module 110 may select at least one DC/DC charging module to supply power to the charging cabinet 300 through the PDU module responsible for the charging cabinet 300, and when the plurality of DC/DC charging modules are selected to supply power to one charging cabinet 300 in parallel, a fast charging may be realized, or a charging of a battery pack with a higher power demand is realized.

For example, please refer to FIG. 3 and FIG. 4. The PCS module may select at least one DC/DC charging module to supply power to the garden tool ZTR or the electric vehicle through the PDU module 143 responsible for the garden tool ZTR or the electric vehicle, and when the plurality of DC/DC charging modules are selected to supply power to one garden tool ZTR or the electric vehicle in parallel, the fast charging may be realized, or a charging of a ZTR or an electric vehicle with a higher power demand is realized.

In order to provide a variety of charging strategies, the charging priority may be set for the connected DC load, and the charging priority may be adjusted. When the connected load is provided with the charging priority, the PCS module may control some or all of the DC/DC charging modules to be connected in parallel according to the power demand of each obtained DC load and the charging priority of the DC load so as to supply power to each DC load.

An adjustment of the charging priority of the DC load may not only be adjusted according to a command input by the user on a mobile terminal, the cloud or a charging device terminal (for example, the charging cabinet 300 or the garden tool ZTR or the electric vehicle is provided with a priority adjustment button), but also be automatically adjusted according to the power demand of the connected DC load and a preset rule.

In an embodiment, according to the power demand of the connected DC load, the charging priority of the DC load is automatically adjusted according to the preset rule, for example adjusting the charging priority of the DC load from more to less or from less to more according to a number of accessed DC loads with different power demands.

When the charging priority of the connected load is adjustable and the DC load is charged, it needs to check the charging priority first. If the charging priority is not adjusted, the charging will be carried out according to the default charging priority order of the system. When the charging priority is adjusted, the PCS module may control some or all of the DC/DC charging modules to be connected in parallel according to the power demand of each obtained DC load and the charging priority of the DC load so as to supply power to each DC load.

In an embodiment, the PCS module 110 controls some or all of the plurality of the DC/DC charging modules to be connected in parallel according to the obtained power demand of each DC load and the charging priority of the DC load, so that when supplying power for each DC load, the power demand of each DC load needs to be summarized to obtain the total power demand, and according to the total power demand, an energy distribution is carried out based on the available output power of the DC input source and the default or adjusted charging priority of the DC load. Then, based on the energy distribution result, the DC load is charged according to the charging priority of the default or adjusted DC load.

In an embodiment, for the garden tool and electric vehicle that share the same charging gun for charging, the DC charging method of the energy station further includes: obtaining the load type of the load that is connected with the DC output module through the communication terminal of the charging gun, when the load type is the garden tool, extracting the power demand corresponding to the garden tool, when the load type is the electric vehicle, extracting the power demand corresponding to the electric vehicle; according to the extracted power demand of the garden tool or the electric vehicle, adjusting the number of the DC/DC charging modules to be connected in parallel to match the power demands of the garden tools or the electric vehicles.

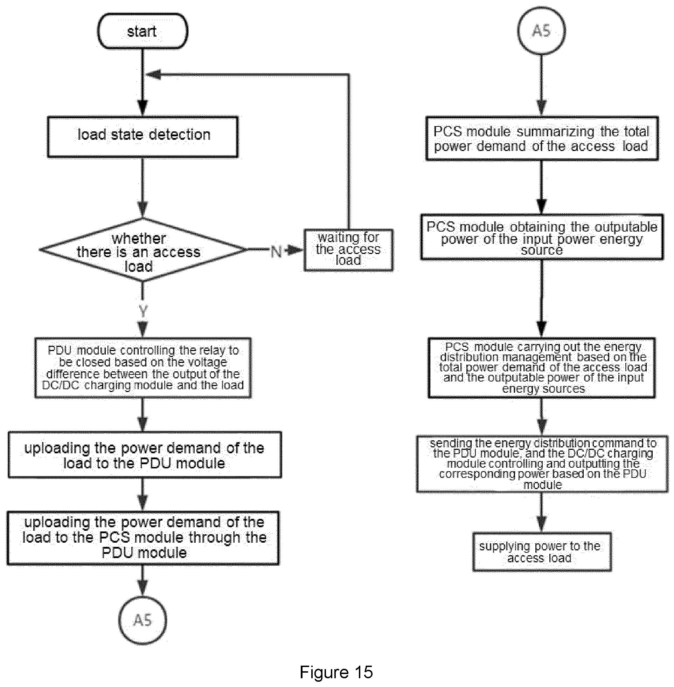

FIG. 15 is a control logic view of a DC charging process of the energy station of the disclosure. Please refer to FIG. 15. An entire control logic is as follows:
starting the process;
carrying out a load state detection to detect whether there is the DC load connected with the DC output module 140;
when the DC load is connected with the DC output module 140, the PDU module 143 of the DC output module 140 controlling a relay of the DC/DC charging module to the DC load circuit to be closed based on a voltage difference between the DC/DC charging module and the DC load (the voltage difference may be obtained through communication or AD sampling);
uploading the power demand of the DC load to the PCS module 110 through the PDU module 143;
the PCS module 110 summarizing the power demand;
the PCS module 110 obtaining the available output power of the input energy sources;
the PCS module 110 carrying out the energy distribution management based on the total power demand of the currently connected DC load and the available output power of the input energy source;
the PCS module 110 sending an energy distribution command to the PDU module 143, and the DC/DC charging module controlling and outputting the corresponding power based on the PDU module 143 to charge the connected DC load.

The following will explain the control logic when charging the battery pack of the charging cabinet 300, the garden tool ZTR or the electric vehicle.

When charging the battery pack of the charging cabinet 300 and the battery pack of at least one specification is put into the charging cabinet 300 and connected with an output end of the first DC output module, the PDU module 143 can control the relay of the DC/DC charging module to the DC load circuit to be closed based on the voltage difference between the DC/DC charging module and the battery pack (the voltage difference may be obtained by communication or AD sampling). A control board PMU of the charging cabinet 300 will send the power demand of the battery pack upwards to a control unit MCU of the PDU module 143, the control unit MCU uploads it to the PCS module 110, and the PCS module 110 summarizes the power demand. The PCS module 110 sends the energy distribution command to the control unit MCU of the PDU module 143 through a CAN bus (of course may also through an SPI bus, an I2C bus, a 485 bus, a PCI bus, an ISA bus, an EISA bus, a VESA bus and other buses or wireless methods) according to a power output capacity of the input energy source (such as the charging pile and/or the photovoltaic module and/or the backup power supply) and the power demand of the battery pack. After receiving the command, the control unit MCU of the PDU module 143 will control the DC /DC charging module to output corresponding power through the 485 bus (of course, may also through the SPI bus, the I2C bus, the CAN bus, the PCI bus, the ISA bus, the EISA bus, the VESA bus and other buses or wireless methods).

When charging the garden tool or the electric vehicle and the garden tool ZTR or the electric vehicle is connected with an output end (charging gun) of the second DC output module, the PDU module 143 can control the relay of the DC/DC charging module to the DC load circuit to be closed based on the voltage difference between the DC/DC charging module and the garden tool ZTR or the electric vehicle (the voltage difference may be obtained by communication or AD sampling). The garden tool ZTR or the electric vehicle will send its own power demand upwards to the control unit MCU of the PDU module 143, the control unit MCU uploads it to the PCS module 110, and the PCS module 110 summarizes the power demand. The PCS module 110 sends the energy distribution command to the control unit MCU of the PDU module 143 through the CAN bus (of course may also through the SPI bus, the I2C bus, the 485 bus, the PCI bus, the ISA bus, the EISA bus, the VESA bus and other buses or wireless methods) according to the power output capacity of the input energy source (such as the charging pile and/or the photovoltaic module and/or the backup power supply) and the power demand of the garden tool ZTR or the electric vehicle. After receiving the command, the control unit MCU of the PDU module 143 will control the DC /DC charging module to output corresponding power through the 485 bus (of course, may also through the SPI bus, the I2C bus, the CAN bus, the PCI bus, the ISA bus, the EISA bus, the VESA bus and other buses or wireless methods). It should be noted that the power demand of the garden tool ZTR and the electric vehicle may be uploaded via two CAN buses or one CAN bus.

The DC charging method and system of the energy station of the disclosure obtains the power demands of each DC load connected with the DC output module. The DC output module includes the plurality of the DC/DC charging modules. Some or all of the plurality of the DC/DC charging modules are controlled to be connected in parallel according to the power demand of each obtained DC load, so as to supply power to each DC load. When charging the DC loads, the parallel connection number of DC/DC charging modules in the DC output module can be controlled according to the power demand of each DC load to meet the charging demands of different DC loads.

The DC charging method and system of the energy station of the disclosure can control some or all of the DC/DC charging modules to be connected in parallel according to the power demand of each obtained DC load and the charging priority of the DC load so as to supply power to each DC load and provide varieties of charging strategies.

For the garden tool and electric vehicle that share the same charging gun for charging, the DC charging method and system of the energy station of the disclosure can obtain the load type of the load that is connected with the DC output module through the communication terminal of the charging gun, and adjust the number of parallel connections of the DC/DC charging modules according to the correspondingly extracted power demand of the load type to match the power demand of the garden tool or the electric vehicle.

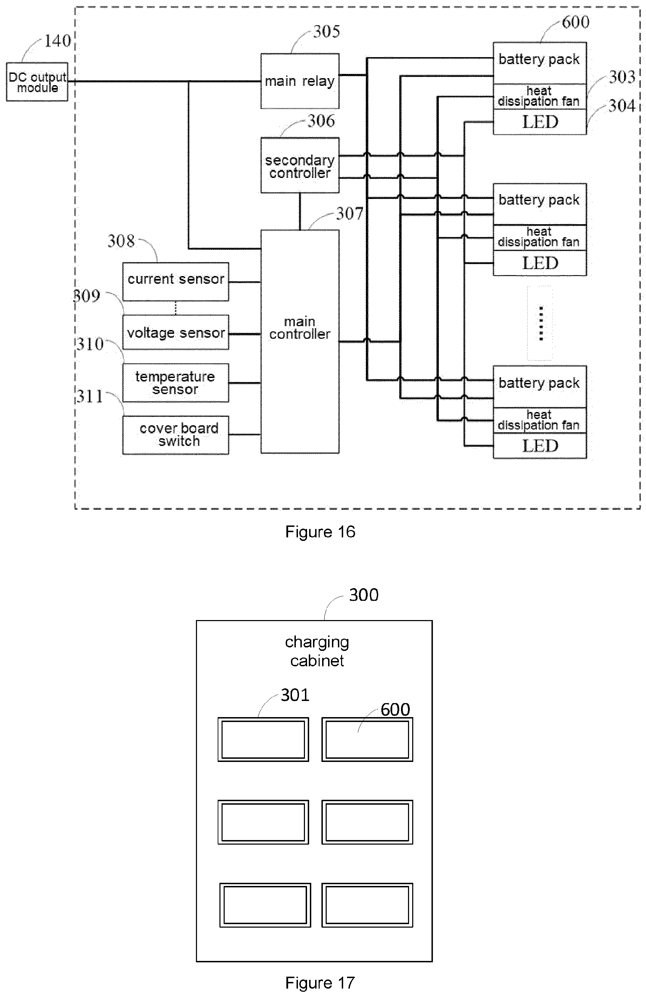

The conventional charging cabinet lacks the measures to control and manage the temperature and heat dissipation of the rechargeable battery pack in the battery compartment, which results in the battery pack being affected by the ambient temperature or a quality of the charger during a charging process. A continuous increase in the temperature of the rechargeable battery pack will not only shorten a life of the rechargeable battery pack, but also may cause safety hazards such as fire. Therefore, the embodiment provides a charging cabinet system. In an embodiment, FIG. 16 is a functional block view of the charging cabinet system.

Please refer to FIG. 16. The charging cabinet system includes a charging cabinet body, a heat dissipation fan 303, the battery pack 600, a charging cabinet controller and a main relay 305.

In this embodiment, as a main component of the whole charging cabinet, the charging cabinet body may be fixedly mounted in a certain space, and may also be made into a mobile type, which is used for mounting and carrying each assembly in the charging cabinet. A plurality of battery compartments 301 is arranged on the charging cabinet body, and each battery compartment 301 is used for accommodating one battery pack 600 and charging the battery pack 600. Please refer to FIG. 17, a number of battery compartments 301 may be reasonably set according to a size of the battery pack 600, a volume of the charging cabinet and various factors such as heat dissipation, which is not limited here. For example, the number of battery compartments 301 may be set to be from 2 to 15, for example, 6.

Each battery compartment 301 is provided with a charging terminal and a communication terminal, and the charging terminal of the battery compartment 301 is connected with the DC output module 140 of the energy station system by the main relay 305, and the communication terminal of the battery compartment 301 is connected with the main controller 307. When the battery pack 600 is inserted into the battery compartment 301, the charging terminal and the communication terminal of the battery compartment 301 are connected with a charging terminal and a communication terminal of the battery pack 600 respectively.

The charging cabinet system includes a plurality of heat dissipation fans 303, each battery compartment 301 is provided with one heat dissipation fan 303, and the heat dissipation fan 303 is used for heat dissipation and cooling the battery pack 600 that is being charged in the battery compartment 301. Through arranging the heat dissipation fan 303 in each battery compartment 301, the rechargeable battery pack 600 in the battery compartment 301 can be independently cooled, which realizes a differentiated control, can also save electricity, and improve electric energy utilization efficiency.

The charging cabinet system includes the plurality of battery packs 600. Each battery pack 600 is inserted in one battery compartment 301, the plurality of battery packs 600 are arranged in parallel, and the plurality of battery packs 600 are connected with DC output modules 140 respectively through the main relay 305, so that the plurality of battery packs 600 may be charged simultaneously. It should be noted that, the plurality of battery packs 600 in the same charging cabinet belong to the same specification and the model, and the battery packs with different models may be charged by arranging a plurality of charging cabinets 300.

The charging cabinet controller is respectively connected with the DC output module 140, the battery pack 600 and the heat dissipation fan 303 of the energy station system. The charging cabinet controller is used for obtaining relevant information of the battery pack inserted into the battery compartment 301, and utilizes a charging power supply provided by the DC output module to supply power to the heat dissipation fan 303 to drive the heat dissipation fan 303 to work. The relevant information of the battery pack 600 includes information such as battery specification and model, battery power, fault state, power demand, etc.

Please refer to FIG. 16. In an embodiment, the charging cabinet controller includes a main controller 307 and a secondary controller 306. The main controller 307 is connected with the DC output module 140 and the battery pack 600 respectively, and the main controller 307 is used for obtaining the relevant information of the battery pack 600, and converting the charging power supply. The secondary controller 306 is connected with the main controller 307 and the heat dissipation fan 303 respectively, the secondary controller 306 utilizes the converted charging power supply to supply power to the heat dissipation fan 303 to drive the cooling fan 303 to work. The main controller 307 controls an on-off of a charging circuit through the main relay 305 to charge the battery pack 600 in the battery compartment 301.

The main relay 305 is arranged on the charging circuit that the battery pack 600 is connected with the DC output module 140, and the main relay 305 controls the on-off of the charging circuit through the main relay 305 to charge the battery pack 600 in each battery compartment 301.

It may be understood that on each parallel branch between the main relay 305 and the battery pack 600, a branch relay may also be arranged separately, and an on-off state of the branch relay may be controlled respectively through the charging cabinet controller, so that the battery pack 600 of the corresponding branch may be connected or kicked out of the charging circuit.

Please refer to FIG. 16. In this embodiment, in order to detect, obtain and upload the charging current of the battery pack 600 in each battery compartment 301 to the main controller 307, the charging cabinet system further includes a current sensor 308. The current sensor 308 is connected with the main controller 307. In an embodiment, the main controller 307 may use the obtained charging current to carry out an overcurrent determination, and when an overcurrent occurs, the corresponding battery pack 600 is cut out to avoid causing a damage to the battery pack 600. For example, there are a plurality of current sensors 308, and each battery compartment 301 is provided with one current sensor 308.

Please refer to FIG. 16. In this embodiment, in order to detect and upload the voltage of the battery pack 600 in each battery compartment 301 to the main controller 307, the charging cabinet system further includes a voltage sensor 309. The voltage sensor 309 is connected with the main controller 307. The main controller 307 may use the obtained voltage of the battery pack 600 to carry out a charging package selection and fault detection. For example, there are a plurality of voltage sensors 309, and each battery compartment 301 is provided with one voltage sensor 309.

Please refer to FIG. 16. In this embodiment, in order to detect and upload a temperature of the battery pack 600 in each battery compartment 301 to the main controller 307, provide a basis for a control of the heat dissipation fan 303 and the charging current, avoid the temperature of the battery pack 600 being too high and affect the life of the battery pack 600, which may cause potential safety hazards such as fire and explosion, the charging cabinet system further includes a temperature sensor 310. The temperature sensor 310 is connected with the main controller 307. For example, there are a plurality of temperature sensors 310, and each battery compartment 301 is provided with one temperature sensor 310.

Please refer to FIG. 16. In this embodiment, the charging cabinet system further includes a plurality of display units 304, and each battery compartment 301 is provided with one display unit 304. The secondary controller 306 is connected with the display unit 304, utilizes the converted charging power supply to supply power to the display unit 304, and controls the display unit 304 to indicate a current charging state of the charging battery pack 600. It is understandable that the display unit 304 and the heat dissipation fan 303 may share one secondary controller 306, and may also be controlled by different secondary controllers 306 respectively.

Please refer to FIG. 16. In this embodiment, the charging cabinet system further includes a cover switch 311, the cover switch 311 is connected with the main controller 307, and the main controller 307 may obtain a signal of the cover switch 311 to monitor a state of the cover.

In an embodiment, when the cover is opened, the battery pack 600 in the charging cabinet is suspended for charging, and when the cover is closed, the battery pack 600 in the charging cabinet is charged normally, so as to avoid a potential safety hazard caused by taking or inserting the battery pack 600 during the charging process.

Since the cover is opened or closed abnormally, it will affect the heat dissipation of the battery pack, the charging cabinet may be configured with a reminder function. In an embodiment, the reminder function may be reminded through an indicator light and/or a sound module (buzzer and/or speaker). When the cover is opened or closed abnormally, the indicator light and/or sound module triggers a light and/or sound to remind the user to check and close the cover to ensure the heat dissipation effect in the charging cabinet.

When the charging cabinet system of the embodiment charges the plurality of battery packs 600 and detects that the battery pack 600 is inserted into the battery compartment 301, the charging cabinet controller (the main controller 307 and the secondary controller 306) starts, enters the charging mode, opens the relay of a corresponding channel of the selected battery pack 600, connects the selected battery pack 600 to the charging circuit for charging, controls the plurality of heat dissipation fans 303 through the charging cabinet controller to independently cool down each battery pack 600 during the charging process, realizes a differentiated heat dissipation and cooling, and enables the temperature of each battery pack 600 to be controlled at a temperature suitable for charging, which avoids a high temperature of the battery pack 600 affecting the life of the battery pack 600, as well as the potential safety hazards such as fire and explosion.

The following describes the charging logic for charging multiple battery packs in the charging cabinet 300. After the PDU module 143 of the charging cabinet 300 and the DC output module 140 is connected, checking whether the battery pack 600 is inserted into the battery compartment 301, when the battery pack 600 is detected to be inserted into the battery compartment 301, the charging cabinet controller (the main controller 307 and the secondary controller 306) starting and entering the charging mode. According to a preset charging strategy, first executing an initial package selection strategy of power-on, opening the relay of the corresponding channel of the selected battery pack 600, and connecting the selected battery pack 600 to the charging circuit e for charging. In the charging process, it further needs to determine whether the battery pack 600 of charging has abnormality. When there is an abnormality, kicking out the abnormal battery pack 600, and if no abnormality occurs, executing a charging process package selection strategy, and charging the re-selected battery pack 600 until all the battery packs 600 are charged and switched out.

After selecting a new battery pack 600 by using the initial package selection strategy or the charging process package selection strategy, it is necessary to determine whether the selected battery pack 600 meets a switch-in condition. When a preset switch-in condition is satisfied, the selected battery pack 600 is switched into the system for charging.

And in the charging process, the current sensor 308 is further required to detect the charging current. When the charging current is too large, the corresponding battery pack 600 is switched out of the system to protect the battery pack 600.

In the charging process, the temperature sensor 310 may be used to detect the temperature of the rechargeable battery pack 600, and a switch-out condition is set according to the temperature of the battery pack.

The following describes two charging strategies for controlling the input energy source to supply power to the battery pack:

### (1) Conventional charging strategy:

**carrying out the initial package selection:** taking a lowest value of a voltage of all battery packs as a first reference voltage; selecting a battery pack with a battery pack voltage higher than the first reference voltage and a voltage difference between the battery pack voltage and the first reference voltage being less than the first preset threshold from all battery packs, and charging the selected battery pack. In this way, the voltage difference between the selected battery packs may be small, and a problem of excessive charging current caused by an excessive voltage difference may be avoided.
**carrying out a charging process package selection,** and taking an average battery pack voltage of the battery pack being charged as a second reference voltage during the charging process; selecting a battery pack with a voltage difference between the battery pack voltage and the second reference voltage being greater than a second preset threshold and less than the first preset threshold from all battery packs, and charging the selected battery pack. In this way, the voltage difference between the selected battery packs may be small, and the problem of excessive charging current caused by the excessive voltage difference may be avoided.
**charging strategy:** cycling through the charging process package selection until all battery packs complete a constant current charging, then charging at a constant voltage together, setting a fully charged mark, and cutting out fully charged packs.

After the fully charged packet is cut out, the initial packet selection strategy is restarted.

When a charging platform voltage is between 12V and 80V, the first preset threshold is between 0.1V and 2V, for example, 0.2V, 0.4V, 0.6V, 0.8V, 1.0V, 1.2V, 1.4V, 1.6V, and a second preset threshold is between 0.05V and 1V, for example, 0.1V, 0.2V, 0.3V, 0.4V, 0.5V, 0.6V, 0.7V, 0.8V. It should be noted that, in a practical application, values of the first preset threshold and the second preset threshold may be reasonably selected according to the specifications of the battery pack, the charging platform voltages and other factors.

### (2) fast package charging strategy:

**carrying out the initial package selection:** taking a second-highest value of the battery pack voltage of all the battery packs as a third reference voltage; selecting a battery pack with a battery pack voltage higher than or equal to the third reference voltage and a voltage difference between the battery pack voltage and the third reference voltage being less than a third preset threshold from all battery packs, and charging the selected battery pack. In the fast package charging strategy, a number of the battery packs selected during the initial package selection needs to be determined according to the output power of the DC output module and the power demand of the battery pack, and the output power of the DC output module needs to be greater than the power demand of the selected battery pack. For example, the number of battery packs selected may be 2, 3, 4, etc.
**carrying out a charging process package selection:** taking an average voltage of the battery pack being charged as a fourth reference voltage during the charging process; selecting a battery pack with a voltage difference between the battery pack voltage and the fourth reference voltage being greater than a third preset threshold and less than a fourth preset threshold from all battery packs, and charging the selected battery pack.
cycling through the charging process package selection until all battery packs complete a constant current charging, setting a fully charged mark, and cutting out fully charged packs.

After the fully charged packet is cut out, the initial packet selection strategy is restarted.

When a charging platform voltage is between 12V and 80V, the third preset threshold is between 0.1V and 2V, for example, 0.2V, 0.4V, 0.6V, 0.8V, 1.0V, 1.2V, 1.4V, 1.6V, and the fourth preset threshold is between 0.05V and 1V, for example, 0.1V, 0.2V, 0.3V, 0.4V, 0.5V, 0.6V, 0.7V, 0.8V. It should be noted that, in a practical application, values of the third preset threshold and the fourth preset threshold may be reasonably selected according to the specifications of the battery pack, the charging platform voltages and other factors.

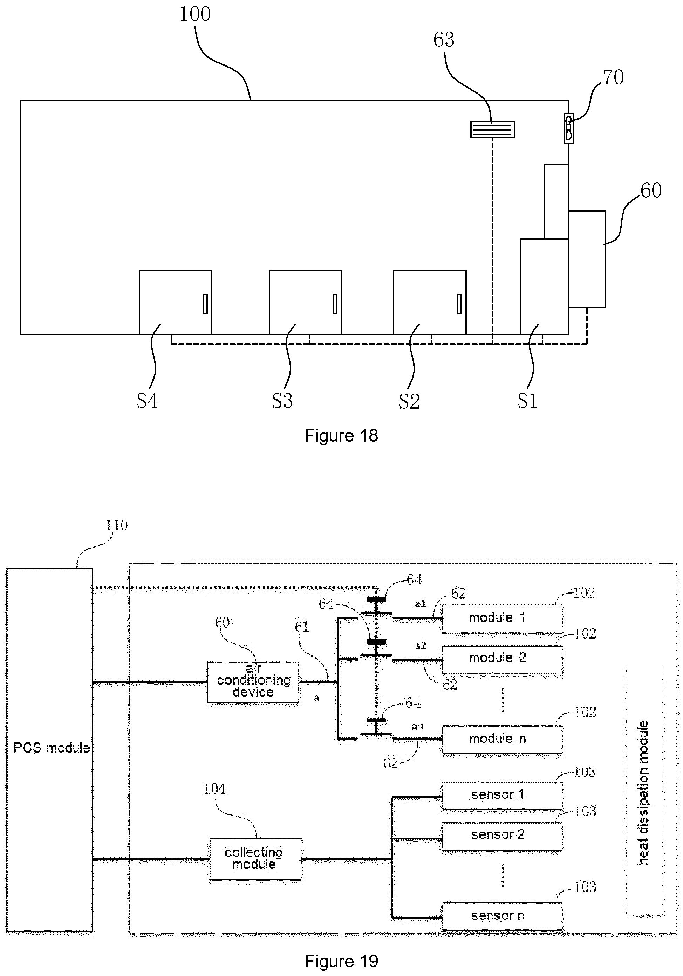

Please refer to FIG. 18. The disclosure further provides a heat dissipation system of the energy station. The energy station is a mobile energy station, and the energy station is provided with the charging cabinet, energy storage batteries and other devices inside. These devices generate heat in a process of use, and the heat dissipation system of the disclosure is used for dissipating heat for these devices.

Please refer to FIG. 18 through FIG. 20. The heat dissipation system of the energy station includes a carriage, an air conditioning device 60, a main air passage 61, a plurality of sub-air passages 62, a plurality of valves 64, a plurality of temperature sensors 103 and a heat dissipation controller of the energy station 100.

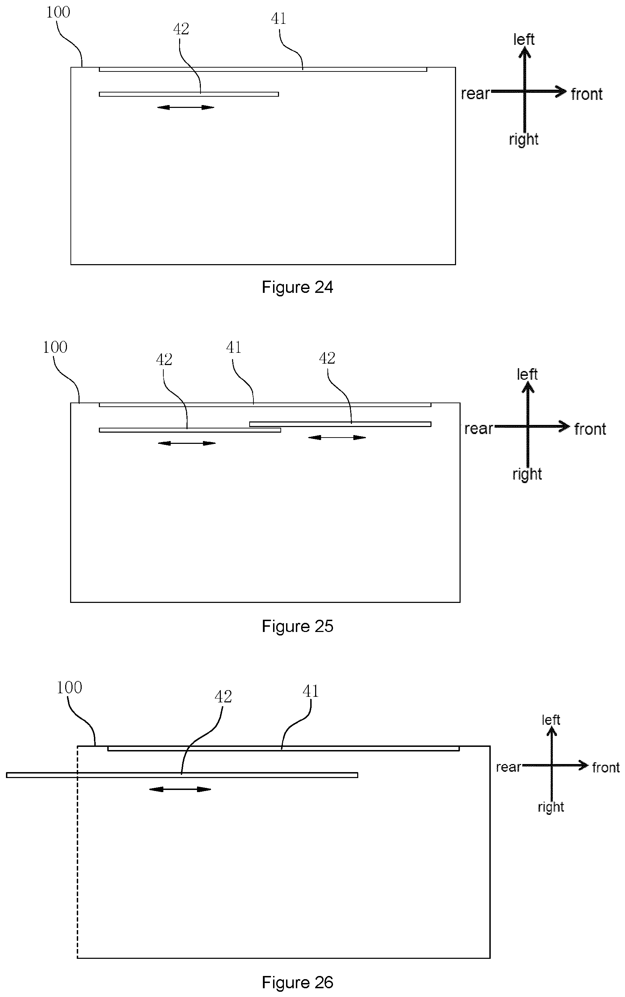

It is understandable that a heating element 102 in the energy station 100 may be arranged in different areas of the carriage, and may also be a plurality of heating elements 102 are centrally arranged in a certain area. For the heating element 102 in different areas, different air passages are used respectively for heat dissipation, and for the plurality of heating elements 102 that are centrally arranged in the certain area, the same air passage may be used for heat dissipation. For example, in an embodiment shown in FIG. 24, four heat dissipation areas S1, S2, S3, S4 are included. In an embodiment, S1 is a control cabinet, and the heating element 102 in the control cabinet may include the EVCC module, the PCS module for example. S2, S3, S4 are the charging cabinets, and the heating element 102 in the charging cabinet may include the battery pack, the DC/DC module, the PDU module, the external battery pack, a ZTR charger, and the ZTR for example. In some other embodiments, the heating element 102 may also be the photovoltaic assembly.

Please refer to FIG. 18. The air conditioning device 60 is mounted in the carriage of the energy station 100. It is understood that the air conditioning device 60 includes a compressor, a radiator and an evaporator. In an embodiment, the compressor and the radiator are mounted on an outside of the carriage, and the evaporator may be mounted on an inside of the carriage and may also be mounted on the outside of the carriage.

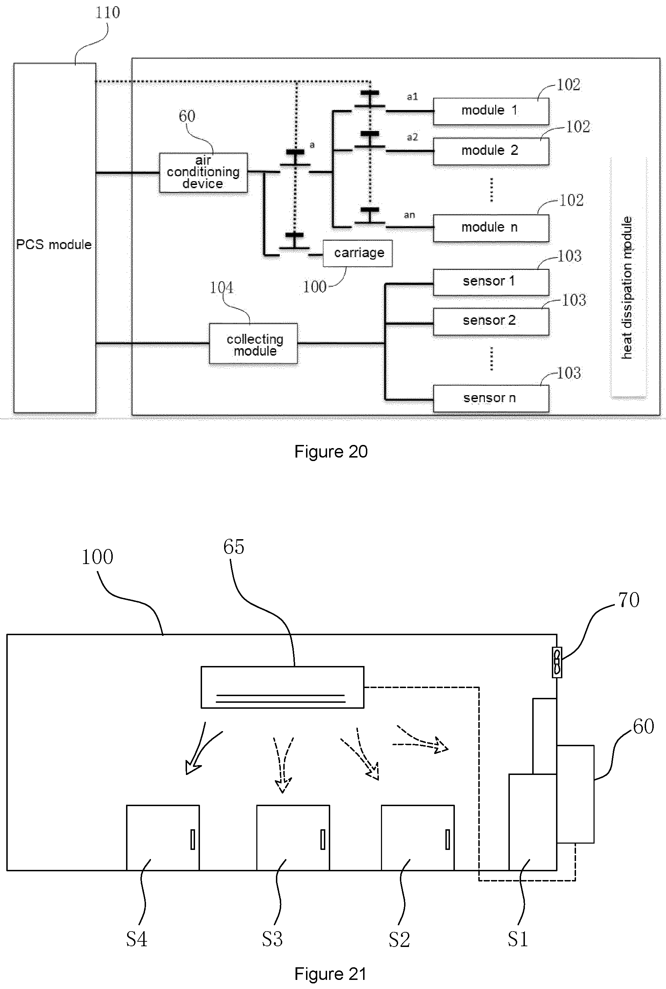

Please refer to FIG. 18. The main air passage 61 is communicated with an air outlet of the air conditioning device 60. It is understandable that the air outlet referred to herein refers to a cold air outlet, not the air outlet of the radiator of an air conditioner. Each sub-air passage 62 is communicated with the main air passage 61 respectively. An air outlet of each sub-air passage 62 is respectively arranged in a mounting zone of each heating element 102 in the carriage; for example, S1, S2, S3, S4 areas shown in FIG. 18. Please refer to FIG. 18 and FIG. 20, in a further embodiment, one or more of the sub-air passages 62 may also be directly communicated in an open space of the carriage. For example, the air outlet of the sub-air passage 62 is communicated with an exhaust grille 63 arranged on a side wall or a top of the carriage. The sub-air passage 62 dissipates heat to the open space in the carriage and provides a comfortable working environment for the user.

Please refer to FIG. 19 and FIG. 20. Each valve 64 is respectively arranged on each sub-air passage 62. Each temperature sensor 103 is respectively arranged in the mounting zone of each heating element 102. The heat dissipation controller is electrically connected with each valve 64 and each temperature sensor 103, and the heat dissipation controller is configured to control an opening or closing of each valve 64 according to a working temperature of each heating element 102 collected by each temperature sensor 103. In some other embodiments, for example, the heat dissipation controller may communicate with a remote terminal through a wireless communication module, and the remote terminal may manually control the opening and closing of each valve 64. The remote terminal may be a mobile terminal for example, and may also be a background terminal.

In an embodiment, for example the air conditioning device 60 may also communicate with heat dissipation controller through a wired connection or a wireless connection. The heat dissipation controller can control an operation power of the air conditioning device 60 according to an opening quantity of the sub-air passage 62. For example, when a number of sub-air passages 62 is larger, the operation power of the air conditioning device 60 may be improved, and when the number of sub-air passages 62 is less, the operation power of the air conditioning device 60 may be reduced, which avoids an unnecessary power loss and improves an electric energy utilization rate.

In an embodiment, for example, one or more sub-air passages 62 may be correspondingly arranged for each heating element 102, or the plurality of heating elements 102 located in a same communicating space share the same sub-air passage 62. In some other embodiments, the sub-air passage 62 may be further divided into a first-level sub-air passage 62 and a second-level sub-air passage 62. The first-level sub-air passage 62 is communicated with the main air passage 61, and a plurality of the second-level sub-air passages 62 are communicated with the first-level sub-air passage 62. The valve 64 is mounted on the first-level sub-air passage 62 and/or the second-level sub-air passage 62, each second-level sub-air passage 62 corresponds to one heating element 102, and all second-level sub-air passages 62 connected on the same first-level sub-air passage 62 may be opened/closed simultaneously or may be opened/closed independently.

In an embodiment, one or more temperature sensors 103 may be correspondingly arranged for each heating element 102, or the plurality of heating elements 102 located in a same communicating space share the same temperature sensor 103.

Please refer to FIG. 19 and FIG. 20. In an embodiment of the disclosure, the heat dissipation controller includes the PCS module 110 and a collecting module 104, each temperature sensor 103 is electrically connected with the collecting module 104, and the collecting module 104 is electrically connected with the PCS module 110.

Please refer to FIG. 18. In a further embodiment, an exhaust fan 70 is arranged on the carriage to keep the carriage ventilated, which avoids hot air gathering in the carriage. In addition, a mounting position of the exhaust fan 70 is further provided with a window that can be opened and closed, so that when an exhaust is required, this window is opened, and when the exhaust is not required, this window is closed. An opening and closing state of the window may be controlled by a manual operation, and the opening and closing state may also be switched by the heat dissipation controller.

Taking FIG. 19 and FIG. 20 as examples, a principle of the disclosure is explained. In FIG. 19, module 1 to module n is provided with the temperature sensor 103 (each module may be provided with one sensor, or one module may be configured with a plurality of sensors, or a plurality of modules may also be provided with one sensor). Temperature data that the temperature sensor 103 collects will be uploaded to the PCS module 110 through the collecting module, and the PCS module 110 determines whether there is a module temperature that exceeds a preset temperature value. If there is a temperature of the module exceeds the preset temperature value, the PCS module 110 controls the air conditioning device 60 to start. After the air conditioning device 60 starts, the valve 64 on the air passage corresponding to the module is controlled to open and a setting value of an air speed and temperature of the air conditioning device 60 is controlled according to information of an over-temperature module (For other temperatures that do not exceed the temperature range, the valve 64 is closed, so that no cold air is sent to modules that does not need to be cooled to avoid a wastage of energy), so that a utilization rate of energy may be improved to a great extent. In FIG. 20, two valves 64 are arranged on a general air passage a, one of the valves 64 controls a communication between the general air passage and the sub-air passage 62, and the other valve 64 controls a communication between the general air passage a and the open space inside the carriage. When the valve 64 between the general air passage a and the sub-air passage 62 is closed, and the valve 64 between the general air passage a and the open space inside the carriage is opened, and then air flow of the air conditioning device 60 flows to the open space inside the carriage. This working condition may be applied to a case when the operator packs up or maintains the electric tools in the energy station, so that the air may concentrate to provide cold air to the open space inside the carriage.

Please refer to FIG. 21. In another embodiment of the disclosure, the air conditioning device 60 may also not be provided with the sub-air passage 62, but the main air duct 61 is directly communicated with an air direction adjusting device 65 that is mounted in the carriage. The air direction adjusting device 65 may adjust an air outlet direction. When a certain area needs a cold zone, the heat dissipation controller directly controls the air direction adjusting device 65, and the cold air blows to this area. In an embodiment, for example, the air direction adjusting device 65 may include a universal turntable, and the air outlet of the main air passage 61 is directly mounted on the universal turntable. In other embodiments, the air direction adjusting device 65 may also be a plurality of guiding fan leaves arranged at the air outlet of the main air passage 61, each guiding fan leaf may swing along different directions, and an air outlet direction is controlled by adjusting a swing angle of each guiding fan leaf.

A targeted air passage switching of this disclosure may improve a utilization rate of electric energy, and the saved electric energy may also be used for other loads. In addition, the air conditioning device 60 not only has a refrigeration function, it may also make full use of a heating function in winter, and make full use of a dehumidification function in a season of high humidity. In addition, this air conditioning device 60 may also be configured with functions of an internal circulation function and an external circulation. In an embodiment, the internal circulation refers to an air circulation inside the vehicle, this function may enable a space that needs to be cooled or preheated to reach a specified temperature in a shorter period of time. Further, the internal circulation may block dirty gas, prevent smoke, peculiar smell, dust outside the energy station from entering the station, and ensure that the air in the station is clean and the device is clean. The outer circulation may supplement fresh air, so that the air in the station is convection. Further, the station may also be provided with an air quality sensor, and the air quality sensor is connected with the collecting module. Related parameters of air quality in the station are transmitted back to the PCS module 110 through the collecting module, and a working mode of the internal circulation and the external circulation is adjusted according to the air quality by the PCS module 110.

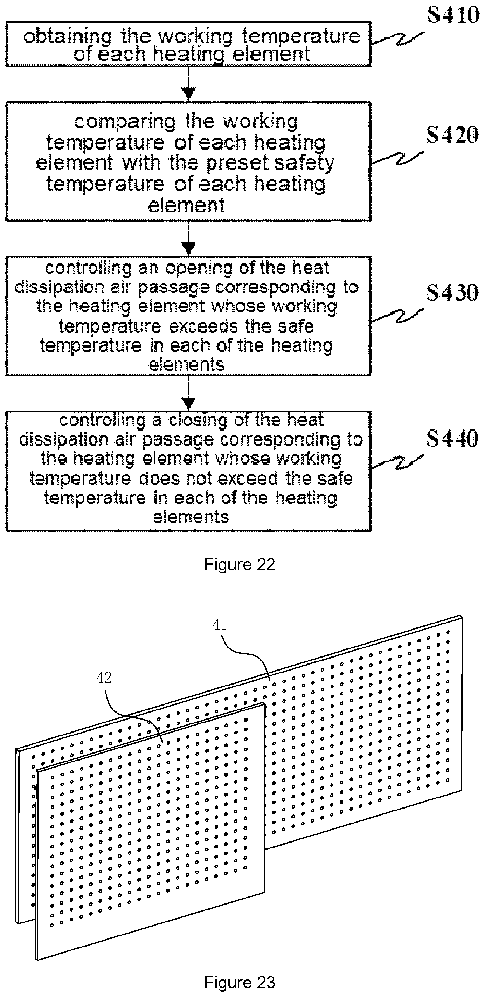

Please refer to FIG. 22. Based on the heat dissipation system of the energy station, the disclosure further provides a control method of a heat dissipation of the energy station. The control method of the heat dissipation of the energy station includes:
S410: obtaining the working temperature of each heating element 102;
S420: comparing the working temperature of each heating element 102 with a preset safety temperature of each heating element 102;
S430: controlling an opening of a heat dissipation air passage corresponding to the heating element 102 whose working temperature exceeds the safe temperature in each of the heating elements 102;
S440: controlling a closing of the heat dissipation air passage corresponding to the heating element 102 whose working temperature does not exceed the safe temperature in each of the heating elements 102;

In an embodiment, a control strategy of air conditioning device 60 is as follows: calculating total heat dissipation demands of all the heating elements 102 according to the working temperature of each heating element 102 and the preset safety temperature of each heating element 102, which means a target heat dissipation power; determining whether the heat dissipation demand is greater than a cooling capacity of the air conditioning device 60, which means a cooling power. When a heat dissipation demand is greater than a cooling capacity, each heating element 102 is dissipated according to a preset priority order from high to low. For example, the heat dissipation air passage corresponding to each heat element 102 is controlled sequentially to open according to the priority from high to low, and a preset time is set in opening operations between the two adjacent heat dissipation air passage.

In an embodiment, an order of the heat dissipation priority may be sorted according to an importance of the modules, the priority order is preset in the control system, which means that the most important modules have a highest priority level. In this mode, when the heat dissipation demand is greater than the cooling capacity of the air conditioning device 60, the PCS module 110 may control the air conditioning device 60 to dissipate heat according to the priority order.

In an embodiment, the order of heat dissipation priority may be sorted according to a temperature corresponding to each module, which means that the plurality of sensors will monitor temperature parameters of the corresponding modules, and the temperature parameters are uploaded to the PCS module 110 through the collecting module. The PCS module 110 will perform priority sorting on the received temperature parameters, which means sorting them from high to low or from low to high according to the temperature of the modules. The PCS module 110 will control each module of the air conditioning device 60 to dissipate heat orderly according to the priority order.

It should be noted that the above temperature parameters may be real-time temperature parameters or temperature parameters in a certain period of time. The temperature of the module may be a direct temperature and a relative temperature. The direct temperature refers to temperature parameter that the sensor directly collects, for example, a temperature of module 1 directly collected by the sensor is 50 °C, a temperature of module 2 is 60 °C, and a temperature of module 3 is 55 °C. The heat dissipation priority order obtained according to the direct temperature is module 2 > module 3 > module 1.

The relative temperature refers to a difference between the temperature parameters actually detected by each module and an upper temperature limit set by each module in an application. For example, the upper temperature limit set by the module 1 in the application is 60 °C, and the temperature of module 1 actually collected is 50 °C, then the relative temperature is 10 °C. The upper temperature limit set by the module 2 in the application is 65 °C, the temperature of the module 2 actually collected is 60 °C, and the relative temperature is 5 °C. The upper temperature limit set by the module 3 r in the application is 58 °C, the temperature of the module actually collected is 55 °C, and the relative temperature is 3 °C. In this mode, according to the relative temperature from low to high, the order of priority is module 3 > module 2 > module 1. The order of the priority of the relative temperature can more intuitively reflect an urgency of the heat dissipation needs of each module, and can also improve the heat dissipation effect to a certain extent. In an embodiment, the order of heat dissipation priorities may be switched based on the commands input by a management at a control end.

From the above, the heat dissipation system of the energy station of the disclosure can selectively dissipate heat to different areas according to the actual heat dissipation demand of different modules, which reduces an energy consumption of the heat dissipation system, and improves a power utilization rate of the energy station.

FIG. 23 shows a kind of a fixed tool wall and a movable tool wall. It may be understood that, the fixed tool wall 41 may be mounted on an inner wall of any side of the energy station, such as left inner side wall, right inner side wall, front inner side wall or rear inner side wall. The movable tool wall 42 and the fixed tool wall 41 are correspondingly arranged, and when movable tool wall 42 is parallel to fixed tool wall 41, both only occupy a smaller area in the carriage, so as to improve a space utilization. An area of the movable tool wall 42 may be smaller than an area of the fixed tool wall 41 for example, so that all areas of the fixed tool wall 41 have a chance to be exposed, for example, the area of the movable tool wall 42 may be less than 1/2 of the area of the fixed tool wall 41.

Please refer to FIG. 24 through FIG. 28. The embodiment provides the energy station with a sliding movable tool wall 42, which includes the carriage, the fixed tool wall 41 and the movable tool wall 42 of the energy station 100.

The carriage of the energy station 100 may adopt a trailer-type carriage or an integrated carriage. The fixed tool wall 41 is located on the inner wall of at least one side of the carriage. Considering that a surface area of the side wall of the carriage is larger, in an embodiment, the fixed tool wall 41 is arranged on the side wall of the carriage.

The movable tool wall 42 is located in the carriage, and the movable tool wall 42 is movably arranged relative to the fixed tool wall 41. The movable tool wall 42 has at least one state parallel to the fixed tool wall 41, and when the movable tool wall 42 is parallel to the fixed tool wall 41, at least part of the fixed tool wall 41 is shaded by the movable tool wall 42.

The movable tool wall 42 is configured to be capable of changing a position or size of the shaded area of the fixed tool wall 41 in the movement process. The fixed tool wall 41 and the movable tool wall 42 are respectively provided with a mounting part for mounting a hanger.

In an embodiment, for example, the mounting part may be a plurality of hanging holes arranged in an array, and the hanger may be selectively mounted in some hanging holes according to a shape and size of the garden tool. In some other embodiments, the mounting part may also be a T-shaped groove, and the T-shaped groove may be cross-distributed along a horizontal direction and a vertical direction. The hanger is mounted in the T-shaped groove, and can slide along the T-shaped groove to adapt to hanging point demands of different garden tools.

The disclosure arranges the movable tool wall 42 in front of the fixed tool wall 41, which increases a mounting area in a limited space, and simultaneously the movable tool wall 42 can change a shaded area of the fixed tool wall 41, so that tools on the fixed tool wall 41 can be smoothly picked up and placed, and an internal space utilization rate of the energy station is improved.

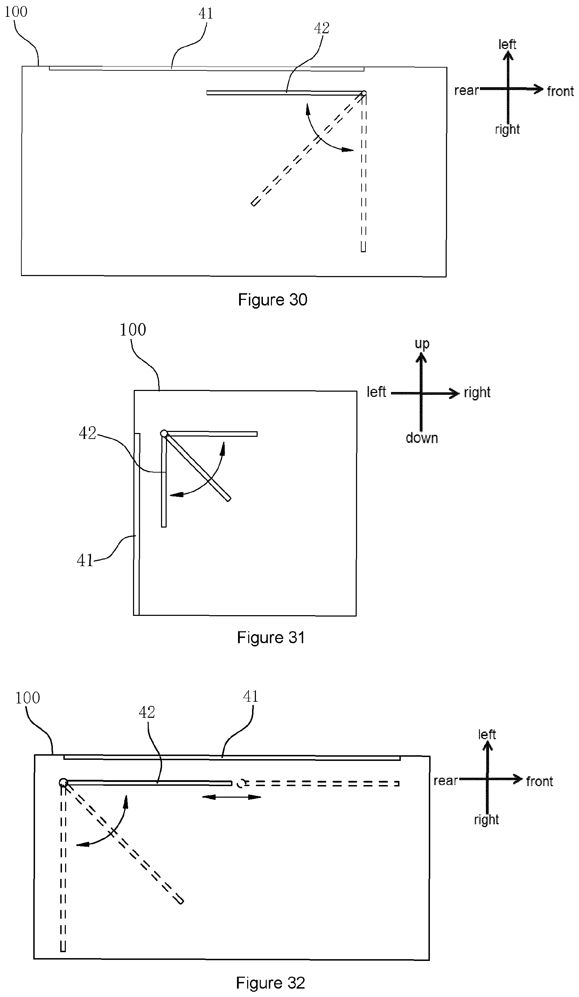

Please refer to FIG. 24 through FIG. 26. The figure shows three horizontally sliding movable tool walls 42. In an embodiment, FIG. 30 shows a single sliding movable tool wall 42, in which a width of the movable tool wall 42 is less than or equal to half of a width of the fixed tool wall 41, so that all areas on the fixed tool wall 41 have a chance to be exposed. FIG. 31 shows a double-sliding movable tool wall 42, in which the two movable tool walls 42 may completely shade the fixed tool wall 41 and can provide a larger mounting area. In an embodiment, the movable tool wall 42 closer to the fixed tool wall 41 is only used as a temporary mount, so as to avoid an interference between the garden tool and the movable tool wall 42. FIG. 32 shows a pull-out movable tool wall 42. In this embodiment, the width of the movable tool wall 42 is relatively close to the width of the fixed tool wall 41, so a rear carriage door of the carriage needs to be opened, so that the fixed tool wall 41 can be completely exposed, and this mode can provide a larger mounting area.

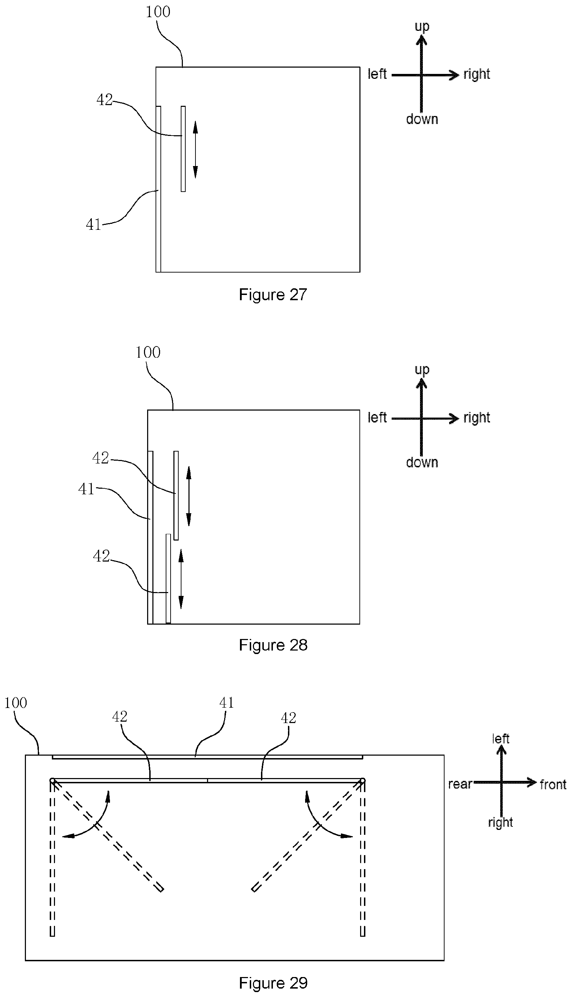

Please refer to FIG. 27 through FIG. 28. The figure shows two vertically sliding movable tool walls 42. In an embodiment, FIG. 27 shows a single sliding movable tool wall 42. In this embodiment, in order to keep the movable tool wall 42 at a certain height, a corresponding supporting structure is required, such as arranging an air supporting rod, or the movable tool wall 42 is arranged as an electric lifting structure, such as adopting a vertically arranged lead screw to drive the movable tool wall 42 to lift. In this embodiment, a height of the movable tool wall 42 is less than or equal to half of a height of the fixed tool wall 41, so that all areas on the fixed tool wall 41 have the chance to be exposed. FIG. 28 shows a double-sliding movable tool wall 42, in which the two movable tool walls 42 may completely shade the fixed tool wall 41 and can provide the larger mounting area. In an embodiment, the movable tool wall 42 closer to the fixed tool wall 41 is only used as the temporary mount, so as to avoid the interference between the garden tool and the movable tool wall 42.

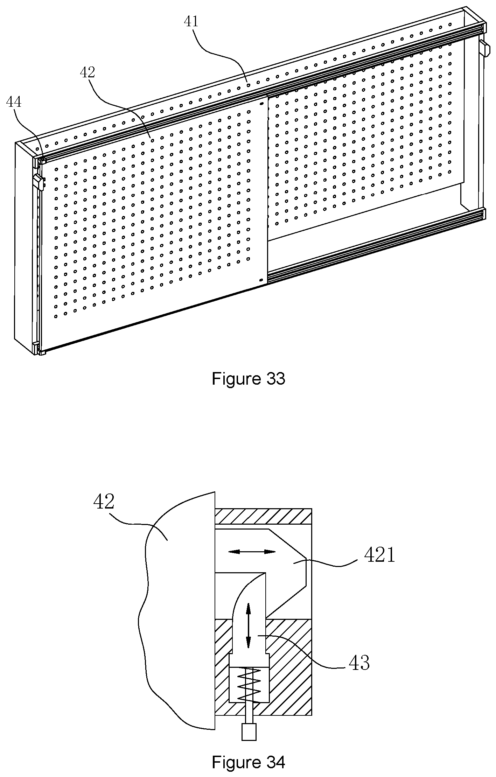

In an embodiment of the disclosure, a first locking mechanism is arranged between the movable tool wall 42 and the carriage, and the first locking mechanism is configured to that when the movable tool wall 42 moves to a first preset position relative to the fixed tool wall 41, the first locking mechanism can keep the movable tool wall 42 at the first preset position and can release the movable tool wall 42 from the first preset position. FIG. 34 provides a specific form of a locking mechanism. It may be understood that, the locking mechanism in FIG. 34 may not only be applied to the first locking mechanism but may also be applied to the following second locking mechanism. The locking structure includes a locking hook 421 fixed with the movable tool wall 42, and a deadbolt 43 that is mounted at an end of a path of the movable tool wall 42. When the movable tool wall 42 arrives at the end of the path, the locking hook 421 can push and open the deadbolt 43 and hook on a back of the deadbolt 43, which realizes a fixing of the movable tool wall 42. When it is necessary to release the movable tool wall 42, the deadbolt 43 only needs to be pulled away from the locking hook 421.

Please refer to FIG. 29 through FIG. 33. The embodiment provides the energy station with a flipping movable tool wall 42, which includes the carriage, the fixed tool wall 41 and the movable tool wall 42 of the energy station 100.

The carriage of the energy station 100 for example may be the trailer-type carriage or the integrated carriage. The fixed tool wall 41 is located on the inner wall of at least one side of the carriage. Considering that the surface area of the side wall of the carriage is larger, in an embodiment, the fixed tool wall 41 is arranged on the side wall of the carriage.

The movable tool wall 42 is located in the carriage, and the movable tool wall 42 is movably arranged relative to the fixed tool wall 41. The movable tool wall 42 has at least one state parallel to the fixed tool wall 41, and when the movable tool wall 42 is parallel to the fixed tool wall 41, at least part of the fixed tool wall 41 is shaded by the movable tool wall 42.

The movable tool wall 42 is configured to exposed the shaded area of the fixed tool wall 41 in the movement process. The fixed tool wall 41 and the movable tool wall 42 are respectively provided with the mounting part for mounting the hanger.

In an embodiment, for example, the mounting part may be the plurality of hanging holes arranged in an array, and the hanger may be selectively mounted in some hanging holes according to the shape and size of the garden tool. In some other embodiments, the mounting part may also be the T-shaped groove, and the T-shaped groove may be cross-distributed along the horizontal direction and the vertical direction. The hanger is mounted in the T-shaped groove, and can slide along the T-shaped groove to adapt to hanging point demands of different garden tools.

Please refer to FIG. 29 through FIG. 30. Two movable tool walls 42 that are flipped along a vertical axis are shown in the figure. FIG. 29 shows a movable tool wall 42 with a double door type. In this embodiment, when the two movable tool walls 42 are closed to each other, the fixed tool wall 41 can be completely shaded, the movable tool wall 42 provides a larger mounting area, and because of the open design, the garden tools mounted with the two movable tool walls 42 do not interfere with a movement of the movable tool wall 42. FIG. 30 shows a single-opening movable tool wall 42. In this embodiment, a flipping axis of the movable tool wall 42 may be set at two ends or a middle of the fixed tool wall 41 according to an actual space layout in the carriage, and the setting is more flexible.

Please refer to FIG. 31. The figure shows the movable tool wall 42 that is flipped along a horizontal axis. In this embodiment, in order to keep the movable tool wall 42 at a certain height, a corresponding supporting device, such as an air supporting rod, may be arranged between the movable tool wall 42 and the carriage, for example.

Please refer to FIG. 32 and FIG. 33. The movable tool wall 42 capable of both sliding and flipping is shown in the figure. The carriage is provided with a sliding base, the sliding base is slidably arranged along a direction parallel to the fixed tool wall, the movable tool wall 42 is rotatably connected with the sliding base, and a rotating shaft is parallel to the fixed tool wall 41. In this embodiment, a position adjustment of the movable tool wall 42 is more flexible, and the movable tool wall 42 may be adjusted to an idle position and started according to a real-time use state of a carriage space.

Further, a second locking mechanism is arranged between the movable tool wall 42 and the sliding base, and the second locking mechanism is configured to that when the movable tool wall 42 moves to a second preset position, the second locking mechanism can keep the movable tool wall 42 at the second preset position and can release the movable tool wall 42 from the second preset position. FIG. 34 shows a specific form of a locking mechanism, a structure and a principle of which may be seen in the above description of the first locking mechanism.

It can be seen from the above that the disclosure arranges the movable tool wall 42 in front of the fixed tool wall 41, which increases the mounting area in a limited space, and simultaneously the movable tool wall 42 can change the shaded area of the fixed tool wall 41, so that tools on the fixed tool wall 41 can be smoothly picked up and placed, and the internal space utilization rate of the energy station is improved.

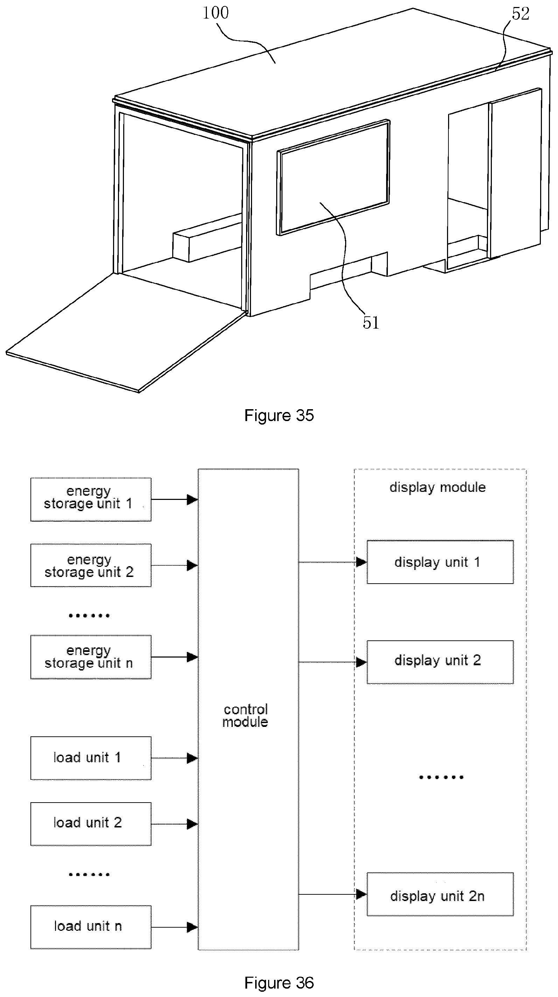

Please refer to FIG. 35. A carriage structure of the energy station 100 is shown in the figure. It should be noted that the energy station of the disclosure is used as an energy hub of the garden tool, and facilities such as necessary energy storage units and charging cabinets are arranged in the carriage, and these facilities are not shown in the figure.

Please refer to FIG. 35 and FIG. 36. The energy station 100 includes the carriage, an energy storage unit, a load unit, a control module and a display module.

Please refer to FIG. 35. For example, the carriage may be the trailer-type carriage or the integrated carriage, the side wall or tail of the carriage is provided with the carriage door that can be opened and closed, which is convenient for the operator to enter and exit, the energy storage unit. The load unit and the control module are mounted in the carriage, and the display module is mounted on the outside of the carriage.

Please refer to FIG. 36. For example, the energy storage unit may be the backup power supply, and is used for storing electric energy. It is understandable that the electric energy of the energy storage unit may be obtained from an external charging pile, and the photovoltaic assembly may also be arranged on the carriage, and the electric energy may be obtained from the photovoltaic assembly. The load unit is used for charging an external device. In an embodiment, the load unit is the charging cabinet, and the charging cabinet may charge the battery pack of garden tools. The control module is electrically connected with the energy storage unit and the load unit. The control module is used for controlling a charging and discharging state of the energy storage unit and the load unit, obtains real-time working state information from the energy storage unit and the load unit, integrate the information and send it to the display module for display. The display module is electrically connected with the control module, which is used to display a working state of the energy storage unit and/or load unit.

The disclosure uses the display module to display the working state of each module of the energy station in real time, so that the user can quickly obtain the working state information of each module from outside the energy station, so as to improve the work efficiency. The user does not need to repeatedly enter and exit the carriage to confirm the information, and a use experience is improved.

Please refer to FIG. 36. The display module includes a plurality of display units, and each display unit is respectively used for displaying different working states of the energy storage unit and the load unit. Understandably, the plurality of display units may be, for example, a plurality of independent displays, or a plurality of display areas separated from a single display screen.

In an embodiment, the display screen is used as a visualization element. When the plurality of the display areas is separated on a display screen, each display area is configured to display the working state of the corresponding device. For example, according to an actual distribution of each device in the energy station, a spatial distribution background map may be generated, and an area corresponding to each device in a background map may use different colors to represent the different working states of each device, or operating parameters of each device may be directly displayed. In other embodiments, an operating state of each device may also be displayed in a form of a list.

In an embodiment, the display screen 51 includes the plurality of display areas, and each display area respectively displays different working states of the energy storage unit and the load unit.

In an embodiment, the display module includes an in-vehicle display module and an out-vehicle display module. In an embodiment, the in-vehicle display module is arranged inside the carriage, and the out-vehicle display module is arranged outside of the carriage. In this embodiment, a staff inside the carriage nay obtain the working state information of each module through the in-vehicle display module.

Please refer to FIG. 36. The display module is mounted on an outer wall of the carriage. Taking into account waterproof, dustproof and other factors, for example, a protective cover may be arranged on the outer wall of the carriage, the display module may be mounted in the protective cover, and the protective cover may be set to a door structure that can be opened or closed, or the protective cover may be set as a transparent material.

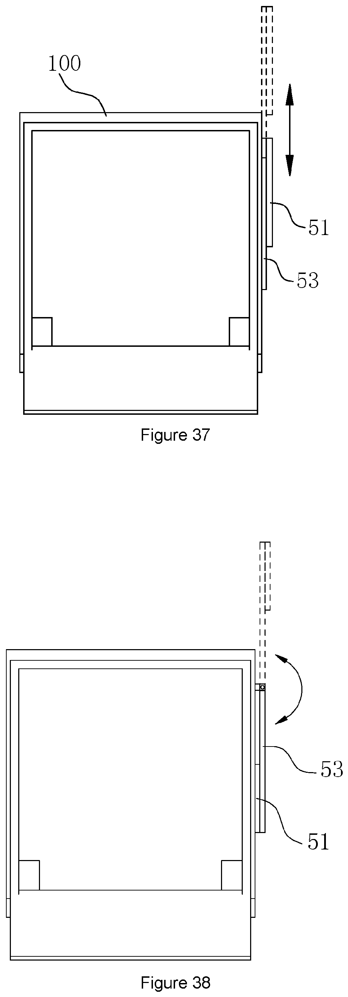

Please refer to FIG. 37 and FIG. 38. In an embodiment of the disclosure, the outer wall of the carriage is provided with a lifting bracket 53, a driving element for driving the lifting bracket 53 to be lifted up and down, and the display module is mounted on the lifting bracket 53. It is understandable that the lifting bracket 53 can lift the display screen 51 to facilitate an observation of the staff at a distance, and the lifting bracket 53 may be set to various motion modes according to actual needs, for example, the lifting bracket 53 may be set to a translation type, a horizontal flipping type or a vertical flipping type. For example, in one of the embodiments, the lifting bracket 53 may maintain a fixed state and translate along the vertical direction, so that the display screen 51 is always oriented in a same direction. In another embodiment, the lifting bracket 53 may be flipped along the horizontal axis, and when the lifting bracket 53 is flipped to a vertical upward state, the display screen 51 can be lifted above the carriage. In another embodiment, the lifting bracket 53 may be flipped along the vertical axis so that it can be oriented in different directions. The embodiment can be used in conjunction with the vertical translation or horizontal flipping type to lift the display screen 51 and at the same time enable the display screen 51 to face different directions.

Please refer to FIG. 37. In an embodiment of the disclosure, the lifting bracket 53 is slidably connected with the outer wall of the carriage along the vertical direction. In an embodiment, the outer wall of the carriage may be provided with a guiding groove for example, and the lifting bracket 53 is slidably arranged in the guiding groove. Then a hydraulic cylinder or lead screw mechanism is used to drive a movement of the lifting bracket 53 to realize a lifting or lowering operation.

Please refer to FIG. 38. In another embodiment of the disclosure, the lifting bracket 53 is rotatably connected with the outer wall of the carriage along the horizontal axis. In an embodiment, the lifting bracket 53 is configured to be capable of being flipped between the following two stations: station 1, in which the lifting bracket 53 hangs downward on the outer wall of the carriage in the vertical direction; and station 2, in which the lifting bracket 53 protrudes upward along the vertical direction from an upper end of the carriage. The display module is configured such that when the lifting bracket 53 is in the station 1, the display module is located between the outer wall of the carriage and the lifting bracket 53. In this embodiment, when the lifting bracket 53 is at the station 1, the display screen 51 is covered by the lifting bracket 53, and the lifting bracket can play a role of protecting the display screen 51. Simultaneously, a corresponding sealing structure may be arranged between the lifting bracket 53 and the outer wall of the carriage, and functions such as waterproof, dustproof may be realized.

It may be seen from the above, the disclosure uses the display module to display the working state of each module of the energy station in real time, so that the user can quickly obtain the working state information of each module from outside the energy station, so as to improve the work efficiency. The user does not need to repeatedly enter and exit the carriage to confirm the information, and a use experience is improved.

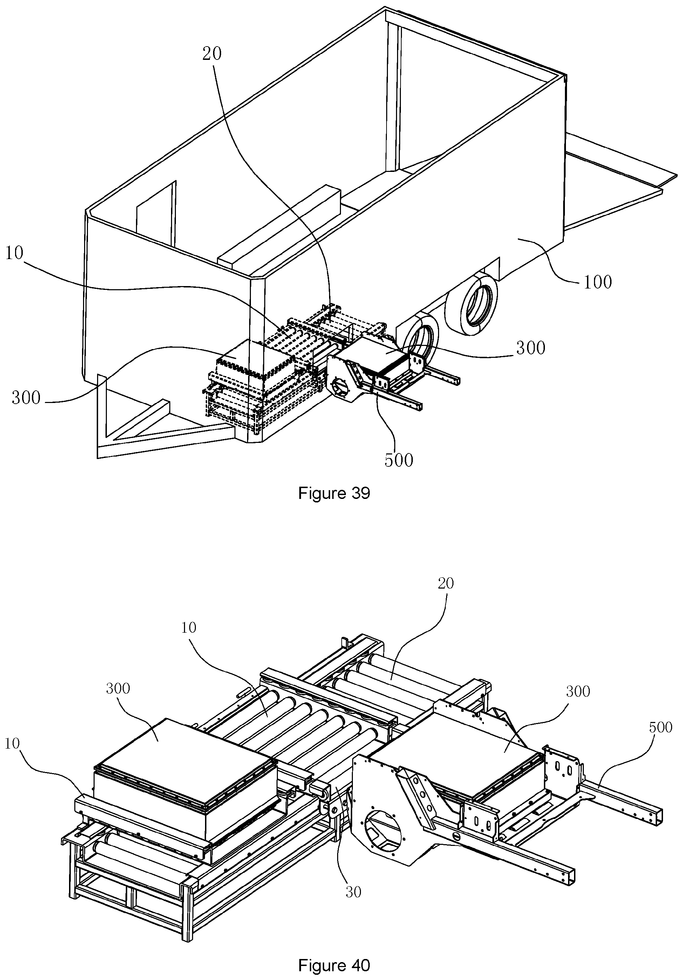

FIG. 39 shows a schematic diagram of a battery swapping system for a garden non-road electric vehicle. The garden non-road electric vehicle in the figure only shows a local structure of a vehicle frame, and a structure of the rest of the garden non-road electric vehicle is not a focus of a protection claimed in the disclosure, so it is omitted. It may be understood that the garden non-road electric vehicle may be a mower, a snow thrower, a sweeper and the like for example.

Please refer to FIG. 39 through FIG. 45. The disclosure provides the battery swapping system, which includes the garden non-road electric vehicle and the energy station 100.

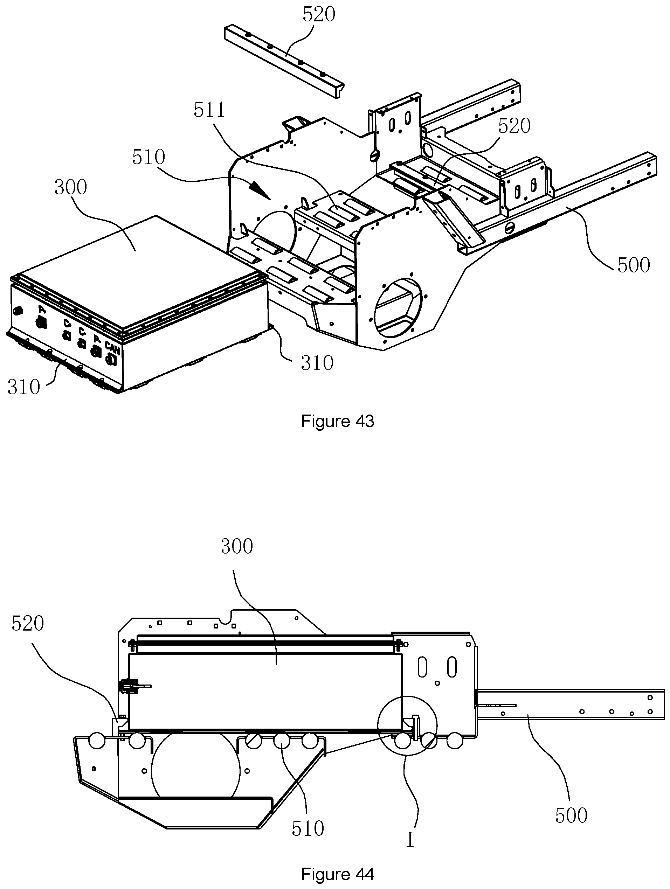

Please refer to FIG. 43 through FIG. 44. The garden non-road electric vehicle includes a vehicle body 500, a battery pack compartment 510 and the battery pack 300. The battery pack compartment 510 is mounted in the vehicle body 500, the battery pack 300 is detachably connected with the battery pack compartment 510, and the battery pack compartment 510 is configured to enable the battery pack 300 to move in or out of the battery pack compartment 510 in the horizontal direction. In an embodiment, for example, the battery pack 510 may be arranged at a tail part of the garden non-road electric vehicle, and the battery pack 300 may be moved out to a rear side of the garden non-road electric vehicle. It may be understood that a position of the battery pack compartment 510 and a direction of the battery pack 300 are not only one, for example, the battery pack compartment 510 may also be arranged in a middle or a front side of the garden non-road electric vehicle according to a specific style of the garden non-road electric vehicle, and for example, the battery pack 300 may also be moved forward or to both sides out of the battery pack compartment 510.

Please refer to FIG. 43. A bottom of the battery pack compartment 510 is provided with a guiding unit for guiding the battery pack 300 to move along the horizontal direction. In an embodiment, the guiding unit includes a roller 511 rotatably arranged at the bottom of the battery pack compartment 510, and a top surface of the roller 511 protrudes out of a bottom wall of the battery pack compartment 510. It is understandable that a specific form of the guiding unit is not only one, for example, in some other embodiments, the guiding unit may also be a sliding rail, and a bottom of the battery pack 300 may be provided with a sliding block that matches the sliding rail.

Please refer to FIG. 43 and FIG. 44. In an embodiment, a positioning unit is arranged between the battery pack 300 and the battery pack compartment 510. The positioning unit is configured such that when the battery pack 300 is located in the battery pack compartment 510, the positioning unit can keep the battery pack 300 in the battery pack compartment 510, and when the battery pack 300 needs to be removed from the battery pack compartment 510, the positioning unit can release the battery pack 300 from the battery pack compartment 510. The positioning unit may include a protruding bar 310 arranged on a side wall of the battery pack 300, and an edge bar 520 abutted against a top surface of the protruding bar 310 in the battery pack compartment 510, and the edge bar 520 is fixedly connected or detachably connected with the battery pack compartment 510. In an embodiment, there are two edge bars 520 and are arranged on a front side and a rear side of a moving direction of the battery pack 300 respectively. In an embodiment, one edge bar 520 may be fixedly connected with the battery pack compartment 510, this edge bar 520 is located at a front side of the battery pack 300 when it moves into the battery pack compartment 510. When the battery pack 300 slides in the battery pack compartment 510, the protruding bar 310 of the front side of the battery pack 300 can be inserted and arranged below the edge bar 520. The other edge bar 520 is detachably connected with the battery pack compartment 510. After the battery pack 300 is moved into position, the edge bar 520 is pressed onto the protruding bar 310 on an outside of the battery pack 300. When the battery pack 300 needs to be replaced, the edge bar 520 may be removed.

Please refer to FIG. 43 and FIG. 44. In an embodiment, a top surface edge of the protruding bar 310 and a bottom edge of the edge bar 520 are respectively provided with an inclined wedge surface. In a process of the battery pack 300 moving into the battery pack compartment 510, the wedge surface can generate a downward compressing force on the battery pack 300, which avoids a shaking of the battery pack 300, and improves a stability. Since the battery pack 300 is pushed into the battery pack compartment 510 of the vehicle frame during a battery swapping, an inner side of the battery pack compartment 510 cannot be fixed by locking screws or other forms. The disclosure realizes a fixing of the battery pack 300 on the inner side. An essence of the battery swapping is a series of actions that need to be completed quickly. The quicklymounted edge bar 520 not only solves a problem of fixing the inner side of the battery pack compartment 510, but also a fixing method of the entire battery pack 300 can be completed simply and quickly.

When the battery pack 300 is pushed into the battery pack compartment 510 of the vehicle frame during the battery swapping, an end of the battery pack 300 that is located at an inner side of the battery pack compartment 510 cannot be fixed since there are other structure components and covering components above the battery pack compartment 510 of the vehicle. The disclosure solves this problem. When the battery pack 300 is pushed into the corresponding position, the protruding bar 310 on the battery pack 300 is just embedded in the edge bar 520 that is pre-mounted on the battery pack compartment 510 of the vehicle frame. Once embedded, the end of the battery pack 300 at the inner side cannot be moved. Then another end of the battery pack 300 at an outer side is just located at a tail part of the battery pack compartment 510 of the vehicle frame, pressed with another edge bar 520, and is fastened to the vehicle frame together with the protruding bar 310 by locking screws to complete a quick fixing.

It is understandable that, a specific form of the positioning unit is not limited to the above-mentioned embodiment. For example, the positioning unit may also be an elastic deadbolt arranged on the inner wall of the battery pack compartment 510. The battery pack 300 may be provided with a clamping groove matched with the deadbolt for example. When the battery pack 300 moves in place, the deadbolt can automatically pop into the clamping groove to prevent the battery pack 300 from moving, and when the battery pack 300 needs to be replaced, the deadbolt can be pulled out from the clamping groove by manual or electric mode.

Please refer to FIG. 39. The energy station 100 includes a battery pack storage part of the carriage and a transfer unit 20. At least one side wall of the carriage is provided with a battery changing port. The battery pack storage part includes at least two storage bins 10 for storing the battery pack 300 of the garden non-road electric vehicle. The transfer unit 20 is configured to be capable of guiding an alternate movement of each storage bins 10 to the battery changing port. For example, the carriage may be the trailer-type carriage or the integrated carriage. Taking into account factors such as waterproof and dustproof, a movable door may be arranged at the battery changing port, the movable door may be opened during the battery swapping, and the movable door is closed at the rest of the time.

It is understandable that the battery pack storage part and the transfer unit 20 may be exposed in the carriage for example to facilitate manual battery replacement operations by the operator, and may also be separated in the carriage in an independent space, so that the battery pack storage part and the transfer unit 20 are arranged in this independent space, and the power tool is used to drive the transfer unit 20 and the battery pack storage part to carry out a battery swapping operation.

Please refer to FIG. 39 through FIG. 42. In an embodiment, the transfer unit 20 includes a first guiding device, and the battery pack storage part is mounted on the first guiding device. The first guiding device is configured to be capable of guiding the battery pack storage part to move in a direction parallel to a side wall of the carriage where battery changing port is located, and each storage bin 10 is sequentially arranged along a direction parallel to a movement of the battery pack storage part. It is understandable that, for example, each battery pack storage part may be moved along the horizontal direction, and may also be moved along the vertical direction. The following embodiment provides the transfer unit 20 for a movement of the horizontal direction, and when the battery pack storage part is moved along the vertical direction, the following transfer unit 20 may be replaced with a lifting structure.

Please refer to FIG. 40 through FIG. 42. In an embodiment, the first guiding device includes a first roller conveyor 21, two sides above a roller surface of the first roller conveyor 21 are provided with a first guiding wheel 22, and the first roller conveyor 21 may be a non-powered roller conveyor for example, or a powered roller conveyor. When the non-powered roller conveyor is adopted, manpower may be utilized to drive the battery pack storage part to move.

Please refer to FIG. 40 through FIG. 42. A first positioning device is arranged between the battery pack storage part and the transfer unit 20, and the first positioning device is configured such that, when any storage bin 10 moves to the battery changing port, the first positioning device can keep the battery pack storage part at this station, and can release the battery pack storage part from this station. In an embodiment, the first positioning device includes a first positioning hole arranged in the battery pack storage part and a second positioning hole arranged in the transfer unit 20. When any of the storage bins 10 move to the battery changing port, at least one first positioning hole and one second positioning hole are aligned, and the first positioning device further includes a first positioning pin 14 inserted in the first positioning hole and the second positioning hole. It is understandable that, the first positioning device can keep the battery pack storage part at a position that the battery pack storage part is facing the battery changing port, which avoids an offset of a position of the battery pack storage part during the battery swapping, and ensures that the battery pack 300 can smoothly move in or out of the battery pack compartment 510 of the garden non-road electric vehicle.

Please refer to FIG. 40 through FIG. 42. The battery pack storage part includes a tray 11, and a second guiding device is arranged on the tray 11. The second guiding device is configured to guide the battery pack 300 to move in a direction perpendicular to the side wall of the carriage where the battery changing port is located. The second guiding device includes a second roller conveyor 12 arranged on the tray 11, and a second guiding wheel 13 is arranged on both sides above a roller surface of the second roller conveyor 12. Similarly, the second roller conveyor 12 may be the non-powered roller conveyor or the powered roller conveyor. When the non-powered roller conveyor is adopted, manpower may be utilized to realize a movement of the battery pack 300.

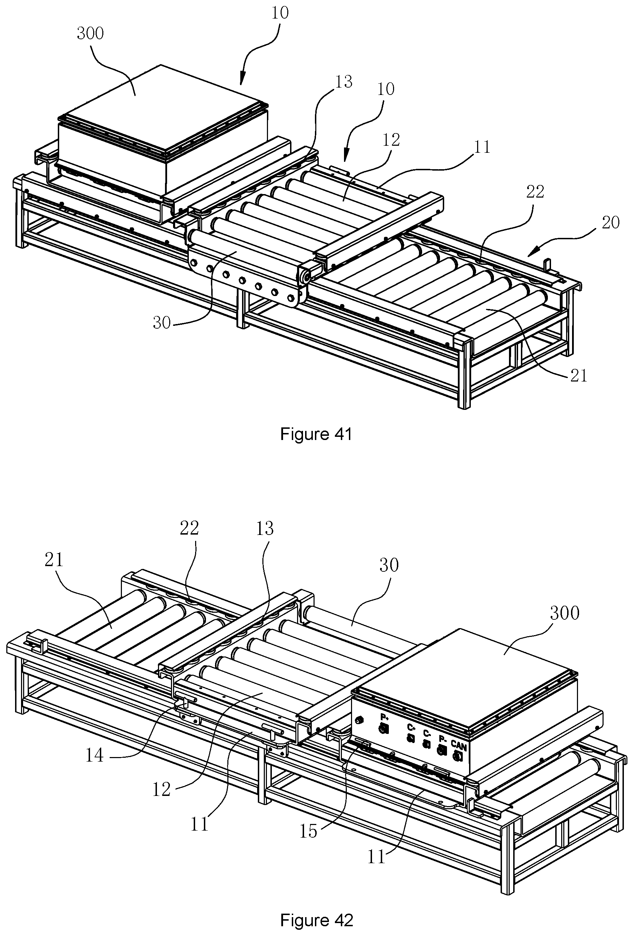

Please refer to FIG. 42. A second positioning device is arranged between the tray 11 and the battery pack 300, and the second positioning device is configured to that when the battery pack 300 is located at the storage bin 10, the second positioning device can keep the battery pack 300 at the storage bin 10 and can release the battery pack 300 from the storage bin 10. In an embodiment, the second positioning device includes a third positioning hole arranged in the battery pack 300 and a fourth positioning hole arranged in the tray 11. When the battery pack 300 is located at a designated position on the tray 11, the third positioning hole and the fourth positioning hole are aligned, and the second positioning device further includes a second positioning pin 15 inserted in the third positioning hole and the fourth positioning hole. It is understandable that the second positioning device can enable the battery pack 300 to keep relatively fixed with the battery pack storage part in a storage state, which avoids the shaking of the battery pack 300 in a process of moving the energy station, and improves the stability.

Please refer to FIG. 41. In a further embodiment, in order to avoid a scratch between the battery pack 300 and the battery changing port, a transition supporting roller 30 may be arranged at the battery changing port.

A operation method of battery swapping in this disclosure is as follows: taking the mower as an example, driving the mower to a corresponding battery changing port of the energy station, firstly sliding the battery pack 300 in the mower to a corresponding limiting position of the tray 11, then translating the tray 11, moving the fully charged battery pack 300 to the battery changing port and aligning the fully charged battery pack 300 with the battery pack compartment 510 of the mower, pushing the fully charged battery pack 300 into a position corresponding to the battery pack compartment 510 of the mower, fixing the fully charged battery pack 300 to complete the power changing operation.

It can be seen from the above that the disclosure utilizes the energy station to carry out battery swapping to the garden non-road electric vehicle, which solves a problem of battery life anxiety when the garden tool is used outdoors, realizes continuous and uninterrupted work, and improves an efficiency of a commercial operation. When the energy station 100 may be moved, the energy station 100 is a nonfixed battery swapping station, which is more fluid. Because of a battery swapping scheme, a power of the battery pack 300 may be reduced, thereby a weight of the battery pack 300 is reduced, which means that a weight of the whole vehicle is reduced, and energy is saved.

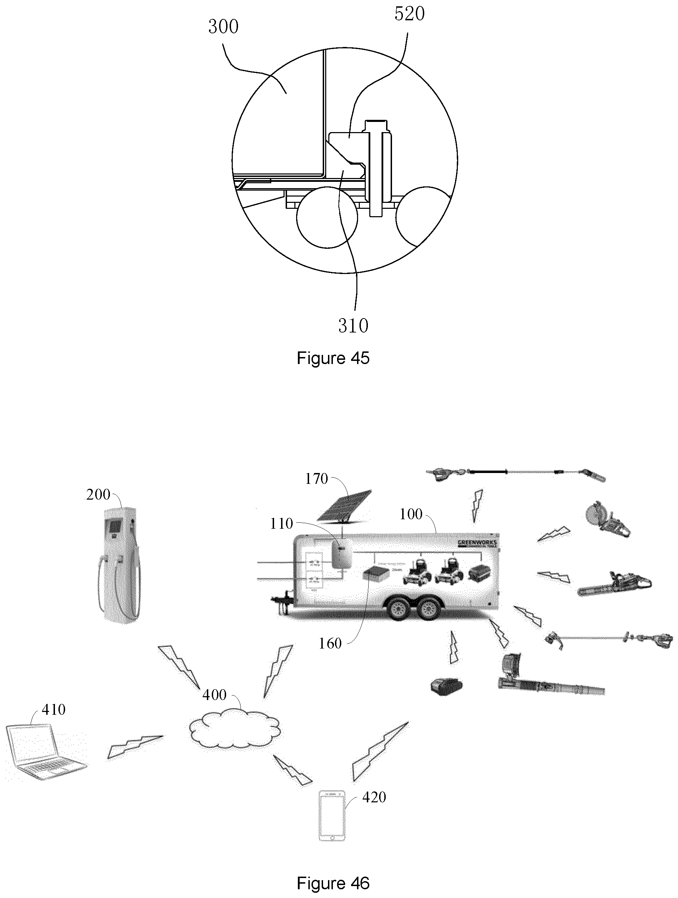

In order to solve a problem that a function of the conventional energy station is relatively simple, which lacks remote interaction with the user, and cannot meet the needs of the user for remote positioning, information acquisition, reservation order and equipment locking, the embodiment of the disclosure further provides a management system of the energy station as shown in FIG. 46 through FIG. 49.

Please refer to FIG. 46 through FIG. 49. The management system of the energy station mainly includes the energy station 100, a user terminal 420 and a cloud 400 (as a server terminal). The user may send an energy station positioning command to the cloud 400 through the user terminal 420, and the cloud 400 can push peripheral energy station information to the user terminal 420 according to the energy station positioning command of the user terminal 420. The peripheral energy station information includes parameter information of the device equipped with the peripheral energy station. The user may make an appointment to the device equipped with the peripheral energy station in the user terminal 420 according to the received peripheral energy station information, so as to generate a reservation order command. The cloud 400 can receive the reservation order command to the device equipped with the peripheral energy station from the user terminal 420, parse the reservation order command to obtain a demand list, and send the locking information to the corresponding device based on the demand list. The energy station 100 can lock the corresponding device based on the locking information, so as to avoid a situation that the user arrives at the energy station 100 and the equipment is lent out or a charging port is occupied.

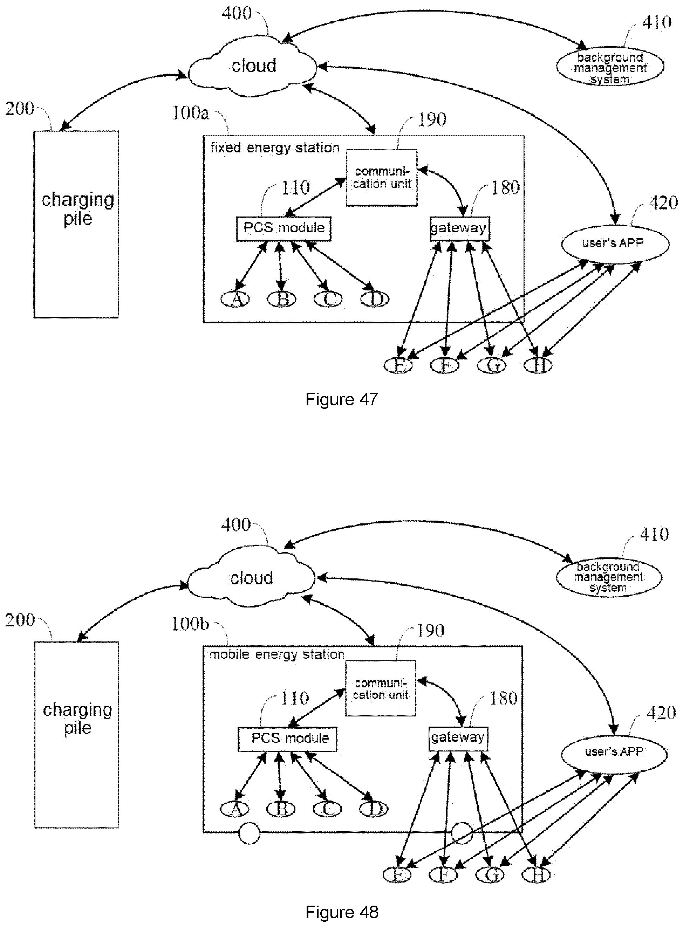

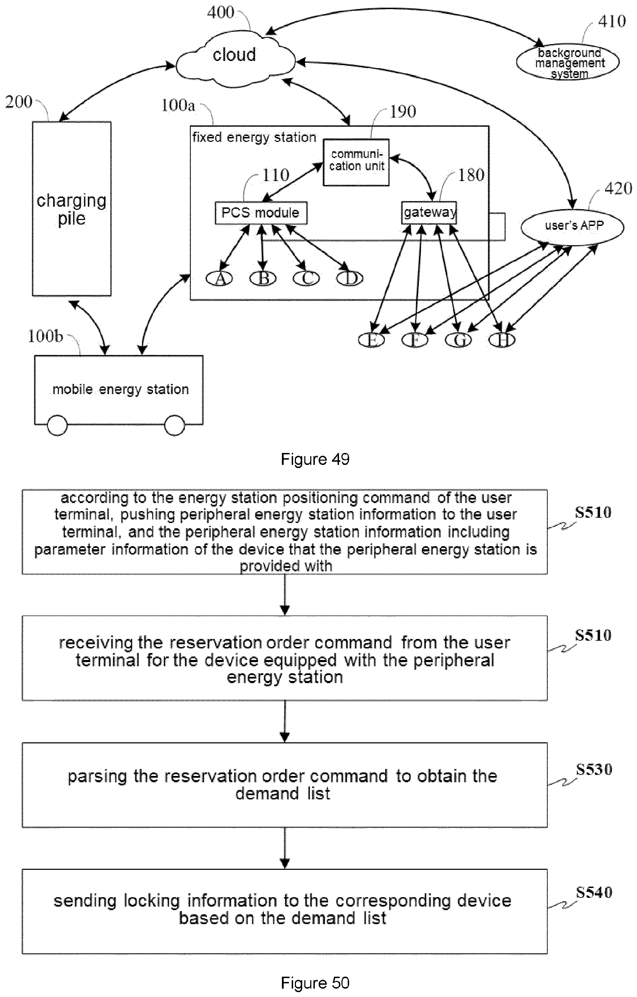

Please refer to FIG. 46 through FIG. 49. In this embodiment, the energy station 100 may not only adopt the fixed energy station 100a as shown in FIG. 47 and FIG. 49, and but also may be the mobile energy station 100b as shown in FIG. 48 and FIG. 49. The electric energy of energy station 100 comes from the charging pile 200, the photovoltaic assembly 170 (a solar photovoltaic system), the backup power supply 110 or mains power. The energy station 100 includes the PCS module 110, the communication unit 190 and a plurality of devices. In an embodiment, the PCS module 110 is used as the central control device of the energy station 100.

The device equipped with the energy station 100 includes a plurality of in-station devices (A, B, C, D in FIG. 47 through FIG. 49) and a plurality of off-station devices operating externally (E, F, G, H in FIG. 47 through FIG. 49). In an embodiment, the in-station devices include the battery pack, the garden tool, the charging device and other devices that needs to be monitored, and the off-station devices includes the battery pack, the garden tool and other devices that needs to be monitored. In an embodiment, the battery pack may be the battery pack used with the garden tools, or it may be an energy storage device specially used to store electric energy and charge the garden tools. Garden tools may be a chain saw, a blower, a blower suction machine, a vacuum cleaner, a washing machine, a snow thrower, a mower, a hedge trimmer, a snow thrower, etc., such as a zero turning radius mower. The charging device refers to a device with a charging port, which can be used to charge the battery pack or the garden tool.

For the garden tool, the device parameter information includes but is not limited to a battery power, a device model, a lending state, a fault state and other information, a remaining return time and a coordinate location, etc. For the battery pack, the device parameter information includes but is not limited to the battery power, a battery specification and model, the lending state, the fault state and the coordinate location, etc. For the charging device, the device parameter information includes but is not limited to a specification and model of the charging port, the fault state of the charging port, an occupation state of the charging port, etc.

The PCS module 110 is arranged in the energy station 100 as the central control device of the energy station 100. The PCS module 110 communicates with the in-station device in the corresponding energy station 100, which can collect device parameter information of in-station device, and upload it to the cloud 400 for storage through the communication unit 190 arranged in the energy station 100, so that the user terminal 420 may obtain parameter information of the in-station device from the cloud 400 in real time, and the PCS module 110 may further receive the locking information of the cloud 400 to realize a lock of a reserved device.

The PCS module 110 is further used for detecting whether the locked garden tool or the battery pack is taken away at a preset time, or detecting whether there is a device inserted at the preset time in the locked charging port. When detecting that the locked garden tool or the battery pack is taken away at the preset time, or when detecting the device is inserted in the locked charging port at the present time, the PCS module 110 sends a state changing information to the cloud 400, and after the cloud 400 receives the state changing information and releases the corresponding locking information. And when the PCS module 110 detects that there is a device inserted into the locked charging port within the preset time, a charging timing is carried out.

The communication unit 190 is arranged in the energy station, and the communication unit 190 may be a 4G communication unit, a 5G communication unit or a 6G communication unit for example, respectively communicates with the cloud 400, the PCS module 110 and a gateway 180, and is used for realizing a communication interaction between the cloud 400 and the PCS module 110, and between the cloud 400 and the gateway 180 in the energy station.

Please refer to FIG. 47 through FIG. 49. In this embodiment, the energy station 100 is further provided with the gateway 180. The gateway 180 is also known as an inter-network connector and a protocol converter. The gateway 180 realizes a network interconnection above a network layer and may be used for the network interconnection with different protocols for two layers. The gateway 180 is a computer system or a device for converting. Used between two systems with different communication protocols, data formats or languages, or even completely different architectures, the gateway 180 is a translator.

The device parameter information of an external working device of the energy station 100 is uploaded to the cloud 400 through the gateway 180 and the communication unit 190 in turn, and the user obtains the device parameter information of the external working device of the energy station through the user terminal 420 to monitor a situation of the external working device. In addition, the device parameter information of the external working device of the energy station 100 may further be uploaded and saved in the cloud 400 through the user terminal 420 associated with it.

Please refer to FIG. 46 through FIG. 49. In this embodiment, the user terminal 420 communicates with the cloud 400, and is used for positioning the peripheral energy station through the cloud 400, obtaining the parameter information of the device equipped with the peripheral energy station, so as to monitor a situation of the device equipped with the peripheral energy station, so that the user is convenient for renting the device such as the garden tools or the battery pack from the corresponding energy station according to the situation of the device equipped with the peripheral energy station 100, or charging the user's garden tool or battery pack.

For example, the user terminal 420 may be a mobile phone, a tablet computer or a personal computer installed with an application. The user can position the peripheral energy station through the application, obtain the device parameter information of the in-station device of the peripheral energy station, and monitor a situation of the in-station device of the peripheral energy station.

In an embodiment, the user may make a reservation (a device renting reservation or a charging reservation of charging port) of the device equipped with the peripheral energy station at the user terminal 420 according to the parameter information of the device equipped with the peripheral energy station to generate the reservation order command, and send the reservation order command to the cloud 400. The cloud 400 receives the reservation order command of the device equipped with the peripheral energy station from the user terminal 420, parses the reservation order command to obtain the demand list and/or a pick-up mode (the pick-up mode includes a self-service arrival or door-to-door delivery), and sends the locking information to the corresponding device based on the demand list. The PCS module 110 locks a reserved device according to the locking information, waits for the user to arrive at the station to pick up or charge, or is delivered by a delivery personnel, so as to avoid a situation that the reserved battery pack or the reserved garden tool has been lent by other users, or the charging port is occupied by other users, which improves the user's experience.

Door-to-door delivery may include the following three methods:
a: delivering the whole mobile energy station: directly selecting the mobile energy station 100b with autonomous delivery capabilities. During a renting period, the user may further send a positioning command of the charging pile to the cloud 400 through the user terminal 420, and the cloud 400 may obtain and push a location and usage state of the charging pile 200 around the mobile energy station 100b to the user terminal 420 according to the positioning command of the charging pile, so that the user may reasonably distribute existing electric energy according to a distance and usage state of the charging pile 200. In an embodiment, the charging pile 200 is connected with a charging circuit (such as the DC bus) in the energy station 100 to charge the in-station device that is connected with the charging circuit in the energy station, and the charging pile 200 may include a DC charging pile or an AC current charging pile.
b: delivering a carriage: directly selecting the carriage of the mobile energy station 100b that does not include a traction head. The carriage is provided with a detachable traction head, when the user selects to rent the whole carriage, the user may use his own vehicle or the traction head to pull the carriage to the nearest charging pile 200 for charging or return it after later use, and may also be pulled back by a merchant after use.
c: delivering the device: carrying out the door-to-door delivery by the delivery personnel to deliver the device reserved in the demand list to the user.

Please refer to FIG. 46 through FIG. 49. In this embodiment, the cloud 400 is used as the server terminal in the management system of the energy station, may push the peripheral energy station information to the user terminal 420 according to the energy station positioning command of the user terminal 420. The peripheral energy station information includes parameter information of the device equipped with the peripheral energy station 100. The cloud 400 may receive the reservation order command to the device equipped with the peripheral energy station 100 from the user terminal 420, parse the reservation order command to obtain the demand list and/or the pick-up mode. The cloud 400 may send the locking information to the corresponding device based on the demand list, and may also send pick-up verification information to the user terminal 420 at the same time.

It should be noted that, the cloud 400 is further capable of detecting whether the lock information has been released within the preset time. When the locking information is not released within the preset time, a releasing command is issued to the energy station 100 to release a locking state of the device. The PCS module 110 completes a releasing of the locking device according to the received releasing command, thereby avoiding the device from being locked for a long time, which affects a use of the device by other users. It also improves an efficiency of device utilization.

In this embodiment, the management system of the energy station further includes a background management system 410 (also known as a background terminal). The background management system 410 communicates with the cloud 400, and the background management system 410 is used for obtaining the parameter information of the device equipped with the peripheral energy station 100 from the cloud 400 in real time, so as to monitor the device state in the fixed energy station 100a and/or the mobile energy station 100b. The operator may also control the mobile energy station 100b through the background management system 410 to regularly maintain and replace the device in the fixed energy station 100a.

The following describes several application conditions of the management system of the energy station shown in FIG. 47 through FIG. 49.

Condition 1: please refer to FIG. 47. The user does not have a device such as the garden tool and the battery pack, and the user may position the peripheral fixed energy station 100a through the application of the user terminal 420, obtain the device parameter information of the device (including the in-station device and the external working device) equipped with the fixed energy station 100a, and rent the relevant device (the garden tool and/or the battery pack) of the fixed energy station 100a. For example, a reservation selection may be carried out, which means that the user may carry out a device selection and reservation order according to their own needs through the application of user terminal 420 in advance. The device after the reservation order is locked by the PCS module 110 of the fixed energy station 100a, and the user may pick up the device according to the verification information received after making the reservation order, so as to avoid a problem that the user arrives at the fixed energy station 100a and the device has been lent. Of course, the door-to-door delivery may also be carried out by the delivery personnel.

Condition 2: please refer to FIG. 47. The user has the device such as the garden tool and the battery pack, and the user may position the peripheral fixed energy station 100a through the application of the user terminal 420, obtain the device parameter information of the device (including the in-station device and the external working device) equipped with the fixed energy station 100a, and go to the fixed energy station 100a to rent the other half of a tool matched with the user's own device or a complete set of the tools matched with the user's own device. The reservation selection may be carried out, which means that the user may carry out the device selection and the reservation order according to their own needs through the application of user terminal 420 in advance. The device after the reservation order is locked by the fixed energy station 100a, and the user may pick up the device according to the verification information received after making the reservation order, so as to avoid the problem that the user arrives at the fixed energy station 100a and the device has been lent. Of course, the door-to-door delivery may also be carried out by the delivery personnel.

Condition 3: please refer to FIG. 47. The user may position the peripheral fixed energy station 100a through the application of the user terminal 420, place his own garden tools and/or battery pack to the fixed energy station 100a of the merchant for charging, and place an order and make the reservation in advance for the user's own charging, so as to lock the charging port matched with the garden tool and/or the battery pack. If the locked charging port does not detect a device connection within the preset time, the locked charging port will be released, and if a device connection is detected within the preset time, the charging timing will be carried out.

It should be noted that, conditions 1 to 3 described above are also applicable to the mobile energy station 100b.

Condition 4: please refer to FIG. 48. The user does not have the garden tool and/or the battery pack, or the garden tool and/ or the battery pack cannot work normally. The user may position the peripheral mobile energy station 100b through the application of the user terminal 420, obtain the device information of the device equipped with the mobile energy station 100b, make the reservation to select the device and the device will be delivered to the door by the mobile energy station 100b, such as delivering the whole mobile energy station, or delivering the carriage of the mobile energy station 100b that does not include the traction head, which may be seen from the above description in detail and will not be repeated here.

Condition 5: please refer to FIG. 49. An operation and maintenance personnel or the merchant may monitor the device state in the fixed energy station 100a through the background management system 410, and regularly maintain and replace the device in the fixed energy station 100a.

Please refer to FIG. 50. The embodiment further provides the management method of the energy station of the management system of the energy station. Please refer to FIG. 50. The management method of the energy station includes:
S510: according to the energy station positioning command of the user terminal 420, pushing peripheral energy station information to the user terminal 420, and the peripheral energy station information including parameter information of the device that the peripheral energy station 100 is provided with;
S520: receiving the reservation order command from the user terminal 420 for the device equipped with the peripheral energy station;
S530: parsing the reservation order command to obtain the demand list;
S540: sending locking information to the corresponding device based on the demand list.

The management method of the energy station in the disclosure will be described in detail in conjunction with FIG. 46 through FIG. 50 below.

First, executing S510: according to the energy station positioning command of the user terminal 420, pushing the peripheral energy station information to the user terminal 420, and the peripheral energy station information including the parameter information of the device that the peripheral energy station 100 is provided with.

Before pushing the peripheral energy station information to the user terminal 420, the cloud 400 needs to receive and store parameter information of the device that the peripheral energy station 100 is provided with, the parameter information of the device that the peripheral energy station 100 is provided with includes device parameter information uploaded by an external working device of the energy station 100 and/or the device in the energy station 100 through the wired and/or wireless means.

Please refer to FIG. 46 through FIG. 49. The device equipped with the energy station 100 includes the plurality of in-station devices (A, B, C, D in FIG. 47 through FIG. 49) and the plurality of off-station devices operating externally (E, F, G, H in FIG. 47 through FIG. 49). The in-station devices include the battery pack, the garden tool, the charging device and other devices that needs to be monitored, and the off-station devices includes the battery pack, the garden tool and other devices that needs to be monitored. The charging device refers to a device with the charging port, which can be used to charge the battery pack or the garden tools.

For an internal device of the energy station 100, the device parameter information of in-station device may be collected through the PCS module 110, and it may be uploaded to the cloud 400 for storage through the communication unit 190 arranged in the energy station 100, so that the user terminal 420 may obtain device parameter information of the in-station device from the cloud 400 in real time.

For the device parameter information of an external working device of the energy station 100, one method is to upload it to the cloud 400 through the gateway 180 and the communication unit 190, and the user obtains the device parameter information of the external working device of the energy station 100 through the user terminal 420 to monitor the situation of the external working device. And the other method is to upload and save it in the cloud 400 through the user terminal 420 associated with the external working device.

For the garden tool, the device parameter information includes but is not limited to the battery power, the device model, the lending state, the fault state and other information, and the remaining return time, etc. For the battery pack, the device parameter information includes but is not limited to the battery power, the battery specification and model, the lending state, and the fault state, etc. For the charging device, the device parameter information includes but is not limited to the specification and model of the charging port, the fault state of the charging port, the occupation state of the charging port, etc.

When the user needs to rent equipment such as the garden tool or the battery pack, or when the user needs to charge the garden tool or the battery pack, the user may send the energy station positioning command to the cloud 400 through the user terminal 420. The cloud 440 can push the peripheral energy station information to the user terminal 420 according to the energy station positioning command of the user terminal 420, and the peripheral energy station information includes the parameter information of the device that the peripheral energy station 100 is provided with.

Then, executing S520 and S 530: receiving the reservation order command from the user terminal 420 for the device equipped with the peripheral energy station 100; parsing the reservation order command to obtain the demand list.

When the user terminal 420 receives the peripheral energy station information pushed by the cloud 400, it will display the peripheral energy station information in a display interface of the application of the user terminal 420, and the user may make the reservation for the device equipped with the peripheral energy station 100 as needed, so as to generate the reservation order command (including a device renting reservation command and/or charging port reservation command), and send the reservation order command to the cloud 400. The reservation order command may include user information, reservation device information, energy station information and other information. The cloud 400 receives the reservation order command from the user terminal 420 for the device equipped with the peripheral energy station 100 and parses the reservation order command to obtain the demand list.

In some embodiments, the reservation order command may further include on pick-up mode information. The pick-up mode is divided into self-service arrival at the station or door-to-door delivery. After receiving the reservation order command, the cloud 400 may obtain the pick-up method by parsing the reservation order command. When the pick-up mode is the door-to-door delivery, you need to send a delivery command to the delivery personnel, and the delivery personnel will deliver goods to the door.

Finally, executing S540: sending the locking information to the corresponding device based on the demand list.

After the cloud 400 obtains the demand list, the locking information of the device in the demand list may be sent to the PCS module 110 of the corresponding energy station 100 based on the demand list, and after the PCS module 110 in the energy station 100 receives the locking information, the corresponding garden tool, the battery pack or the charging port are locked, so that the user is avoided from arriving at the energy station 100 and the garden tool, the battery pack is lent out or the charging port is occupied.

In an embodiment, the management method of the energy station further includes pushing the parameter information of the device that the peripheral energy station 100 is provided with to the background management system 410 in real time, so that the background management system may monitor a device state of the energy station 100. In an embodiment, the cloud 400 will push the device parameter information of the device equipped with the peripheral energy station 100 to the background management system 410 in real time, so that the background management system 410 may monitor the device in the fixed energy station 100. The background management system 410 sends the maintenance and/or replacement command to the cloud 400 according to a monitoring situation, and the cloud 400 receives the maintenance and/or replacement command of the background management system 410, and periodically sends maintenance and replacement command to the mobile energy station 100b, so as to use the mobile energy station 100b to maintain and replace the device in the fixed energy station 100a.

In an embodiment, the PCS module 110 may be used for detecting whether the locked garden tool and the battery pack are taken away at the preset time, or detecting whether there is the device inserted at the preset time in the locked charging port. When detecting that the locked garden tool and the battery pack are taken away at the preset time, or when detecting the device is inserted in the locked charging port at the preset time, the PCS module 110 sends the state changing information to the cloud 400, and after the cloud 400 receives the state changing information and releases the corresponding locking information. The cloud 400 detects whether the lock information has been released within the preset time. If the locking information is not released within the preset time, the releasing command is issued to the energy station 10 to release the locking state of the device.

It should be noted that, a division of operations of the above methods is only for a sake of description, and an implementation may be combined into one operation or some operations may be split and decomposed into multiple operations. As long as they contain a same logical relationship, they are within a scope of protection of this disclosure. Adding insignificant modifications or introducing insignificant designs to an algorithm or process without changing a core design of the algorithm and process are within the scope of protection of this disclosure.

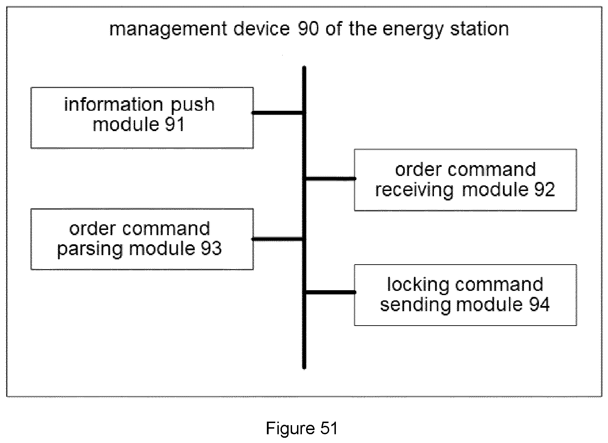

FIG. 51 is a functional module view of the management device of the energy station according to an embodiment of the disclosure. Please refer to FIG. 51. The management device 90 of the energy station includes an information push module 91, an order command receiving module 92, an order command receiving module 93 and a locking command sending module 94.

In an embodiment, the information push module 91 is used to push the peripheral energy station information to the user terminal 420 according to the energy station positioning command of the user terminal 420. The peripheral energy station information includes parameter information of the device equipped with the peripheral energy station. The order command receiving module 92 is used to receive the reservation order command to the device equipped with the peripheral energy station from the user terminal 420. The order command parsing module 93 is used to parse the reservation order command to obtain the demand list. The locking command sending module 94 is used to send the locking information to the corresponding device based on the demand list.

It should be noted that the management device of the energy station of the embodiment is a device corresponding to the management method of the energy station mentioned above, and a functional module of the management device of the energy station or the corresponding operations in the management method of the energy station respectively. The management device of the energy station of the embodiment may be implemented in conjunction with the management method of the energy station. Correspondingly, relevant technical details mentioned in the management device of the energy station of the embodiment may also be applied in the management method of the energy station.

It can be seen from the above, the management method, device and system of the energy station of the disclosure can push the peripheral energy station information to the user terminal according to the energy station positioning command of the user terminal. The peripheral energy station information includes parameter information of the device equipped with the peripheral energy station. The management method, device and system of the energy station of the disclosure can receive the reservation order command to the device equipped with the peripheral energy station from the user terminal, parse the reservation order command to obtain the demand list, and send the locking information to the corresponding device based on the demand list to realize a locking of the reserved device. Through the disclosure, the user may position the peripheral energy station, obtain the parameter information of the device equipped with the peripheral energy station, and can lock the reserved device, so as to avoid a situation that the device is lent out or the charging port is occupied when the user arrives at the energy station. The management method of the energy station, device and system of the disclosure is capable of detecting whether the lock information has been released within the preset time. When the locking information is not released within the preset time, the releasing command is issued to the energy station to release the locking state of the device, thereby preventing the device from being locked for a long time and affecting other users' use of the device, which improves the device utilization efficiency. The energy station management method, device and system of the disclosure supports self-service pick-up at the station or door-to-door delivery, expands application situations, can meet different user needs, and improves user's experience. The energy station management method, device and system of the disclosure pushes the position and usage stage of the surrounding charging pile to the user terminal according to positioning instruction of the charging pile of the user terminal, so that the user may reasonably allocate existing power according to a distance and usage of charging piles.

It is obvious to those skilled in the art that the disclosure is not limited to the details of the above-described exemplary embodiments, and that the disclosure can be implemented in other specific forms without departing from the spirit or essential characteristics of the disclosure.

The above embodiments are only used to illustrate the technical solutions of the disclosure and not to limit it. Although the disclosure has been described in detail with reference to the preferred embodiments, those of ordinary skill in the art should understand that the technical solutions of the disclosure may be modified or equivalently replaced without departing from the spirit and scope of the technical solution of the disclosure.

## Claims

1. An energy station system, comprising:
at least one input energy source,
at least one load,
at least one central control module, and
a switchable energy module, wherein the switchable energy module is configured to switch its working state based on a supply-demand relationship between the input energy source and the load;
wherein the central control module is configured to control the at least one input energy source to supply power to the at least one load.

2. The energy station system according to claim 1, wherein, the switchable energy module comprises a backup power supply, the backup power supply adjusts its charging and discharging mode based on a voltage difference between itself and a DC bus or on a signal of the central control module, so as to be configured as the input energy source or a DC load.

3. The energy station system according to claim 1, wherein, the central control module is configured to carry out an energy distribution management based on an available output power of the input energy source and a power demand of the load, and control the input energy source to supply power to the load according to an energy distribution result.

4. The energy station system according to claim 3, wherein, the central control module is configured to carry out the energy distribution management based on the available output power of the input energy source, the power demand of the load and a charging priority of the load, and control the input energy source to supply power to the load according to the energy distribution result and the charging priority of the load.

5. The energy station system according to claim 3, wherein, a charging priority of the load is adjustable.

6. The energy station system according to claim 1, wherein, the input energy source comprises a photovoltaic assembly and/or a charging pile, the central control module is configured to carry out an energy distribution management based on an available output power of each input energy source, a power of the load and a power supply priority demand of each input energy source, and control the input energy source to supply power to the load according to the energy distribution result.

7. The energy station system according to claim 1, wherein, the input energy source comprises a photovoltaic assembly and/or a charging pile, the central control module is configured to carry out an energy distribution management based on an available output power of each input energy source, a power supply priority of each input energy source, a power of the load and a charging priority of each load, and control the input energy source to supply power to the load according to the energy distribution result.

8. The energy station system according to claim 6 or claim 7, wherein, the power supply priority of each input energy source is adjustable.

9. The energy station system according to claim 1, wherein, the energy station system further comprises an output module, the load is connected with the output module, the central control module is configured to control the at least one input energy source to supply power to the at least one load through the output module, and the output module comprises a plurality of DC output modules and a plurality of AC output modules.

10. The energy station system according to claim 9, wherein, each DC output module comprises at least one DC/DC charging module and at least one PDU module, and the at least one PDU module controls at least one of the DC/DC charging modules to supply power to the at least one load.

11. The energy station system according to claim 1, wherein, the load comprises a DC load and an AC load, and the DC load comprises a backup power supply, a garden tool, an external battery pack or an electric vehicle.

12. The energy station system according to claim 1, wherein, at least part of device parameter information of an external working device and/or a device within the energy station system is uploaded to a server through wired and/or wireless manner.

13. The energy station system according to claim 1, wherein, the energy station system further comprises a background management system, and the energy station system is configured to push device parameter information associated with the energy station system to the background management system in real time, for the background management system to monitor a state of the device associated with the energy station system.

14. The energy station system according to claim 1, further comprising a heat dissipation system, wherein, the heat dissipation system comprises:
an air conditioning device;
a plurality of air passages, configured to be communicated with the air conditioning device; and
a plurality of temperature sensors,
wherein, the central controller module is configured to control an opening or closing of the air passages according to a working temperature collected by each temperature sensor.

15. The energy station system according to claim 1, further comprising a heat dissipation system, wherein, the heat dissipation system comprises:
an air conditioning device;
an air passages, communicated with the air conditioning device; and
a plurality of temperature sensors, installed at a plurality of different positions;
wherein, the central control module is configured to change a heat dissipation direction of the air conditioning device according to a working temperature collected by the temperature sensor.

16. The energy station system according to claim 1, further comprising a display module, wherein, the display module is connected with the central control module, and the display module is used to display a working state of the energy station system.

17. The energy station system according to claim 1, further comprising:
a carriage, with a battery changing port arranged on at least one side wall of the carriage;
a battery pack storage part, comprising at least two storage bins to store battery packs of a garden non-road electric vehicle; and
a transfer unit, configured to be capable of guiding an alternate movement of each storage bin to the battery changing port.

18. The energy station system according to claim 1, further comprising:
a carriage,
a fixed tool wall, located on at least one inner side wall of the carriage; and
a movable tool wall, located in the carriage, and being movable relative to the fixed tool wall; wherein,
the movable tool wall has at least one state parallel to the fixed tool wall, and at least part of the fixed tool wall is shaded by the movable tool wall when the movable tool wall is parallel to the fixed tool wall;
the movable tool wall is configured to be capable of changing a position or size of a shaded area of the fixed tool wall in a movement process;
the fixed tool wall and the movable tool wall are respectively provided with a mounting part to mount a hanger.

19. The energy station system according to claim 1, further comprising:
a carriage,
a fixed tool wall, located on at least one side inner wall of the carriage; and
a movable tool wall, located in the carriage, and being movable relative to the fixed tool wall; wherein,
the movable tool wall has at least one state parallel to the fixed tool wall, and at least part of the fixed tool wall is shaded by the movable tool wall when the movable tool wall is parallel to the fixed tool wall;
the movable tool wall is configured to be capable of exposing a shaded area of the fixed tool wall in a movement process;
the fixed tool wall and the movable tool wall are respectively provided with a mounting part to mount a hanger.

20. A control method of an energy station, comprising:
controlling at least one input energy source to supply power to at least one load;
during a process of supplying power to the load, switching a working state of a switchable energy module according to an available output power of the input energy source and a power demand of the load.

21. The control method of the energy station according to claim 20, wherein, the switchable energy module comprises a backup power supply, and in an operation of switching the working state of the switchable energy module according to the available output power of the input energy source and the power demand of the load:
the backup power supply adjusts its charging and discharging mode based on a voltage difference between itself and a DC bus or a signal of a central control module, so as to be configured as the input energy source or a DC load.

22. The control method of the energy station according to claim 20, wherein, the load further comprises a plurality of battery packs;
and controlling at least one input energy source to supply power to at least one load comprises:
carrying out an initial selection of the battery pack: taking a lowest value of battery pack voltages of all battery packs as a first reference voltage; selecting a battery pack with a battery pack voltage higher than the first reference voltage and a voltage difference between the battery pack voltage and the first reference voltage being less than a first preset threshold from all battery packs, and charging the selected battery pack; and
carrying out a selection of the battery pack during a charging process:
during the charging process, taking an average voltage of the battery pack being charged as a second reference voltage;
selecting a battery pack with a voltage difference between the battery pack voltage and the second reference voltage being greater than a second preset threshold and less than the first preset threshold from all battery packs, and charging the selected battery pack;
cyclically carrying out the selection of the battery pack during charging process until all battery packs complete a constant current charging, then charging at a constant voltage together, setting a fully charged mark, and cutting out fully charged battery packs.

23. The control method of the energy station according to claim 20, wherein, the load further comprises a plurality of battery packs;
and controlling at least one input energy source to supply power to at least one load comprises:
carrying out an initial selection of the battery pack:
taking a second-highest value of battery pack voltages of all the battery packs as a third reference voltage,
selecting a battery pack with a battery pack voltage higher than the third reference voltage and a voltage difference between the battery pack voltage and the third reference voltage being less than a third preset threshold from all battery packs, and charging the selected battery pack;
carrying out a selection of the battery pack during a charging process:
during the charging process, taking an average voltage of the battery pack being charged as a fourth reference voltage,
selecting a battery pack with a voltage difference between the battery pack voltage and the fourth reference voltage being greater than a third preset threshold and less than a fourth preset threshold from all battery packs, and charging the selected battery pack; and
cyclically carrying out a selection of the battery pack during charging process until all battery packs complete a constant current charging, setting a fully charged mark, and cutting out fully charged battery packs.

24. An energy station, comprising an energy station system, wherein the energy station system comprises:
at least one input energy source,
at least one load,
at least one central control module, and
a switchable energy module, wherein the switchable energy module is configured as the load if an output power of the input energy source is greater than a demand power of the load, and as the input energy source if the output power of the input energy source is less than the demand power of the load;
wherein the central control module is configured to control the at least one input energy source to supply power to the at least one load.
